(19) Europäisches Patentamt
European Patent Office
Office européen des brevets

(11) EP 1 240 645 B1

(12) EUROPÄISCHE PATENTSCHRIFT

(45) Veröffentlichungstag und Bekanntmachung des Hinweises auf die Patenterteilung:
**21.06.2006 Patentblatt 2006/25**

(21) Anmeldenummer: **00964223.2**

(22) Anmeldetag: **19.09.2000**

(51) Int Cl.:
***G11B 7/24*** *(2006.01)* ***C08F 246/00*** *(2006.01)*

(86) Internationale Anmeldenummer:
**PCT/EP2000/009269**

(87) Internationale Veröffentlichungsnummer:
**WO 2001/026105 (12.04.2001 Gazette 2001/15)**

# (54) VERFAHREN ZUR DIGITALEN OPTISCHEN DATENSPEICHERUNG

METHOD FOR DIGITALLY AND OPTICALLY STORING DATA

PROCEDE DE MISE EN MEMOIRE OPTIQUE NUMERIQUE DE DONNEES

(84) Benannte Vertragsstaaten:
**AT BE CH CY DE DK ES FI FR GB GR IE IT LI LU MC NL PT SE**

(30) Priorität: **01.10.1999 DE 19947579**

(43) Veröffentlichungstag der Anmeldung:
**18.09.2002 Patentblatt 2002/38**

(73) Patentinhaber: **Bayer MaterialScience AG**
**51368 Leverkusen (DE)**

(72) Erfinder:
- **BERNETH, Horst**
**51373 Leverkusen (DE)**
- **BIERINGER, Thomas**
**51519 Odenthal (DE)**
- **EICKMANS, Johannes**
**42781 Haan (DE)**
- **JACOBSEN, Wolfgang**
**51069 Köln (DE)**
- **KOSTROMINE, Serguei**
**53913 Swisttal (DE)**

(56) Entgegenhaltungen:

| | |
|---|---|
| **EP-A- 0 669 548** | **EP-A- 0 823 442** |
| **WO-A-00/54112** | **WO-A-93/03073** |
| **WO-A-97/44365** | **DE-A- 4 339 862** |
| **DE-C- 19 914 325** | **US-A- 5 079 758** |

- **DATABASE WPI Section Ch, Week 199327 Derwent Publications Ltd., London, GB; Class A89, AN 1993-216316 XP002154185 & JP 05 139042 A (NIPPON PAINT CO LTD), 8. Juni 1993 (1993-06-08)**
- **PATENT ABSTRACTS OF JAPAN vol. 007, no. 278 (P-242), 10. Dezember 1983 (1983-12-10) & JP 58 155543 A (TOKYO SHIBAURA DENKI KK), 16. September 1983 (1983-09-16)**
- **PATENT ABSTRACTS OF JAPAN vol. 012, no. 406 (P-777), 27. Oktober 1988 (1988-10-27) & JP 63 142546 A (HITACHI LTD), 14. Juni 1988 (1988-06-14)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 240 645 B1

Printed by Jouve, 75001 PARIS (FR)

## Beschreibung

Die vorliegende Erfindung betrifft ein Verfahren zum optischen Einschreiben danach auch wieder optisch auslesbarer digitaler Informationen in ein flächig ausgedehntes Speichermedium.

Es ist bereits bekannt und wird kommerziell intensiv genutzt, digitale Daten in Form von lokalen Veränderungen der Oberflächentopographie, sogenannten pits, auf Kunststoffscheiben abzulegen, um sie danach mit Hilfe eines optischen Meßsystems wieder auszulesen (EP-A 25253). Dieses Konzept bildet die Basis der heute marktbeherrschenden Technik zur Reproduktion von Audioaufzeichnungen (Audio-CD) und von Computersoftware (CD-ROM). Das Einschreiben der Information ist jedoch nicht optisch möglich. Vielmehr wird in einem aufwendigen mehrstufigen Prozeß eine Form hergestellt, die bei einem Spritzguß-Prägeprozeß die Dateninformation auf jede einzelne CD überträgt. Daher ist diese Technik nur in der Massenproduktion wirtschaftlich nutzbar.

Es ist ebenfalls bekannt, digitale Daten in Form lokaler Unterschiede des Absorptionsvermögens für sichtbares Licht in Kunststoffscheiben in der Weise abzulegen, dass sie danach mit Hilfe eines optischen Meßsystems wieder ausgelesen werden können. Dieses Meßsystem ist weitgehend ähnlich zu oder gar identisch mit dem Meßsystem zum Auslesen der oben genannten spritzgrußgeprägten Audio-CDs oder CD-ROMs. In diesem Fall besitzt die Kunststoffscheibe eine Beschichtung mit einem Farbstoff, der mit Licht geeigneter Wellenlänge in seinem Absorptionsverhalten so stark verändert werden kann, dass diese Veränderung anschließend mit Licht einer im allgemeinen geringeren Intensität abgetastet werden kann, ohne dass dabei die bisher nicht veränderten Bereiche nun ebenfalls in ihrem Absorptionsverhalten verändert werden (Y.J. Huh et al. Jpn. J. Appl. Phys. Vol 36 (1997), p. 7233 - 7238). Eine gängige CD-R ist aus mehreren Schichten aufgebaut. In das Trägermaterial aus i.a. Polycarbonat sind Trackingspuren (Pregrooves) eingeprägt, darüber befindet sich eine dünne Farbstoffschicht, gefolgt von einer aus i.a. Gold bestehenden Reflexionsschicht, die von einem Decklack geschützt wird.

Im Prinzip sind für das veränderte Absorptionsverhalten der CD-R verschiedene lichtinduzierte Prozesse verantwortlich: Der Schreiblaser wird durch das Substrat hindurch auf den Farbstoff fokussiert. Der das Licht absorbierende Farbstoff dient primär als Absorptionsquelle für die einfallenden Lichtquanten und ist in seinem Absorptionsverhalten auf die verwendeten Laserquellen optimiert. Durch die Absorption erwärmt sich der Farbstoff; er schmilzt und modifiziert dadurch seine Umgebung: In den Interfaces zwischen Farbstoff und dem Polycarbonatsubstrat und zwischen Farbstoff und Gold entstehen Blasen und andere Deformationen die für den Leselaser als Pit-ähnliche Strukturen detektiert werden.

Zum eigentlichen Signal kommen auch noch Beiträge von der Änderung des Farbstoffes an sich hinzu. Dieser ändert seine optischen Parameter durch i.a. Zersetzung, was sich auf das gelesene Signal auswirkt. Zur Zeit werden im wesentlichen drei Typen von Aufzeichnungsschichten eingesetzt:

- Metall stabilisierte Cyanin-Farbstoffe (grün)
- Phthalocyanin-Farbstoffe (golden braun)
- Azofarbstoffe (blau)

In all den genannten Fällen dient der Farbstoff lediglich als Wärmequelle, die Pit-ähnliche Deformation wird nicht im Farbstoffsystem selber erzeugt, sondern primär durch eine Modifikation der benachbarten Grenzschichten, hervorgerufen durch die Änderungen des Farbstoffes bei Lichtabsorption.

Derartige Speichermedien lassen sich nur einmal einschreiben, aber beliebig oft auslesen (write once read many: WORM Disk), weil die Intensität des Lasers zum Lesen derart reduziert wird, dass die im Farbstoff deponierte Energie nicht ausreicht, die genannten Deformationen zu induzieren. CD-R's haben zwei große Nachteile: Zum einen bestimmten die Kosten der Reflexionsschicht aus Gold entscheidend die Herstellungskosten. Goldschichten sind notwendig, um den in den CD-Spezifikationen geforderten Reflexionswerten zu genügen. Ferner verfügen Goldschichten über die benötigte chemische Inertheit (Oxidationsbeständigkeit). Der andere Nachteil liegt in der bereits im Grundsatz begrenzten Lagerstabilität. Die derzeit kommerziell verfügbaren Systeme sind stark lichtempfindlich, bei Tageslichtlagerung können sie bereits nach einigen Stunden nicht mehr beschrieben werden.

Aufgabe war es daher ein Verfahren zur Verfügung zu stellen, dass obige Nachteile reduziert bzw. ausräumt.

Es wurde nun überraschenderweise gefunden, dass man bei geeigneter Materialauswahl für das flächige Speichermedium Daten in Form von lokalen Veränderungen der Oberflächentopographie des Farbstoffes an sich mit Hilfe eines optischen Schreibsystems auf dieses Speichermedium einschreiben und danach optisch auslesen kann. Hierbei spielen die Vorgänge an den benachbarten Grenzflächen keine wesentliche Rolle, die Oberflächentopographie wird einzig durch Modifikationen im Farbstoffsystem bewirkt. Die Oberflächenmodifikation ist derart stark ausgeprägt, dass bei geeignet optimierter Ausleseoptik, z.B. in Form eines konfokalen Aufbaus, auch ohne zusätzliche Reflexionsschicht Signalverhältnisse zwischen der Messung auf einer oberflächenmodifizierten und einer nichtmodifizierten Stelle erreicht werden, die die an konventionellen CD-R's gemessenen Signalverhältnisse deutlich übertreffen. Somit könnten die neuen beschreibbaren Medien ohne zusätzliche Reflexionsschicht verwendet werden.

Sofern allerdings die in den Vorschriften (Books) der konventionellen Audio-CD's und CD-R genannten hohen

Werte für die Absolutreflexion der CD eingestellt werden müssen, ist auch bei den erfindungsgemäßen Speichermedien eine zusätzliche Reflexionsschicht erforderlich.

Das erfindungsgemäße Verfahren ermöglicht das Einschreiben digitaler Informationen z.B. auf CD-R-ähnliche Kunststoffscheiben mit ähnlichen Schreibgeschwindigkeiten und Speicherdichten wie bei der CD-R, aber mit dem Vorteil der gesicherten Langzeitstabilität, da die Lesbarkeit der eingeschriebenen Information nur durch eine äußere Beschädigung der Speicherplatte beeinträchtigt werden kann. Eine Veränderung der eingeschriebenen Strukturierung in der Oberflächentopographie ist nur durch Erwärmen dieser Schicht bis in die Nähe ihrer Glastemperatur möglich. Durch die Polymerarchitektur liegt die Glastemperatur deutlich über 100°C, vorzugsweise über 150°C, so dass durch sachgemäße Lagerung der Speicherplatte ein thermisches Löschen vermieden werden kann.

Ein weiterer Vorteil des erfindungsgemäßen Verfahrens ist der gegenüber den bisher kommerziell genutzten Verfahren deutlich verbesserte Signalhub beim optischen Auslesen der Information. Wie bereits weiter oben beschrieben, ist der Signalhub so groß, dass beispielsweise der Verwendung eines konfokalem Ausleseverfahrens auf eine zusätzliche Reflexionsschicht verzichtet werden kann.

Die Erfindung beschreibt dementsprechend ein Speicherverfahren, bei dem ein Speichermedium, bestehend aus mindestens einer Substratschicht und mindestens einer Aufzeichnungsschicht durch einen fokussierten Laserstrahl, der beispielsweise im Dauerstrich-, oder Pulsbetrieb scannend über die Probenoberfläche geführt werden kann und der je nach Schichtaufbau bei Mehrfachschichten auf die jeweilige Funktionsschicht fokussiert werden kann, zur Speicherung von digitaler binärer, oder nichtbinärer Information unterzogen werden kann. Alternativ kann auf das Scannen des Lasers verzichtet werden, falls auf eine andere Weise für eine Relativbewegung zwischen Medium und Laserspot, beispielsweise durch ein Rotieren des Mediums, gesorgt wird.

Gegenstand der Anmeldung ist daher ein Verfahren zum optischen Einschreiben optisch auslesbarer digitaler Informationen in ein flächig ausgedehntes Speichermedium dadurch gekennzeichnet, dass das Licht zum Schreiben eine Intensität zwischen 150 μW und 100 mW besitzt, auf Spots einer Ausdehnung (volle Halbwertsbreite) in einem Bereich zwischen 10 nm und 8 μm fokussiert wird, die Energiedichte eines Lichtpulses zwischen 10 $mJ/cm^2$ und 100 $J/cm^2$ liegt, wobei durch den optischen Einschreibprozess die Oberflächentopographie des Speichermediums für den optischen Ausleseprozess geeignet und ausreichend derart modifiziert wird, dass eine Vertiefung von mindestens 10 nm und eine an der ursprünglichen Oberfläche gemessene Breite in einer Richtung von weniger als 10 μm erzielt wird, und als lichtaktiver Polymerfilm Seitenkettenpolymere, gegebenenfalls Block- und/oder Propfpolymere, verwendet werden, an welche als Seitenketten Farbstoffe über einen STQ-Spacer (Formel (I)) und formanisotrope Gruppen ebenfalls über einen STQ-Spacer (Formel II) gebunden sind, wobei Formel (I) die Struktur

$$-S^1-T^1-Q^1-X^{1'}-Ar^1-\left(X^{2'}-Ar^2\right)_y-\left(X^{3'}-Ar^3\right)_z-X^4 \qquad (I)$$

aufweist mit

$-Ar^1-$ = 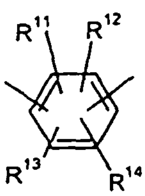 (III) oder 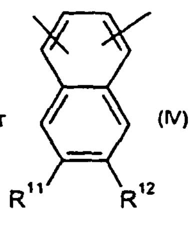 (IV) oder 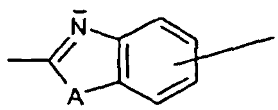 (V)

mit

$-Ar^2-$ = 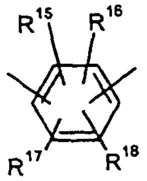 (VI) oder 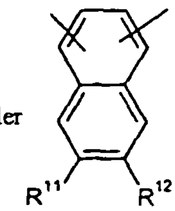 (IV) oder 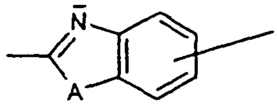 (V)

mit

$-Ar^3-$ = 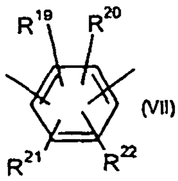 (VII) oder 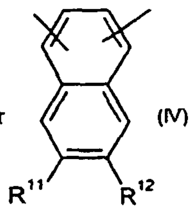 (IV) oder 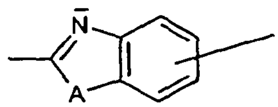 (V)

wobei

| | |
|---|---|
| y | für 1 oder 2 steht, |
| z | für 0, 1 oder 2 steht und |
| $X^{2'}$ und $Ar^2$ bzw. $X^{3'}$ und $Ar^3$ | unterschiedliche Bedeutungen haben können, wenn y bzw. z 2 bedeuten, A für O, S oder N-$C_1$- bis $C_4$-Akyl steht, |
| $Q^1$ | unabhängig voneinander für -O-, -S-, -(N-$R^5$)-, -C($R^6R^7$)$_p$, -(C=O)-, -(O-CO)-, -($NR^5$-CO)-, -($SO_2$)-, -(O-$SO_2$)-, -($NR^5$-$SO_2$-)-, -(C=$NR^8$)-, -($CNR^8$-$NR^5$)-, -O-$C_6H_5$-COO- oder einen bivalenten Rest der Formel |

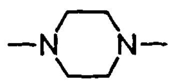

stehen,

| | |
|---|---|
| $T^1$ | unabhängig voneinander für -($CH_2$)$_p$- stehen, wobei die Kette durch O-, -$NR^9$-, oder -$OSiR^{10}{}_2O$- unterbrochen sein kann und durch Methyl substituiert sein kann, |
| $S^1$ | unabhängig voneinander für eine direkte Bindung, -O-, -S- oder -$NR^9$-stehen, |
| p | für eine ganze Zahl von 2 bis 12, vorzugsweise 2 bis 8, insbesondere 2 bis 4 steht, |
| $R^9$ | für Wasserstoff, Methyl, Ethyl oder Propyl steht, |
| $R^{10}$ | für Methyl oder Ethyl steht, |
| $R^{11}$ bis $R^{22}$ | unabhängig voneinander für Wasserstoff oder einen nichtionischen Substituenten stehen, |
| $X^4$ | bedeutet Wasserstoff, Halogen, Cyan, Nitro, $CF_3$, $CCl_3$, -COO-$C_1$- bis $C_4$-Alkyl oder $X^{4'}$-$R^4$, |
| $X^{1'}$, $X^{2'}$, $X^{3'}$ und $X^{4'}$ | für eine direkte Bindung, -O-, -S-, -(N-$R^5$)-, -C($R^6R^7$)-, -(C=O)-, -(CO-O)-, -(CO-$NR^5$)-, -($SO_2$)-, |

-($SO_2$-O)-, -($SO_2$-$NR^5$)-, oder -($CNR^8$-$NR^5$)- stehen und

$X^{2'}$ und $X^{3'}$ zusätzlich für -(C=$NR^8$)-, -(N=N)- stehen können und mindestens eine der Gruppen $X^{2'}$ oder $X^{3'}$ für -N=N- steht,

$R^4$, $R^5$, $R^6$, $R^7$ und $R^8$ unabhängig voneinander für Wasserstoff, $C_1$- bis $C_4$-Alkyl, oder $C_6$- bis $C_{10}$-Aryl stehen und

$R^4$ und $R^5$ zusätzlich unabhängig voneinander für $C_1$- bis $C_{20}$-Alkyl-(C=O)-, $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-($SO_2$)-, $C_3$- bis $C_{10}$-Cycloalkyl-($SO_2$)-, $C_2$- bis $C_{20}$-Alkenyl-($SO_2$)- oder $C_6$- bis $C_{10}$-Aryl-($SO_2$)-stehen, wobei

unter nichtionischen Substituenten sind zu verstehen Halogen, Cyano, Nitro, $C_1$- bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl-(C=O)-, $C_6$- bis $C_{10}$-Aryl-(C=O)-, $C_1$- bis $C_{20}$-Alkyl-($SO_2$)-, $C_1$- bis $C_{20}$-Alkyl-(C=O)-O-, $C_1$- bis $C_{20}$-Alkyl-(C=O)-NH-, $C_6$- bis $C_{10}$-Aryl-(C=O)-NH-, $C_1$- bis $C_{20}$-Alkyl-O-(C=O)-, $C_1$- bis $C_{20}$-Alkyl-NH-(C=O)-, $C_6$- bis $C_{10}$-Aryl-NH-(C=O)- oder ein Rest der Formel

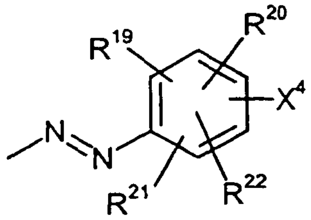

(VIII)

verstanden wird und

die Alkyl-, Cycloalkyl-, Alkenyl- und Arylreste ihrerseits durch bis zu 3 Reste aus der Reihe Halogen, Cyano, Nitro, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl substituiert sein und die Alkyl- und Alkenylreste können geradkettig oder verzweigt sein können und

unter Halogen ist Fluor, Chlor, Brom und Iod zu verstehen ist, insbesondere Fluor und Chlor

und Formel (II) durch

$$-S^1-T^1-Q^1-X^{1'}-Ar^1-\left(X^{2'}-Ar^2\right)_y-\left(X^{3'}-Ar^3\right)_z-X^4 \qquad \text{(II)}$$

beschrieben wird, wobei die obigen Substituentendefinition (Formel I) auch für Formel (II) gültig sind, mit der Ausnahme, dass keine der Gruppen $X^{2'}$ oder $X^{3'}$ -N=N- annehmen darf und $R^{11}$ bis $R^{22}$ nicht für einen Rest der Formel (VIII) stehen darf.

Als Speichermedium ist jedes ein- oder mehrschichtige Material geeignet, das unter geeigneter lokaler Bestrahlung mit Licht seine Oberflächentopographie im Bereich dieser Bestrahlung so stark ändert, dass dieser Bereich durch geeignete optische Abbildungstechniken, z.B. mit Hilfe eines konfokalen Laserscanningmikroskops im Remissionskontrastverfahren, eindeutig identifiziert werden kann. Bevorzugt seien als Speichermedium mehrschichtige Platten genannt mit einer mechanisch ausreichend stabilen Unterlage, einem Polymerfilm als lichtaktiver Schicht und einer Abdeckschicht, die den Polymerfilm während der Anwendung vor mechanischer Beschädigung schützt. Die Einschreibung kann sowohl durch die Abdeckschicht als auch durch die Grundplatte hindurch erfolgen. Bevorzugt sei die Einschreibung durch die Deckschicht genannt. Die Schicht (Deckschicht, Grundplatte), durch die eingeschrieben wird, muß für die Wellenlänge des einschreibenden Lichtes ausreichend transparent sein. Im Wellenlängenbereich von 400 nm bis 820 nm ist ein Transmissionsgrad größer als 30 %, bevorzugt ein solcher größer als 80 % und besonders bevorzugt größer als 85 %, zu erreichen. Im Wellenlängenbereich zwischen 380 nm und 400 nm ist ein Transmissionsgrad größer als 30 %, bevorzugt ein solcher größer als 50 % und besonders bevorzugt größer als 75 % zu erreichen.

Im Falle des Wegfalls der Reflexionsschicht ist ebenfalls ein mehrlagiges Speichermedium realisierbar. Die eigentlichen Speicherschichten werden in diesem Fall durch nicht lichtaktive Schichten voneinander getrennt. Wird zum Auslesen der Information eine Reflexionsschicht benötigt, so muß deren Absorption derart gewählt werden, dass im Falle eines mehrlagigen Speichermediums (Speichermedium mit mehreren beschreibbaren Speicherschichten) bei Laserbestrahlung die Intensität bei den entsprechenden Schichten noch ausreicht, um die gewünschten Modifikationen hervorzurufen.

Als Material für den lichtaktiven Polymerfilm seien bevorzugt Polymere genannt, die an einer als Rückgrat wirkenden Hauptkette Seitenketten unterschiedlicher Art tragen, von denen mindestens eine Art elektromagnetische Strahlung im Wellenlängenbereich des sichtbaren Lichts, also bevorzugt bei Wellenlängen zwischen $\lambda$ = 380 nm und $\lambda$ = 820 nm, besonders bevorzugt bei Wellenlängen zwischen $\lambda$ = 385 nm und $\lambda$ = 780 nm und ganz besonders bevorzugt bei Wellenlängen zwischen $\lambda$ = 385 nm und $\lambda$ = 660 nm absorbieren können.

Bei dem im erfindungsgemäßen Verfahren verwendetem Aufzeichnungsmaterial handelt es sich bevorzugt um polymeres oder oligomeres organisches, amorphes Material, besonders bevorzugt um ein Seitenkettenpolymer, ebenfalls besonders bevorzugt um ein Blockcopolymer und/oder ein Propfpolymer.

Die Hauptketten des Seitenkettenpolymeren entstammen den folgenden Grundstrukturen: Polyacrylat, Polymethacrylat, Polysiloxan, Polyharnstoff, Polyurethan, Polyester, Polyamid oder Zellulose. Bevorzugt sind Polyacrylat und Polymethacrylat.

Alle in der vorliegenden Anmeldung beschriebenen Seitenkettenpolymere und entsprechende Monomere sind ebenfalls Gegenstand der Anmeldung.

Die Blockcopolymeren bestehen aus mehreren Blöcken, von denen mindestens eine Sorte die weiter oben beschriebenen Copolymersysteme enthält. Die anderen Blöcke bestehen aus unfunktionalisierten Polymergerüsten, die die Aufgabe der Verdünnung des funktionellen Blockes zur Einstellung der geforderten optischen Dichte erfüllen. Die Ausdehnung des funktionellen Blocks liegt unterhalb der Lichtwellenlänge, bevorzugt im Bereich von kleiner 200 nm, besonders bevorzugt kleiner als 100 nm.

Die Polymerisation der Blockcopolymere geschieht beispielsweise über radikalische oder anionische Polymerisation oder über andere geeignete Polymerisationsverfahren, eventuell gefolgt von einer polymeranalogen Reaktion oder durch Kombination dieser Methoden. Die Einheitlichkeit der Systeme liegt in einem Bereich kleiner als 2.0, bevorzugt kleiner als 1.5. Das Molekulargewicht der durch radikalische Polymerisation erhaltenen Blockcopolymere erreicht Werte im Bereich von 50.000, durch anionische Polymerisation können Werte größer als 100.000 eingestellt werden.

Die im erfindungsgemäßen Verfahren eingesetzten Farbstoffe, insbesondere die Azofarbstoffe sind an diese Polymergerüste als Seitenketten über einen S-T-Q-Spacer kovalent gebunden,

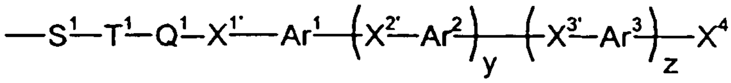 (I)

mit

$-Ar^1-$ = 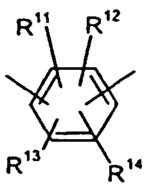 (III) oder 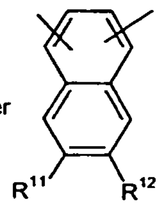 (IV) oder 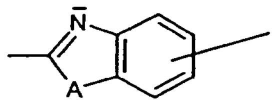 (V)

mit

$-Ar^2-$ = 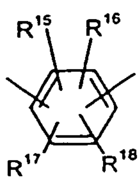 (VI) oder 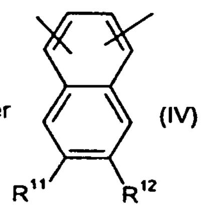 (IV) oder 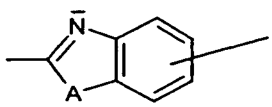 (V)

mit

$-Ar^3-$ = 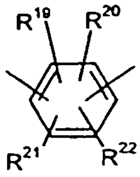 (VII) oder 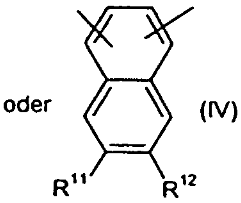 (IV) oder 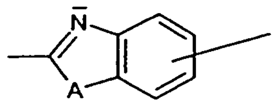 (V)

wobei

y für 1 oder 2 steht,

z für 0, 1 oder 2 steht und

$x^{2*}$ und $Ar^2$ bzw. $X^{3'}$ und $Ar^3$ unterschiedliche Bedeutungen haben können, wenn y bzw. z 2 bedeuten,

A für O, S oder N-$C_1$- bis $C_4$-Alkyl steht,

$Q^1$ für -O-, -S-, -(N-$R^5$)-, -C($R^6R^7$)$_p$, -(C=O)-, -(O-CO)-, -($NR^5$-CO)-, -($SO_2$)-, -(O-$SO_2$)-, -($NR^5$-$SO_2$-)-, -(C=$NR^8$)-, -($CNR^8$-$NR^5$)-, -O-$C_6H_5$-COO- oder einen bivalenten Rest der Formel

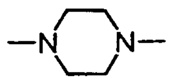

steht,

$T^1$ für -($CH_2$)p- steht, wobei die Kette durch -O-, -$NR^9$-, oder -$OSiR^{10}{}_2O$- unterbrochen sein kann und durch Methyl substituiert sein kann,

$S^1$ für eine direkte Bindung, -O-, -S- oder -$NR^{9-}$steht,

p für eine ganze Zahl von 2 bis 12, vorzugsweise 2 bis 8, insbesondere 2 bis 4 steht,

$R^9$ für Wasserstoff, Methyl, Ethyl, Propyl oder $C_6$- bis $C_{10}$-Aryl-O-(C=O) steht,

$R^{10}$ für Methyl oder Ethyl steht,

$R^{11}$ bis $R^{22}$ unabhängig voneinander für Wasserstoff oder einen nichtionischen Substituenten stehen,

$X^4$ bedeutet Wasserstoff, Halogen, Cyan, Nitro, $CF_3$, $CCl_3$, -COO-$C_1$- bis $C_{4-}$Alkyl oder $X^{4'}$-$R^4$,

$X^{1'}$, $X^{2'}$, $X^{3'}$ und $X^{4'}$ für eine direkte Bindung, -O-, -S-, -(N-$R^5$)-, -C($R^6R^7$)-, -(C=O)-, -(CO-O)-, -(CO-$NR^5$)-, -($SO_2$)-, -($SO_2$-O)-, -($SO_2$-$NR^5$)-, oder -($CNR^8$-$NR^5$)-stehen und

$X^{2'}$ und $X^{3'}$ zusätzlich für -(C=$NR^8$)-, -(N=N)- stehen können und mindestens eine der Gruppen $X^{2'}$ oder $X^{3'}$ für -N=N- steht,

$R^4$, $R^5$, $R^6$, $R^7$ und $R^8$ unabhängig voneinander für Wasserstoff, $C_1$- bis $C_4$-Alkyl, oder $C_6$- bis $C_{10}$-Aryl stehen und

$R^4$ und $R^5$ zusätzlich unabhängig voneinander für $C_1$- bis $C_{20}$-Alkyl-(C=O)-, $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-($SO_2$)-, $C_3$- bis $C_{10}$-Cycloalkyl-($SO_2$)-, $C_2$- bis $C_{20-}$Alkenyl-($SO_2$)- oder $C_6$- bis $C_{10}$-Aryl-($SO_2$)- stehen.

Unter nichtionischen Substituenten sind zu verstehen Halogen, Cyano, Nitro, $C_1$- bis $C_{20}$-Alkyl, $C_1$- bis $C_{20}$-Alk-

oxy, Phenoxy, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl-(C=O)-, $C_6$- bis $C_{10}$-Aryl-(C=O)-, $C_1$- bis $C_{20}$-Alkyl-($SO_2$)-, $C_1$- bis $C_{20}$-Alkyl-(C=O)-O-, $C_1$- bis $C_{20}$-Alkyl-(C=O)-NH-, $C_6$-bis $C_{10}$-Aryl-(C=O)-NH-, $C_1$- bis $C_{20}$-Alkyl-O-(C=O)-, $C_1$- bis $C_{20}$-Alkyl-NH-(C=O)-, $C_6$- bis $C_{10}$-Aryl-NH-(C=O)- oder ein Rest der Formel

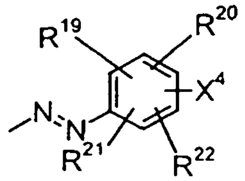

(VIII)

.

Die Alkyl-, Cycloalkyl-, Alkenyl- und Arylreste können ihrerseits durch bis zu 3 der oben definierten nichtionischen Substituenten substituiert sein und die Alkyl- und Alkenylreste können geradkettig oder verzweigt sein.

Unter Halogen ist Fluor, Chlor, Brom und Iod zu verstehen, insbesondere Fluor und Chlor.

Das im erfindungsgemäßen Verfahren eingesetzten polymere oder oligomere organische, amorphe Material kann neben den Farbstoffen, beispielsweise der Formel (I), formanisotrope Gruppierungen tragen. Auch diese sind, in der Regel über einen Spacer, an die Polymergerüste kovalent gebunden.

Formanisotrope Gruppierungen werden durch die Struktur der Formel (II)

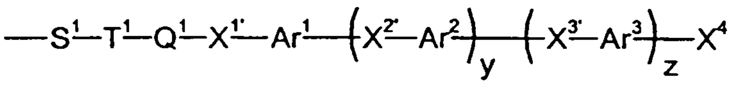

(II)

beschrieben, wobei die obigen Substituentendefinition (Formel I) auch für Formel II gültig sind, mit der Ausnahme, dass keine der Gruppen $X^{2'}$ oder $X^{3'}$ -N=N- annehmen darf und $R^{11}$ bis $R^{22}$ nicht für einen Rest der Formel (VIII) stehen dürfen.

Die im erfindungsgemäßen Verfahren eingesetzten Polymeren können gleiche oder verschiedene Seitengruppen der Formel (I) tragen, wobei die Reste bei mehreren verschiedenen Seitengruppen verschieden sind, sowie keine, gleiche oder verschiedene Seitengruppen der Formel (II) tragen, wobei die Reste bei mehreren verschiedenen Seitengruppen verschieden sind.

Besonders bevorzugt sind Polymere, die sowohl Seitengruppen der Formel I als auch II tragen.

Monomere mit Farbstoffgruppen (I) bzw. Monomere mit formanisotropen Gruppen (II) haben bevorzugt die Formeln (Ia) bzw. (IIa):.

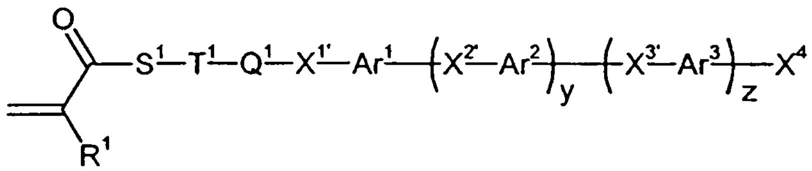

(Ia)

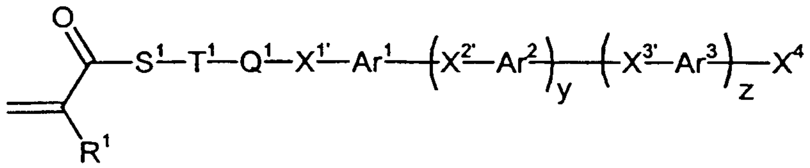

(IIa)

,

worin $R^1$ für Wasserstoff oder Methyl steht und
die anderen Reste die oben für Farbstoffgruppen bzw. formanisotrope Gruppen aufgeführten Bedeutungen besitzen.

Bevorzugt werden im erfindungsgemäßen Verfahren Polymere, die Farbstofiseitengruppen der Formel (I) enthalten, eingesetzt, wobei

$Ar^1$ für einen Rest der Formel (III) steht,

$Ar^2$ für einen Rest der Formel (VI) steht,

$Ar^3$ für einen Rest der Formeln (VII) oder (V) steht,

y für 1 oder 2 steht,

z für 0, 1 oder 2 steht und

$X^{2'}$ und $Ar^2$ bzw. $X^{3'}$ und $Ar^3$ unterschiedliche Bedeutungen haben können, wenn y bzw. z 2 bedeuten,

A für O oder S steht,

$Q^1$ für -O-, -(N-$R^5$)-, -(C=O)-, -(O-CO)-, -( $NR^5$-CO)-, -($SO_2$)-, -(O-$SO_2$)-, -($NR^5$-$SO_2$-)-, -O-$C_6H_5$-COO- oder einen bivalenten Rest der Formel

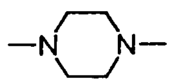

steht,

$T^1$ für -$(CH_2)_p$- steht, wobei die Kette durch -O-, -$NR^9$-, oder -$OSiR^{10}{}_2O$- unterbrochen sein kann und durch Methyl substituiert sein kann,

$S^1$ für eine direkte Bindung, -O-, -S- oder -$NR^9$- steht,

p für eine ganze Zahl von 2 bis 8, insbesondere 2 bis 4 steht,

$R^9$ für Wasserstoff, Methyl oder Ethyl steht,

$R^{10}$ für Methyl oder Ethyl steht,

$R^{11}$ bis $R^{22}$ unabhängig voneinander für Wasserstoff, Halogen, Cyano, Nitro, $C_1$- bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl-(C=O)-, $C_6$- bis $C_{10}$-Aryl-(C=O)-, $C_1$- bis $C_{20}$-Alkyl-($SO_2$)-, $C_1$- bis $C_{20}$-Akyl-(C=O)-O-, $C_1$- bis $C_{20}$-Alkyl-(C=O)-NH-, $C_6$- bis $C_{10}$-Aryl-(C=O)-NH-, $C_1$- bis $C_{20}$-Alkyl-O-(C=O)-, $C_1$-bis $C_{20}$-Alkyl-NH-(C=O)-, $C_6$- bis $C_{10}$-Aryl-NH-(C=O)- oder einen Rest der Formel

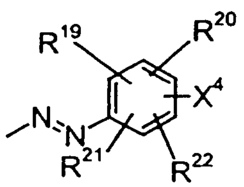

(VIII)

stehen,

$X^4$ bedeutet Wasserstoff, Halogen, Cyan, Nitro, $CF_3$, $CCl_3$, -COO-$C_1$- bis $C_4$-Alkyl oder $X^{4'}$-$R^4$,

$X^{1'}$, $X^{2'}$, $X^{3'}$ und $X^{4'}$ für eine direkte Bindung, -O-, -(N-$R^5$)-, -C($R^6R^7$)-, -(C=O)-, -(CO-O)-, -(CO-$NR^5$)-, -($SO_2$)- oder -($SO_2$-O)- stehen und

$X^{2'}$ und $X^{3'}$ zusätzlich für -(N=N)- stehen können und mindestens eine der Gruppen $X^{2'}$ oder $X^{3'}$ für -N=N-steht,

$R^4$, $R^5$, $R^6$, $R^7$ und $R^8$ unabhängig voneinander für Wasserstoff, $C_1$- bis $C_4$-Alkyl, oder $C_6$- bis $C_{10}$-Aryl stehen und

$R^4$ und $R^5$ zusätzlich unabhängig voneinander für $C_1$- bis $C_{20}$-Alkyl-(C=O)-, $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-($SO_2$)-, $C_3$- bis $C_{10}$-Cycloalkyl-($SO_2$)-, $C_2$- bis $C_{20}$-Alkenyl-($SO_2$)- oder $C_6$- bis $C_{10}$-Aryl-($SO_2$)- stehen.

Ebenfalls bevorzugt werden im erfindungsgemäßen Verfahren Polymere eingesetzt, die neben Farbstoffseitengruppen der Formel (1) formanisotrope Seitengruppen der Formel (II) enthalten,
worin

| | |
|---|---|
| $Ar^1$ | für einen Rest der Formel (III) steht, |
| $Ar^2$ | für einen Rest der Formel (VI) steht, |
| $Ar^3$ | für einen Rest der Formeln (VII) oder (V) steht, |
| y | für 1 oder 2 steht, |
| z | für 0, 1 oder 2 steht und |
| $X^{2'}$ und $Ar^2$ bzw. $X^{3'}$ und $Ar^3$ | unterschiedliche Bedeutungen haben können, wenn y bzw. z 2 bedeuten, |
| A | für O oder S steht, |
| $Q^1$ | für -O-, -(N-$R^5$)-, -(C=O)-, -(O-CO)-, -($NR^5$-CO)-, -($SO_2$)-, -(O-$SO_2$)-, -($NR^5$-$SO_2$-)-, -O-$C_6H_5$-COO- oder einen bivalenten Rest der Formel |

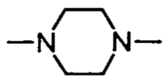

steht

| | |
|---|---|
| $T^1$ | für -$(CH_2)_p$- steht, wobei die Kette durch -O-, -$NR^9$-, oder -$OSiR^{10}{}_2O$- unterbrochen sein kann und durch Methyl substituiert sein kann, |
| $S^1$ | für eine direkte Bindung, -O-, -S- oder -$NR^9$-steht; |
| p | für eine ganze Zahl von 2 bis 8, insbesondere 2 bis 4 steht, |
| $R^9$ | für Wasserstoff, Methyl oder Ethyl steht, |
| $R^{10}$ | für Methyl oder Ethyl steht, |
| $R^{11}$ bis $R^{22}$ | unabhängig voneinander für Wasserstoff, Halogen, Cyano, Nitro, $C_1$- bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl-(C=O)-, $C_6$- bis $C_{10}$-Aryl-(C=O)-, C,- bis $C_{20}$-Alkyl-($SO_2$)-, $C_1$- bis $C_{20}$-Alkyl-(C=O)-O-, $C_1$- bis $C_{20}$-Alkyl-(C=O)-NH-, $C_6$- bis $C_{10}$-Aryl-(C=O)-NH-, $C_1$- bis $C_{20}$-Alkyl-O-(C=O)-, $C_1$-bis $C_{20}$-Alkyl-NH-(C=O)- oder $C_6$- bis $C_{10}$-Aryl-NH-(C=O)- stehen, |
| $X^4$ | bedeutet Wasserstoff, Halogen, Cyan, Nitro, $CF_3$, $CCl_3$, -COO-$C_1$- bis $C_4$-Alkyl oder $X^{4'}$-$R^4$, |
| $X^{1'}$, $X^{2'}$, $X^{3'}$ und $X^{4'}$ | für eine direkte Bindung, -O-, -(N-$R^5$)-, -C($R^6R^7$)-, -(C=O)-, -(CO-O)-, -(CO-$NR^5$)-, -($SO_2$)- oder -($SO_2$-O)- stehen, |
| $R^4$, $R^5$, $R^6$, $R^7$ und $R^8$ | unabhängig voneinander für Wasserstoff, $C_1$- bis $C_4$-Alkyl, oder $C_6$- bis $C_{10}$-Aryl stehen und |
| $R^4$ und $R^5$ | zusätzlich unabhängig voneinander für $C_1$- bis $C_{20}$-Alkyl-(C=O)-, $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-($SO_2$)-, $C_3$- |

bis $C_{10}$-Cycloalkyl-($SO_2$)-, $C_2$- bis $C_{20}$-Alkenyl-($SO_2$)- oder $C_6$- bis $C_{10}$-Aryl-($SO_2$)- stehen.

Besonders bevorzugt sind erfindungsgemäße Polymere, die Farbstoffseitengruppen der Formel (I) enthalten, worin

| | |
|---|---|
| $Ar^1$ | für einen Rest der Formel (III) steht, wobei die beiden Bindungen p-ständig sind, |
| $Ar^2$ | für einen Rest der Formel (VI) steht, wobei die beiden Bindungen p- oder m-ständig sind, |
| $Ar^3$ | für einen Rest der Formeln (VII) oder (V) steht, wobei die beiden Bindungen bei (VII) p-ständig sind, |
| y | für 1 oder 2 steht, |
| z | für 0, 1 oder 2 steht und |
| $X^2$ und $Ar^2$ bzw. $X^3$ und $Ar^3$ | unterschiedliche Bedeutungen haben können, wenn y bzw. z 2 bedeuten, |
| A | für O oder S steht, |
| $Q^1$ | für -O-, -(N-$R^5$)-, -(C=O)-, -($NR^5$-CO)-, oder -O-$C_6H_5$-COO- |

steht,

| | |
|---|---|
| $T^1$ | für -$(CH_2)_p$- steht |
| $S^1$ | für eine direkte Bindung, -O- oder -$NR^9$-steht, |
| p | für eine ganze Zahl von 2 bis 8, insbesondere 2 bis 4 steht, |
| $R^9$ | für Wasserstoff oder Methyl steht, |
| $R^{11}$ bis $R^{22}$ | unabhängig voneinander für Wasserstoff, Halogen, Cyano, Nitro, Methyl, Methoxy, Phenoxy, Phenyl, Acetyl-, Benzoyl-, $CH_3$-($SO_2$)-, $CH_3$-(C=O)-O-, $CH_3$-(C=O)-NH-, $CH_3$-NH-(C=O)- oder einen Rest der Formel |

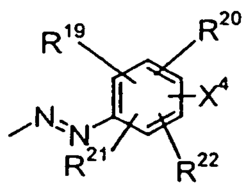

(VIII)

stehen,

| | |
|---|---|
| $X^4$ | bedeutet Wasserstoff, Halogen, Cyan, Nitro, $CF_3$ oder $X^{4'}$-$R^4$, |
| $X^{1'}$, $X^{2'}$, | $X^{3'}$ und $X^{4'}$ für eine direkte Bindung, -O-, -(N-$R^5$)-, -(C=O)-, -(CO-NR-)-oder -($SO_2$)- stehen und |
| $X^{2'}$ und $X^{3'}$ | zusätzlich für -(N=N)- stehen können und mindestens eine der Gruppen $X^{2'}$ oder $X^{3'}$ für -N=N- steht, |
| $R^4$, $R^5$ und $R^8$ | unabhängig voneinander für Wasserstoff, $C_1$- bis $C_4$-Alkyl, oder $C_6$-bis $C_{10}$-Aryl stehen und |
| $R^4$ und $R^5$ | zusätzlich unabhängig voneinander für $C_1$- bis $C_4$-Alkyl-(C=O, $C_6$- bis $C_{10}$-Aryl-(C=O)-, $C_1$- bis $C_4$-Alkyl-($SO_2$)- oder $C_6$- bis $C_{10}$-Aryl-($SO_2$)- stehen. |

Ebenfalls besonders bevorzugt werden im erfindungsgemäßen Verfahren Polymere eingesetzt, die neben Farbstoffseitengruppen der Formel (I) formanisotrope Seitengruppen der Formel (II) enthalten,
worin

| | |
|---|---|
| $Ar^1$ | für einen Rest der Formel (III) steht, wobei die beiden Bindungen p-ständig sind, |
| $Ar^2$ | für einen Rest der Formel (VI) steht, wobei die beiden Bindungen p- oder m-ständig sind, |
| $Ar^3$ | für einen Rest der Formeln (VII) oder (V) steht, wobei die beiden Bindungen bei (VII) p-ständig sind, |
| y | für 1 oder 2 steht, |
| z | für 0, 1 oder 2 steht und |
| $X^{2'}$ und $Ar^2$ bzw. $X^{3'}$ und $Ar^3$ | unterschiedliche Bedeutungen haben können, wenn y bzw. z 2 bedeuten, |
| A | für O oder S steht, |
| $Q^1$ | für -O-, -(N-$R^5$)-, -(C=O)-, -($NR^5$-CO)-, oder -O-$C_6H_5$-COO- |

steht,

| | |
|---|---|
| $T^1$ | für -$(CH_2)_p$- steht, |
| $S^1$ | für eine direkte Bindung, -O- oder -$NR^9$-steht |
| p | für eine ganze Zahl von 2 bis 8, insbesondere 2 bis 4 steht, |
| $R^9$ | für Wasserstoff oder Methyl steht, |
| $R^{11}$ bis $R^{22}$ | unabhängig voneinander für Wasserstoff, Halogen, Cyano, Nitro, Methyl, Methoxy, Phenoxy, Phenyl, Acetyl-, Benzoyl-, $CH_3$-($SO_2$)-, $CH_3$-(C=O)-O-, $CH_3$-(C=O)-NH- oder $CH_3$-NH-(C=O)- stehen, |
| $X^4$ | bedeutet Wasserstoff, Halogen, Cyan, Nitro, $CF_3$ oder $X^{4'}$-$R^4$, |
| $X^{1'}$, $X^{2'}$, $X^{3'}$ und $X^{4'}$ | für eine direkte Bindung, -O-, -(N-$R^5$)-, -(C=O)-, -(CO-$NR^5$)-oder -($SO_2$)- stehen, |
| $R^4$, $R^5$ und $R^8$ | unabhängig voneinander für Wasserstoff, $C_1$- bis $C_4$-Alkyl, oder $C_6$-bis $C_{10}$-Aryl stehen und |
| $R^4$ und $R^5$ | zusätzlich unabhängig voneinander für $C_1$- bis $C_4$-Alkyl-(C=O, $C_6$- bis $C_{10}$-Aryl-(C=O)-, $C_1$- bis $C_4$-Alkyl-($SO_2$)- oder $C_6$- bis $C_{10}$-Aryl-($SO_2$)- stehen. |

Entsprechend ebenfalls bevorzugt sind die Monomeren der Formeln (Ia) und (IIa), worin die Reste die bevorzugte und besonders bevorzugte Bedeutung der Formeln (I) bzw. (II) besitzen und

$R^1$ für Wasserstoff und besonders bevorzugt für Methyl steht.

Im erfindungsgemäßen Verfahren besonders bevorzugt verwendete Farbstoff-tragende Monomere (Ia) sind:

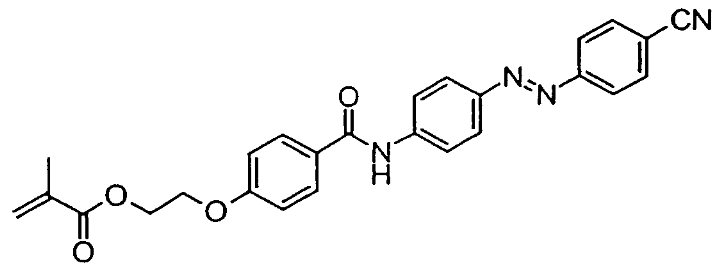

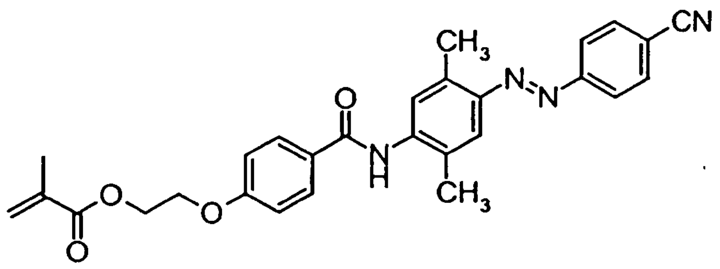

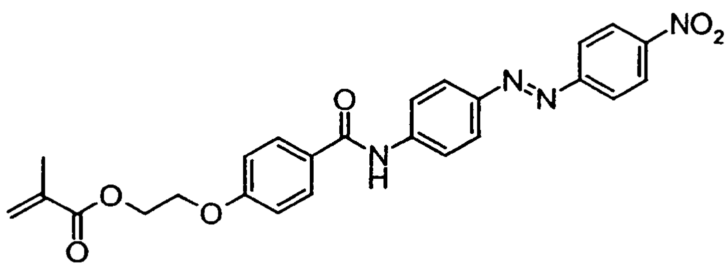

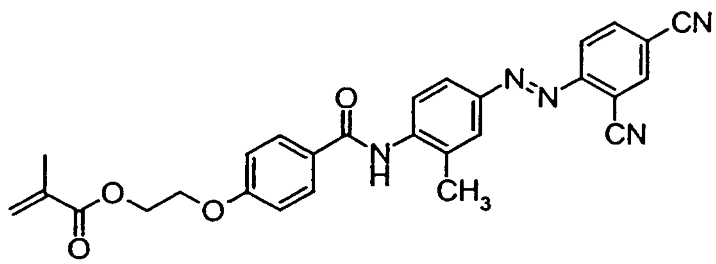

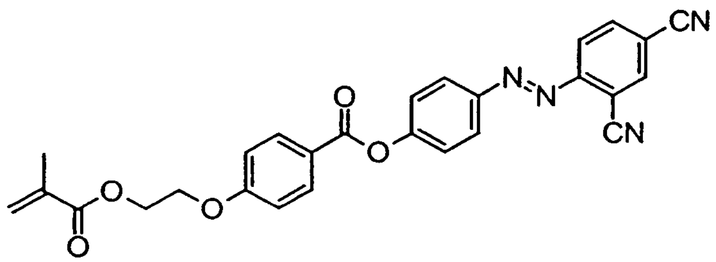

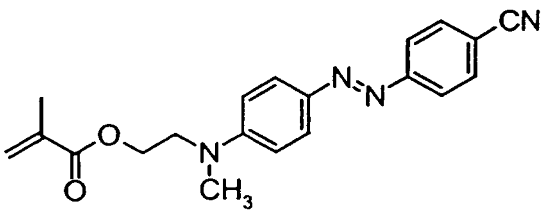

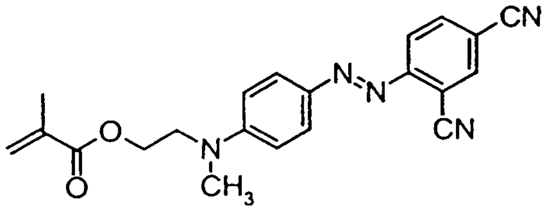

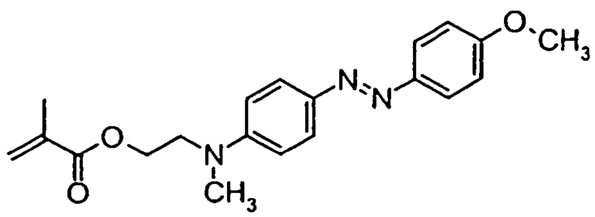

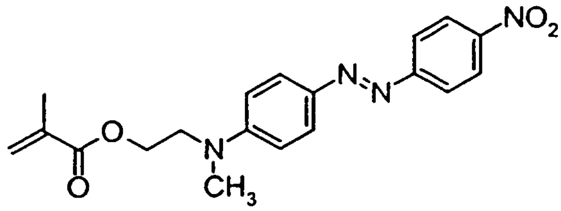

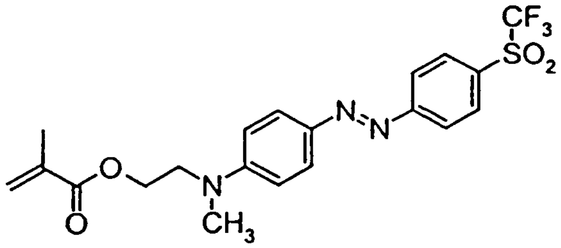

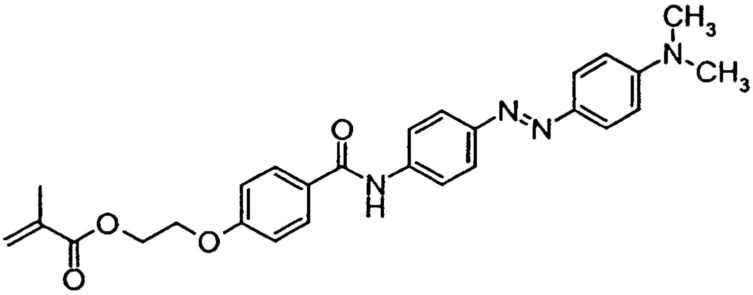

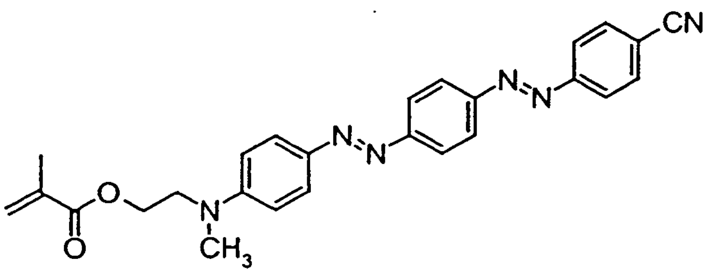

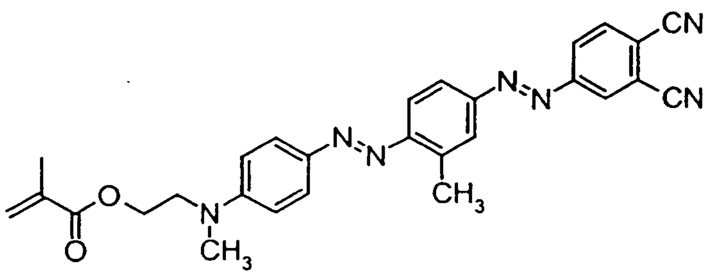

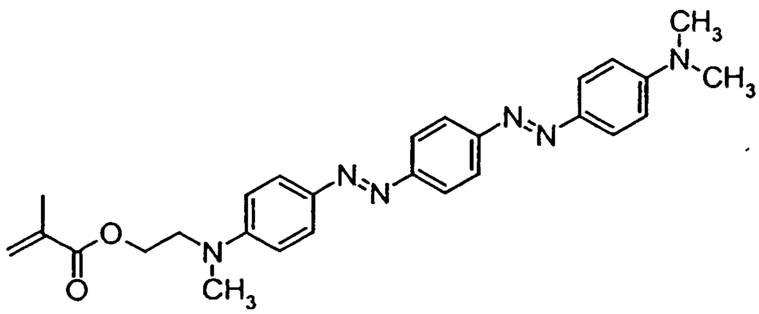

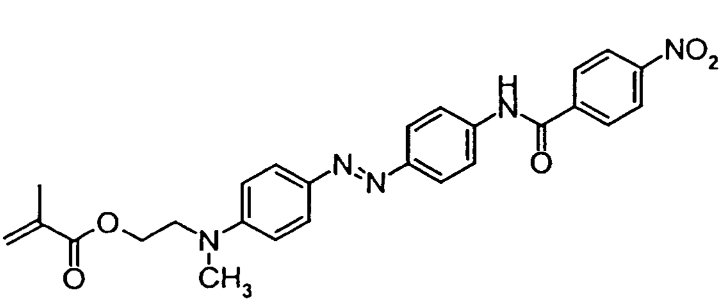

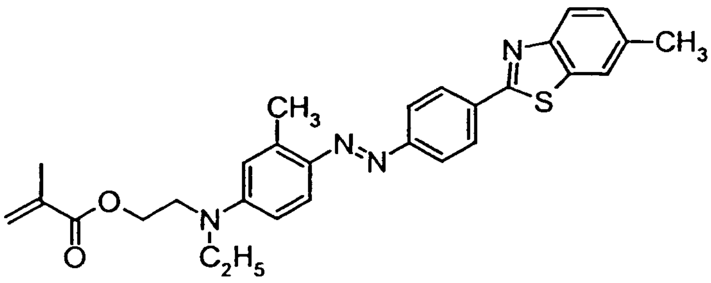

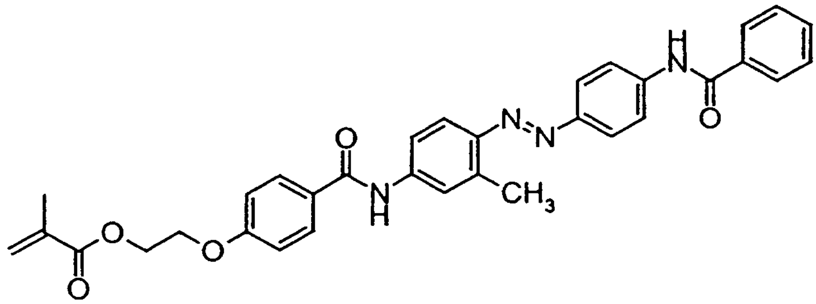

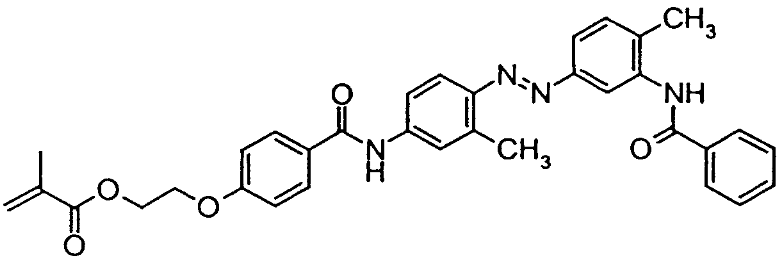

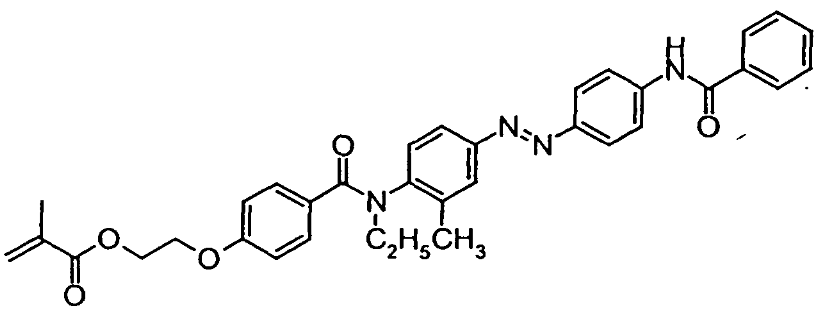

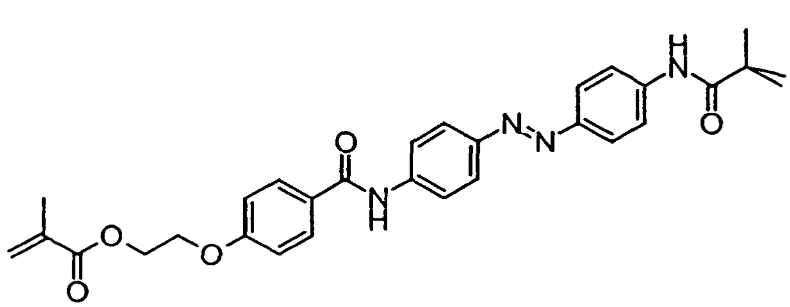

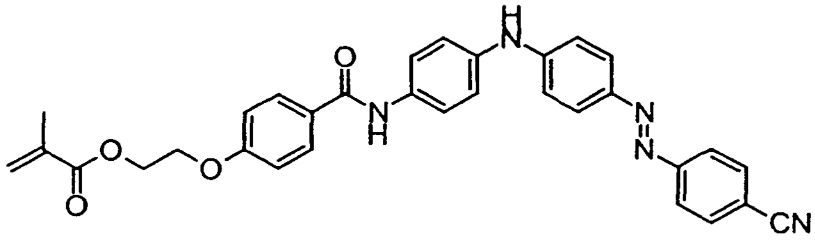

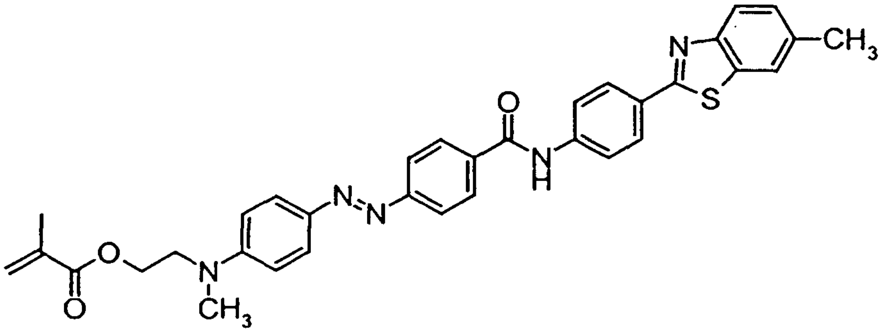

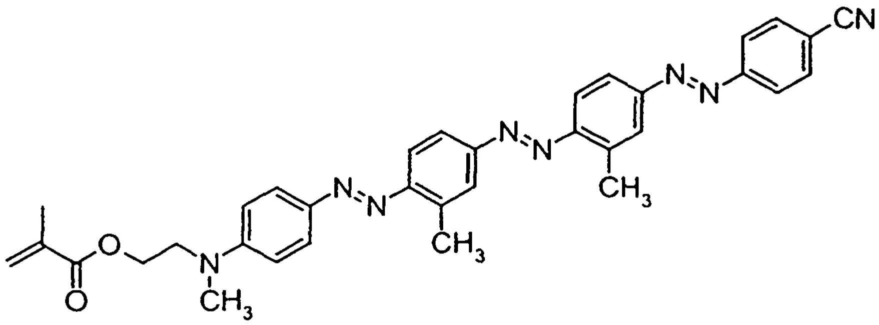

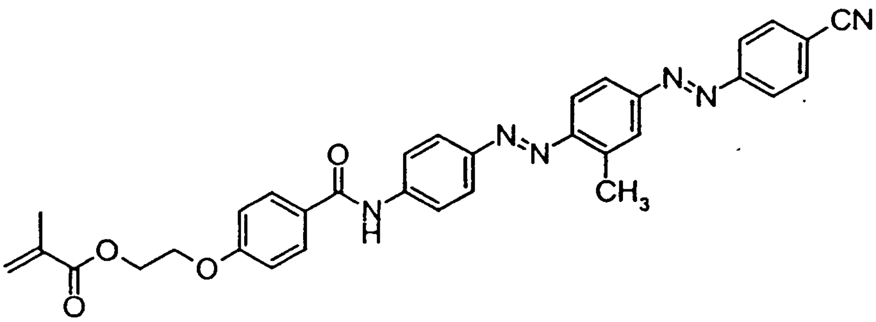

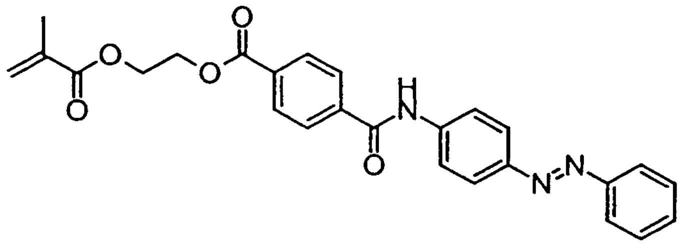

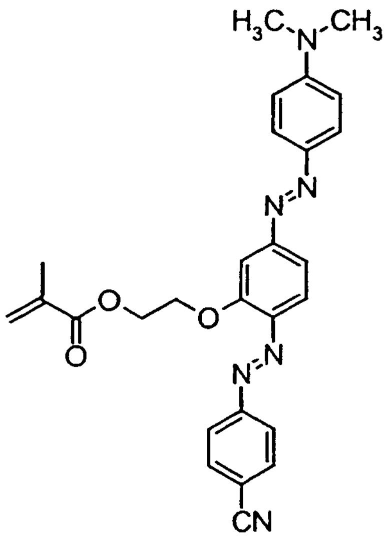

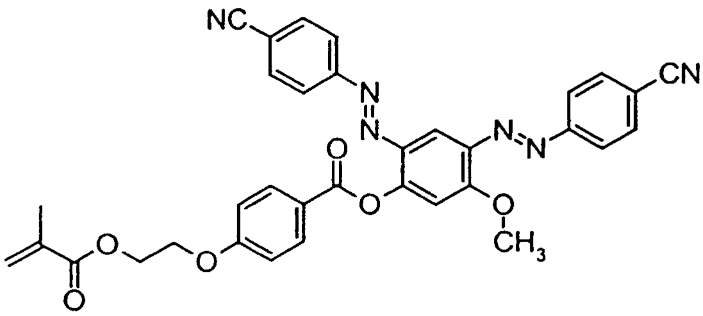

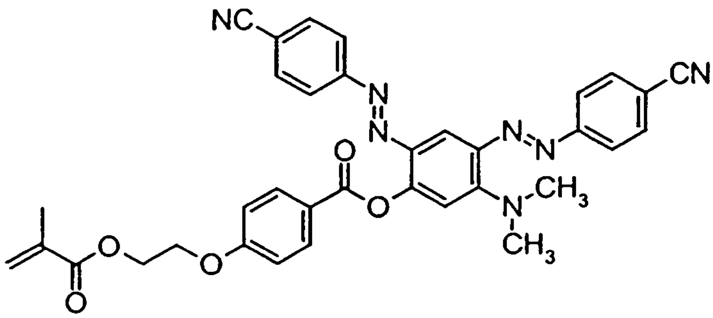

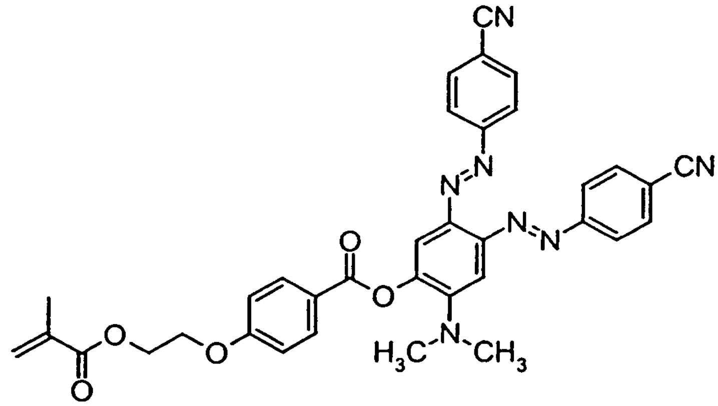

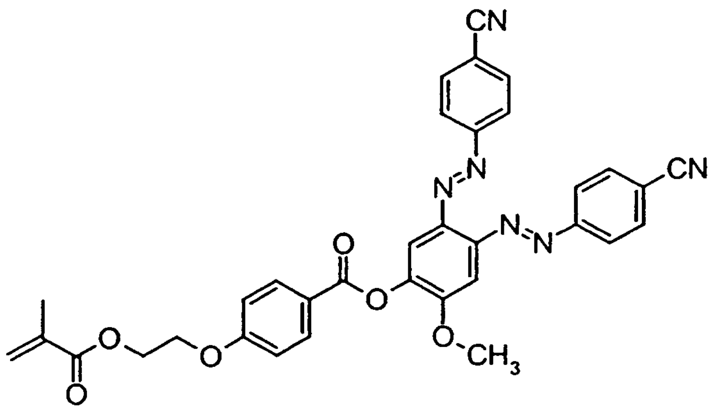

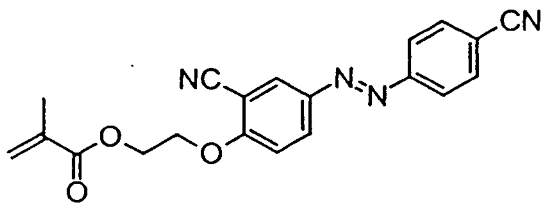

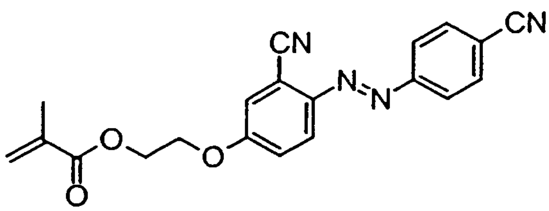

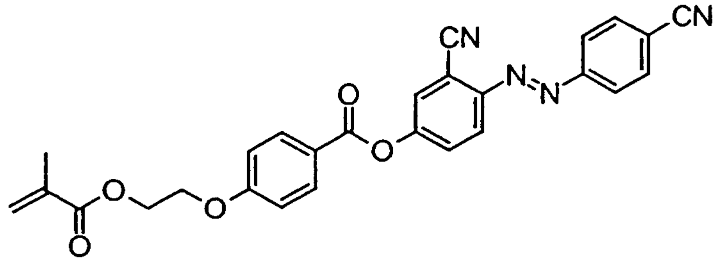

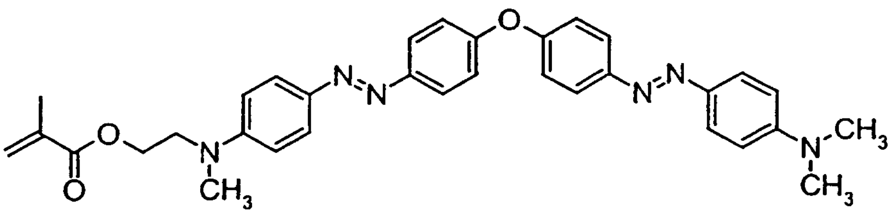

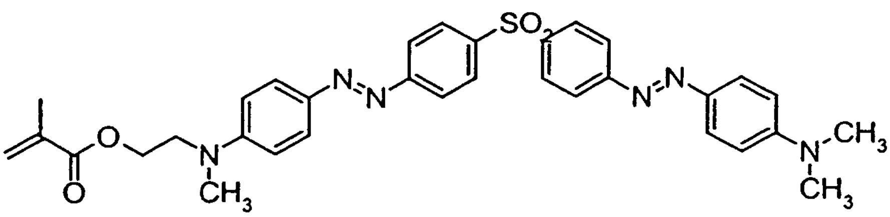

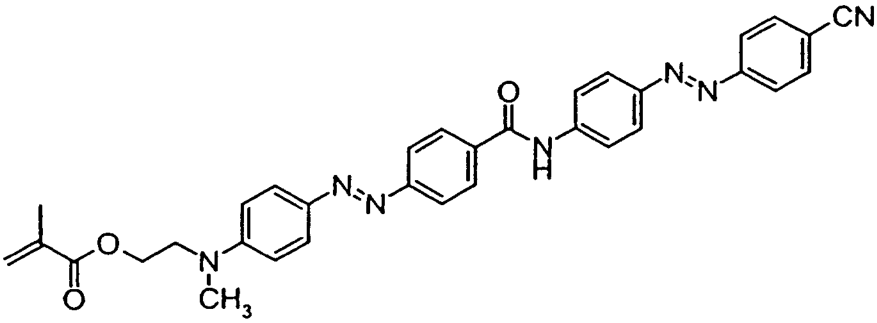

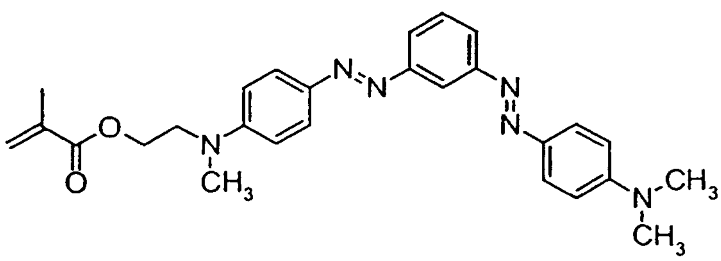

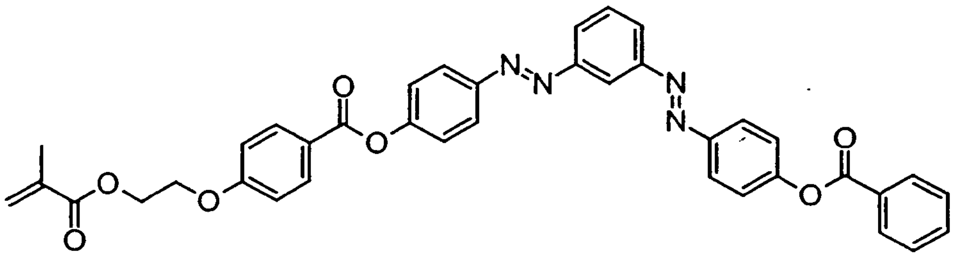

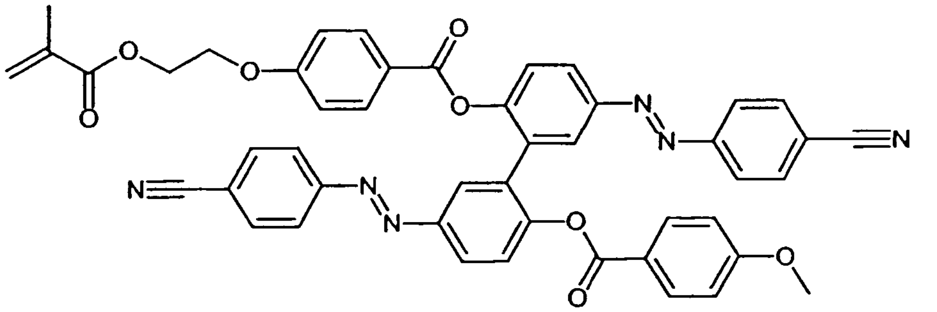

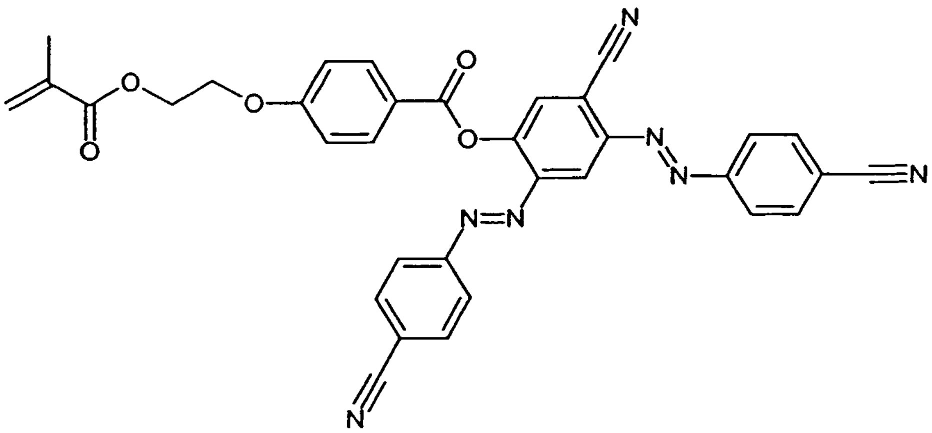

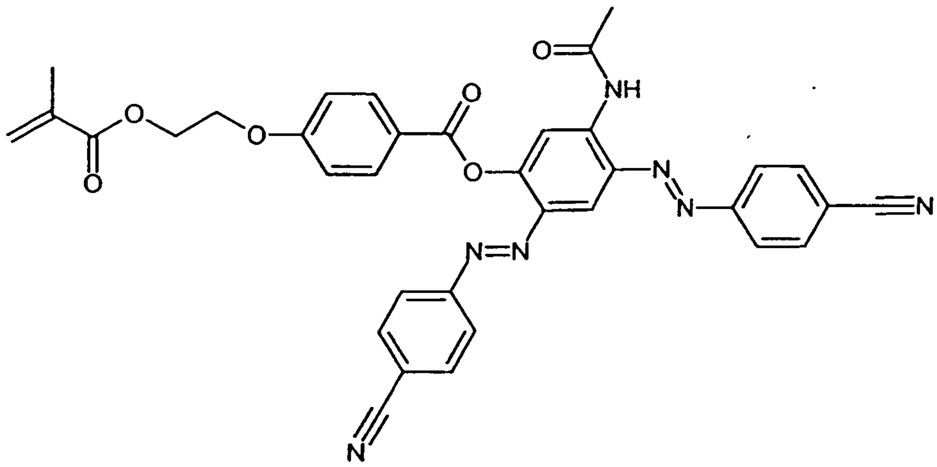

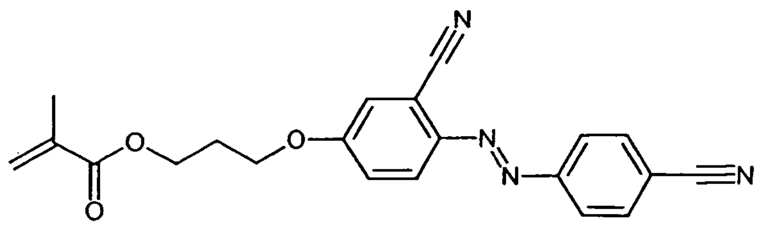

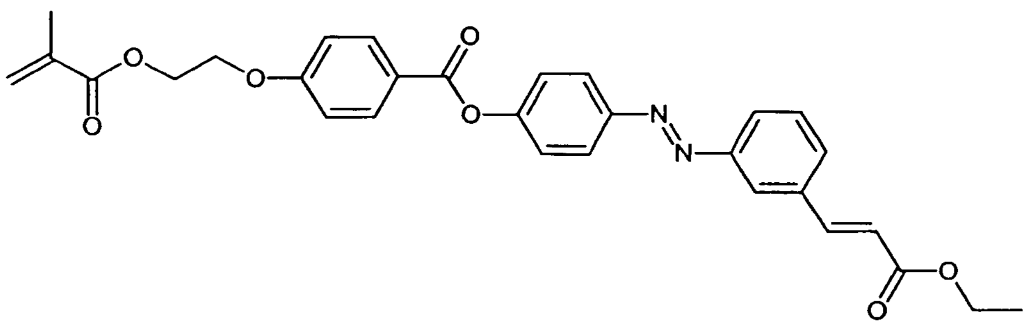

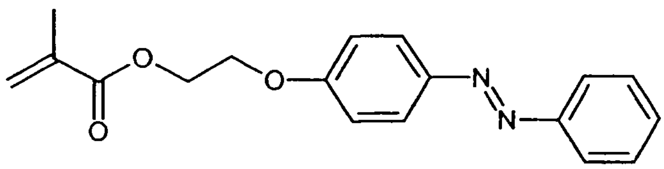

Im Verfahren besonders bevorzugt verwendete formanisotrope Monomere (IIa) sind:

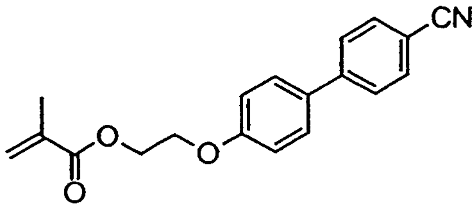

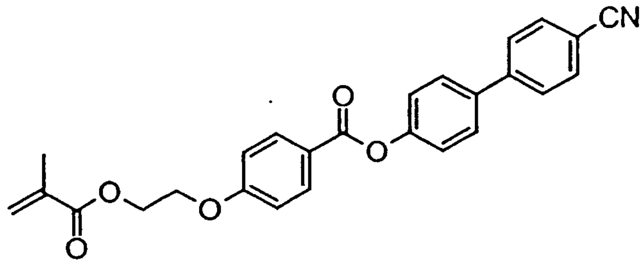

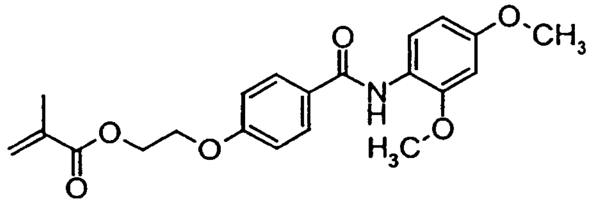

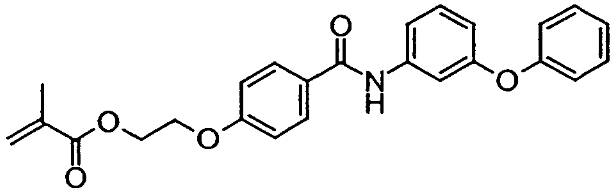

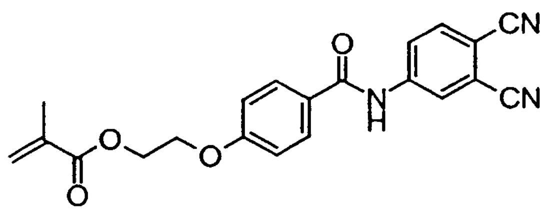

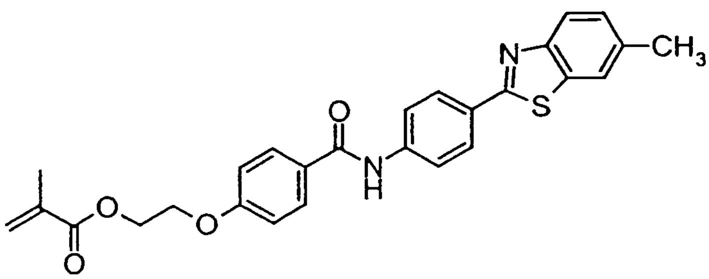

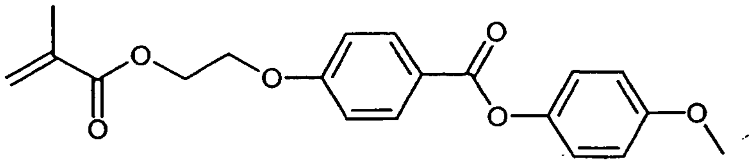

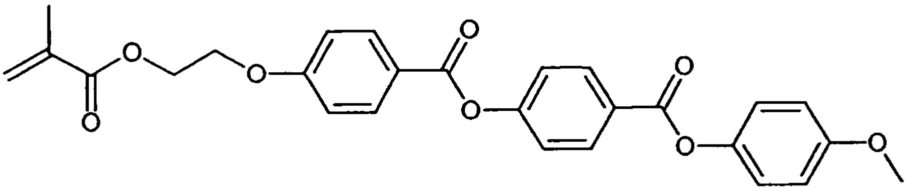

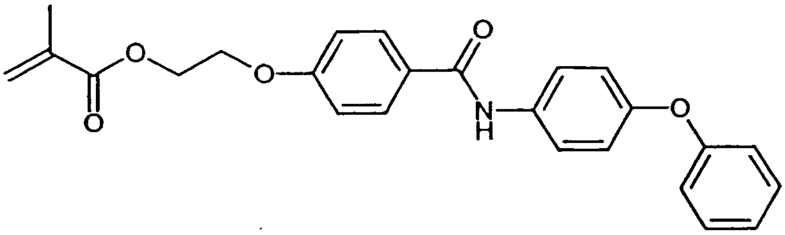

Im Verfahren besonders bevorzugt eingesetzte Kombinationen sind:

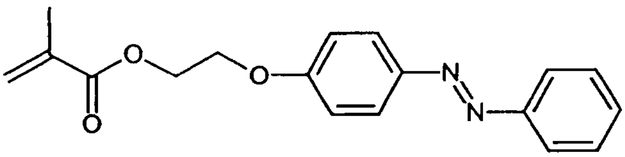

mit

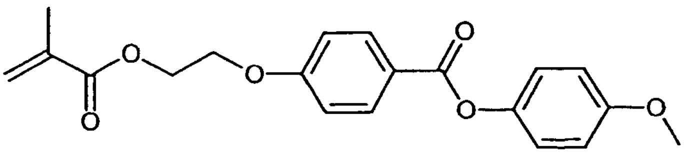

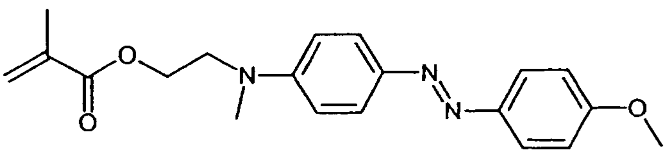

mit

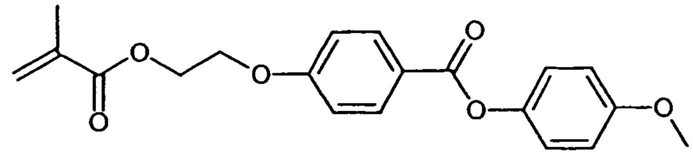

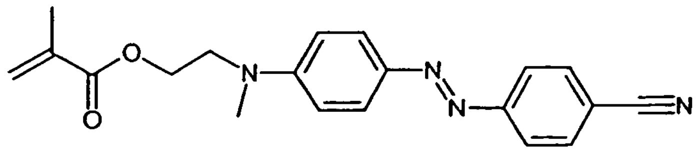

mit

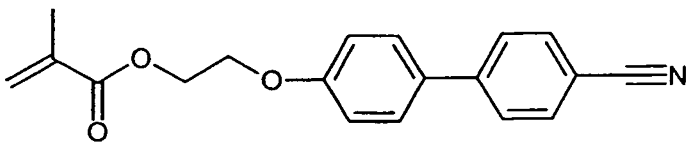

;

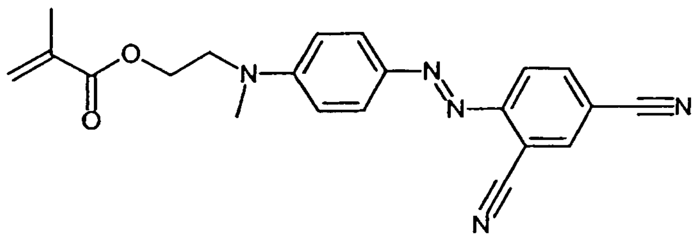

mit

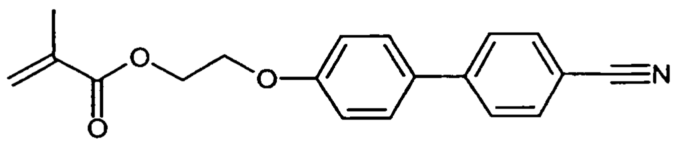

;

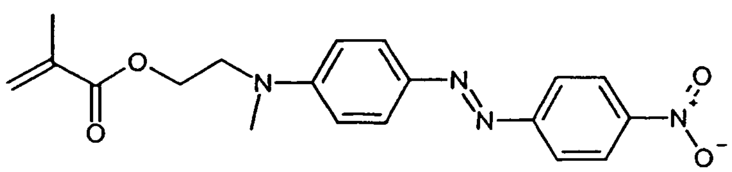

mit

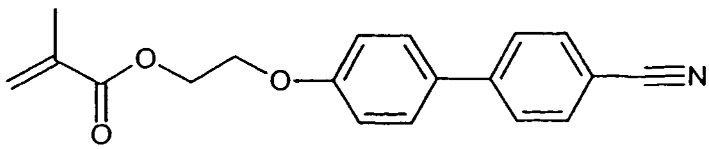

;

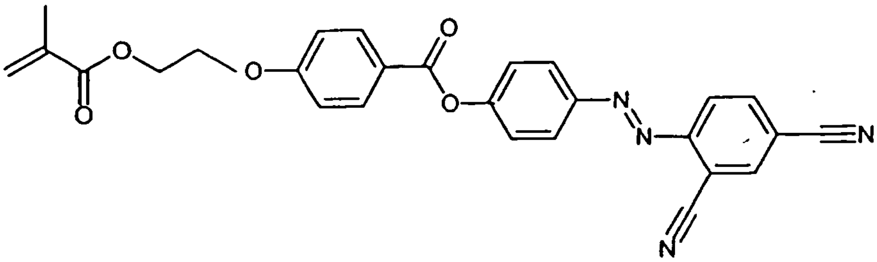

mit

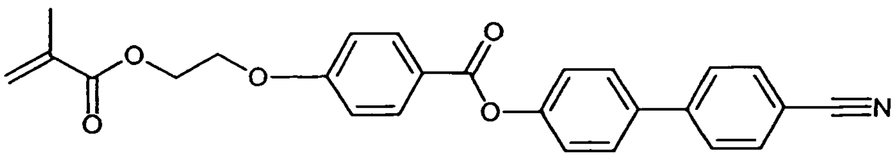

;

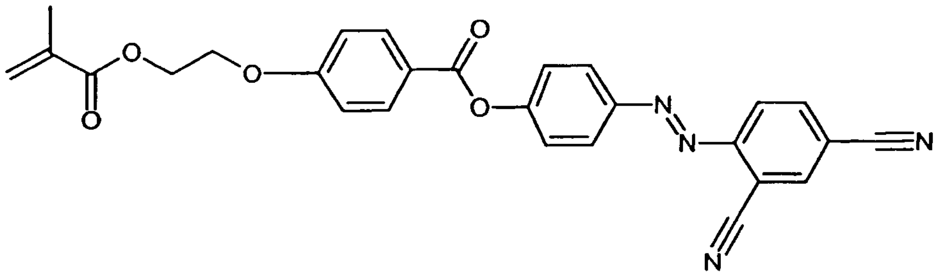

mit

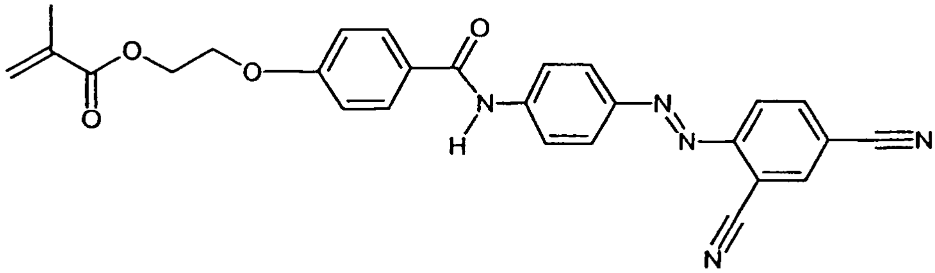

;

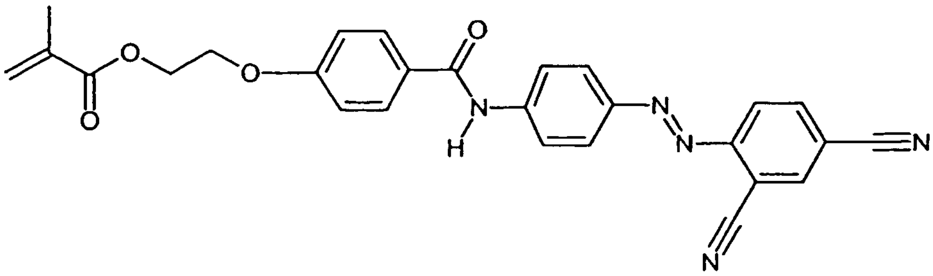

mit

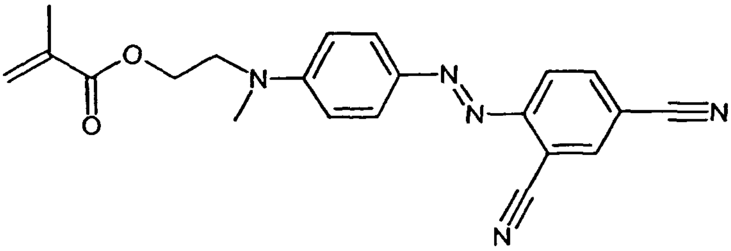

;

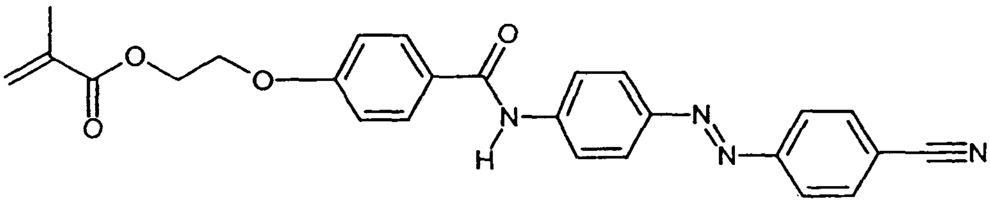

mit

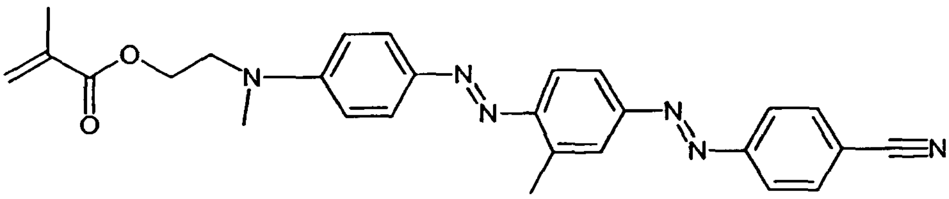

;

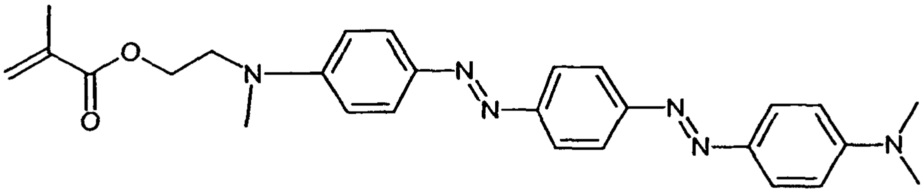

mit

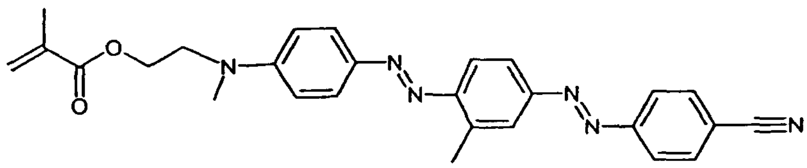

;

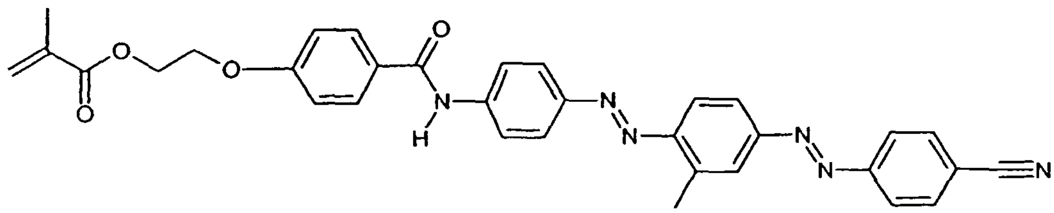

mit

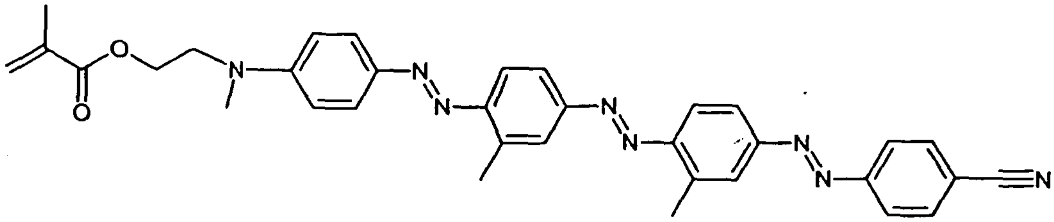

;

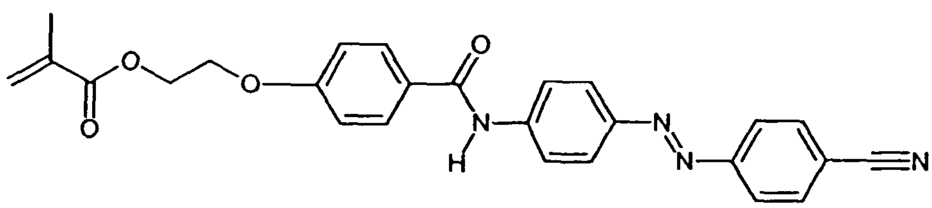

mit

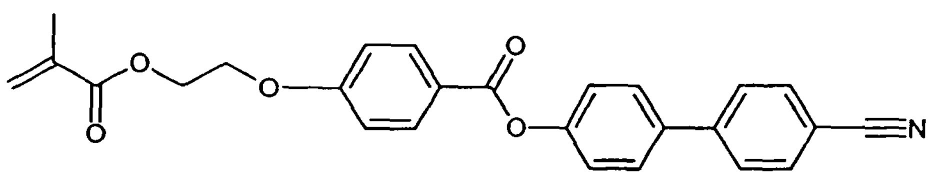

;

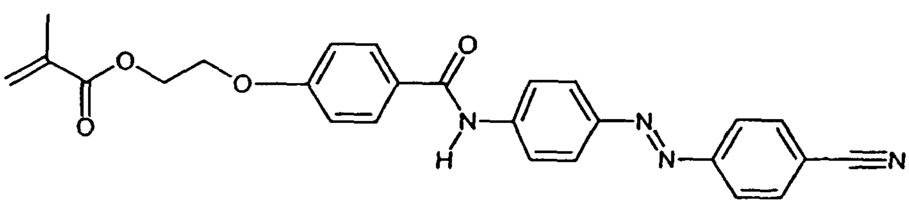

mit

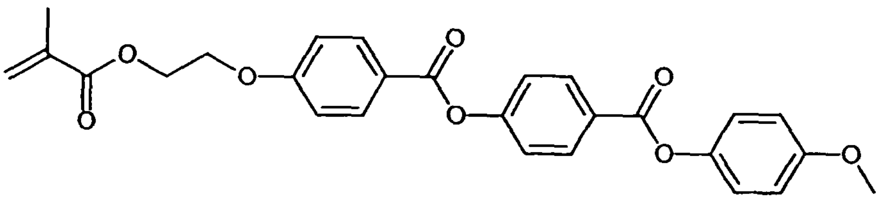

;

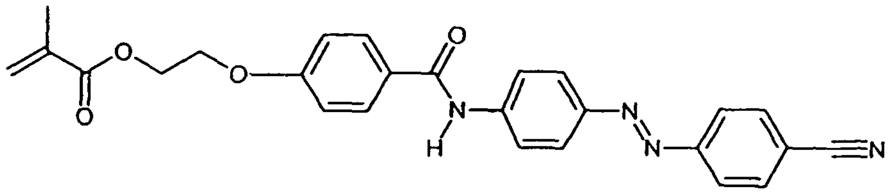

mit

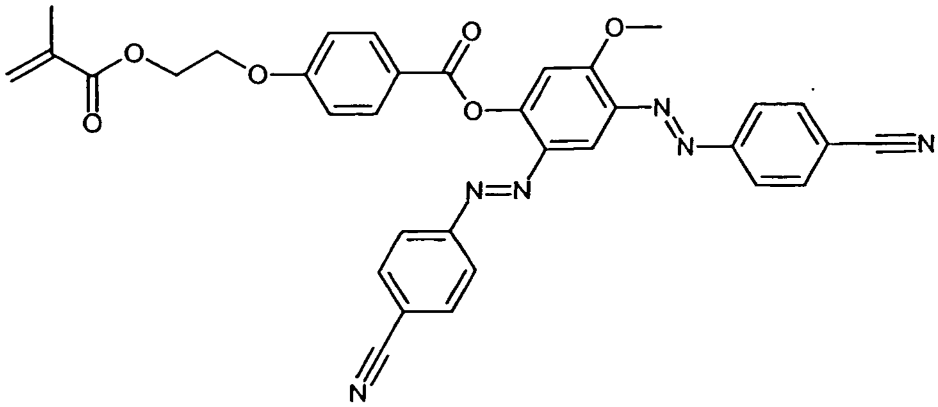

;

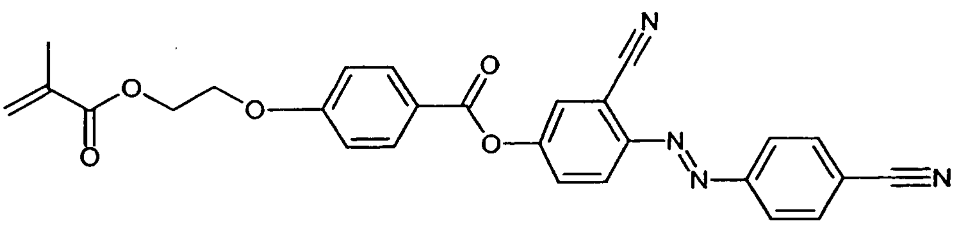

mit

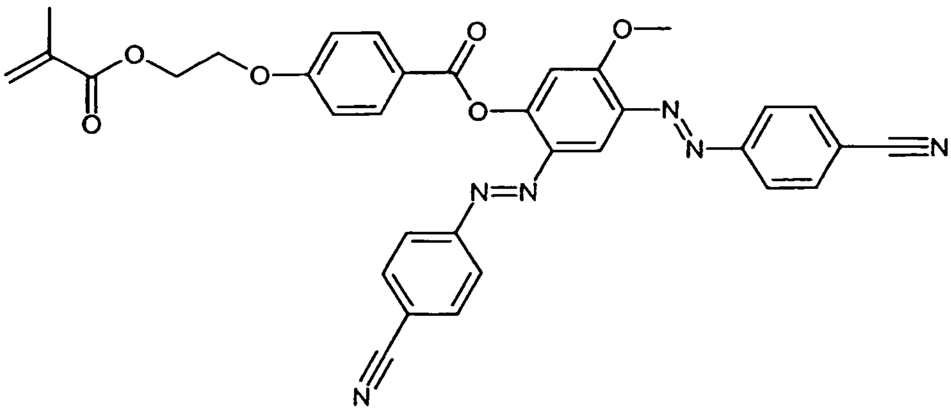

;

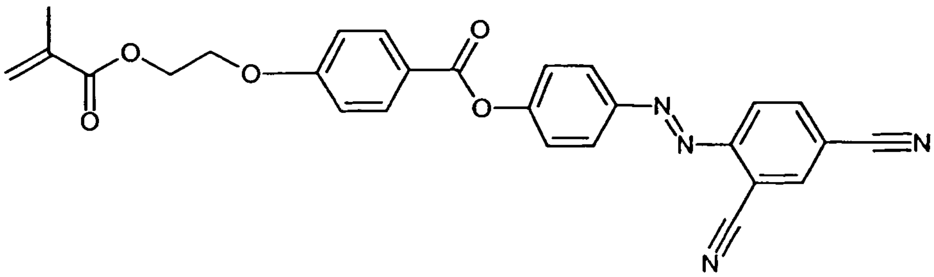

mit

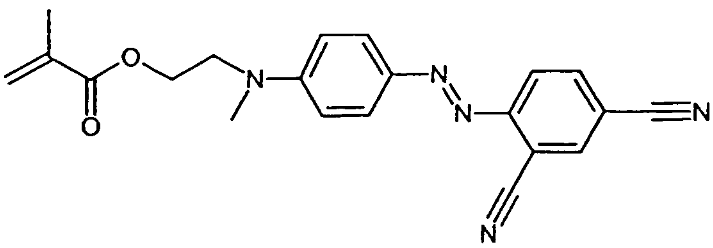

;

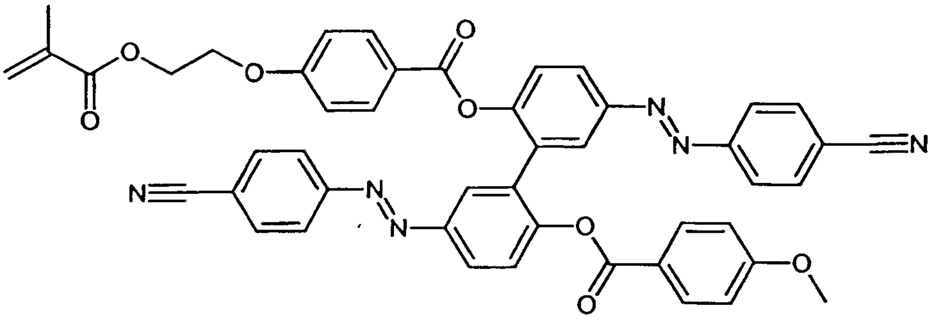

mit

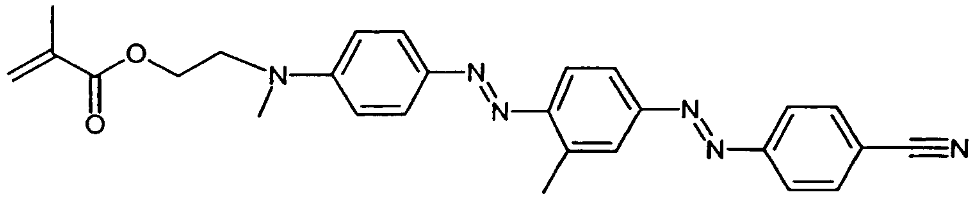

Neben diesen funktionalen Bausteinen (Ia) und (IIa) können die im erfindungsgemäßen Verfahren eingesetzten Oligo- oder Polymeren auch Bausteine enthalten, die hauptsächlich zur Erniedrigung des prozentualen Gehalts an funktionalen Bausteinen, insbesondere an Farbstoffbausteinen, dienen. Neben dieser Aufgabe können sie auch für andere Eigenschaften der Oligo- oder Polymeren verantwortlich sein, z.B. die Glasübergangstemperatur, Flüssigkristallinität, Filmbildungseigenschaft, usw.

Für Polyacrylate oder -methacrylate sind solche Monomeren Acryl- oder Methacrylsäureester der Formel (IIIa)

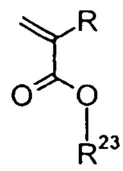

(IIIa),

worin

R für Wasserstoff oder Methyl steht und

$R^{23}$ für gegebenenfalls verzweigtes $C_1$- bis $C_{20}$-Alkyl oder für einen wenigstens eine weitere Acryleinheit enthaltenden Rest steht.

Im erfindungsgemäßen Verfahren eingesetzte Polyacrylate und Polymethacrylate enthalten dann vorzugsweise als wiederkehrende Einheiten solche der Formeln (Ia), vorzugsweise solche der Formeln (Ia) und (IIa) oder der Formeln (Ia) und (IIIa) oder solche der Formeln (Ia), (IIa) und (IIIa).

Es können auch mehrere der wiederkehrenden Einheiten der Formel (Ia) und/oder der wiederkehrenden Einheiten der Formeln (IIa) und/oder (IIIa) vorhanden sein.

Das Mengenverhältnis zwischen Ia, IIa und IIIa ist beliebig. Bevorzugt beträgt die Konzentration von Ia je nach Absorptionskoeffizienten von Ia zwischen 0,1 und 100 % bezogen auf das jeweilige Gemisch. Das Verhältnis zwischen Ia und IIa beträgt zwischen 100:0 und 1:99, bevorzugt zwischen 100:0 und 30:70, ganz besonders bevorzugt zwischen 100:0 und 50:50.

Die im erfindungsgemäßen Verfahren eingesetzten Polymere und Oligomere besitzen vorzugsweise Glasübergangstemperaturen Tg von mindestens 40°C. Die Glasübergangstemperatur kann beispielsweise nach B. Vollmer, Grundriß der Makromolekularen Chemie, S. 406-410, Springer-Verlag, Heidelberg 1962, bestimmt werden.

Die im erfindungsgemäßen Verfahren eingesetzten Polymere und Oligomere besitzen eine als Gewichtsmittel bestimmtes Molekulargewicht von 5.000 bis 2.000.000, vorzugsweise von 8.000 bis 1.500.000, bestimmt durch Gelpermeationschromatographie (geeicht mit Polystyrol).

Pfropfpolymere werden hergestellt durch radikalische Anbindung von Monomeren (Ia), die die Farbstoffgruppe der Formeln (I) tragen sowie gegebenenfalls zusätzlich von Monomeren (IIa), die die formanisotropen Gruppen der Formel (II) tragen und/oder egebenenfalls zusätzlich von Monomeren der Formel (IIIa) an oligo- oder polymere Grundsysteme. Solche Grundsysteme können die verschiedenartigsten Polymeren sein, z.B. Polystyrol, Poly(meth)acrylate, Stärke, Cellulose, Peptide. Die radikalische Anbindung kann erfolgen durch Bestrahlung mit Licht oder durch Verwendung von Radikale erzeugenden Reagenzien, z.B. Tert.-butylhydroperoxid, Dibenzoylperoxid, Azodisobutyronitril, Wasserstoffperoxid/Eisen(II)-salze.

Durch die Struktur der Polymeren und Oligomeren werden die zwischenmolekularen Wechselwirkungen der Strukturelemente der Formeln I untereinander oder der Formeln Ia und IIa untereinander so eingestellt, dass die Ausbildung flüssigkristalliner Ordnungszustände unterdrückt wird und optisch isotrope, transparente nichtstreuende Filme, Folien, Platten oder Quader hergestellt werden können. Andererseits sind die zwischenmolekularen Wechselwirkungen dennoch stark genug, dass bei Bestrahlung mit Licht ein photochemisch induzierter, kooperativer, gerichteter Umorientierungsprozeß der photochromen und der nicht photochromen Seitengruppen bewirkt wird.

Bevorzugt treten zwischen den Seitengruppen der wiederkehrenden Einheiten der Formel Ia oder zwischen denen der Formeln Ia und IIa Wechselwirkungskräfte auf, die ausreichen, dass die photoinduzierte Konfigurationsänderung der Seitengruppen der Formel I eine gleichgerichtete - sogenannte kooperative - Umorientierung der anderen Seitengruppen Ia und/oder II bewirkt.

Alle in dem erfindungsgemäßen Verfahren beanspruchten Polymere und Monomere sind ebenfalls Gegenstand der Erfindung. Weiterhin ist Gegenstand der Anmeldung die Verwendung dieser Stoffe in physikalischen Verfahren. Alle in der Anmeldung genannten Polymere, Oligomere und Monomere und deren Verwendung für DVD-Speicher, gegebenenfalls mit Doppelbrechung als Meßsignal sind ebenfalls Gegenstand der Anmeldung.

In den optisch isotropen amorphen photochromen Polymeren können extrem hohe Werte der optischen Anisotropie induziert werden ($\Delta n$ bis 0.4). Als optisch isotrop werden Polymerproben verstanden, die nicht optisch trüb sind, d.h. die bei Lichtstreuexperimenten mit Licht einer Wellenlänge im Bereich zwischen 380 und 820 nm keine merkliche Lichtstreuung aufweisen.

Hierunter wird verstanden, daß das Verhältnis zwischen der Summe der gestreuten Lichtintensität und der einfallenden Lichtintensität kleiner als $10^{-3}$, bevorzugt kleiner $10^{-4}$, besonders bevorzugt kleiner $10^{-5}$ und ganz besonders bevorzugt kleiner $10^{-6}$ ist.

Durch den Einfluß von aktinischem Licht werden in den Polymeren oder Oligomeren Ordnungszustände generiert und modifiziert und damit die optischen Eigenschaften moduliert.

Als Licht wird polarisiertes Licht verwendet, dessen Wellenlänge im Bereich der Absorptionsbande, vorzugsweise im Bereich der langwelligen n-$\pi^*$-Bande der wiederkehrenden Einheiten der Formel Ia liegt.

Die Herstellung der Polymeren und Oligomeren kann nach literaturbekannten Verfahren durchgeführt werden, beispielsweise nach DE-A 3 808 430, Makromolekulare Chemie **187**, 1327-1334 (1984), SU 887 574, Europ. Polym. 18, 561 (1982) und Liq. Cryst. **2**, 195 (1987).

Die Herstellung von Filmen, Folien, Platten und Quadern gelingt, ohne dass aufwendige Orientierungsverfahren unter Nutzung externer Felder und/oder von Oberflächeneffekten notwendig sind. Sie lassen sich durch Spincoaten, Tauchen, Gießen oder andere technologisch leicht beherrschbare Beschichtungsverfahren auf Unterlagen aufbringen, durch Pressen oder Einfließen zwischen zwei transparente Platten bringen oder einfach als selbsttragendes Material durch Gießen oder Extrudieren präparieren. Solche Filme, Folien, Platten und Quader lassen sich durch schlagartiges Abkühlen, d.h. durch eine Abkühlungsrate von >100 K/min, oder durch rasches Abziehen des Lösungsmittels auch aus flüssigkristallinen Polymeren oder Oligomeren herstellen, die Strukturelemente im beschriebenen Sinne enthalten.

Als Substratmaterialien sind optisch transparente Materialien geeignet, z.B. Glas oder Thermoplasten, bevorzugt Polycarbonat. Wird die Information nicht durch das Substrat, sondern durch die Schutzschicht eingeschrieben und ausgelesen, so muß das Substratmaterial nicht mehr die Forderung nach optischer Transparenz erfüllen.

Es kann auch zweckmäßig sein, die Abdeckschicht, die den lichtaktiven Polymerfilm gegen mechanische Beschädigungen schützt, in ihrer Massendichte fein an die Massendichte dieses Polymerfilms anzupassen, bevorzugt auf einen verbleibenden Unterschied von weniger als 0,5 g/cm$^3$, besonders bevorzugt auf weniger als 0,1 g/cm$^3$ und ganz besonders bevorzugt auf weniger als 0,05 g/cm$^3$. Wenn nämlich das Fließverhalten der Abdeckschicht geeignet optimiert ist, folgt diese Schicht der beim Einschreiben erzwungenen Topographieänderung der Grenzfläche zwischen Speichermedium und Abdeckschicht vollständig und es entstehen keinerlei Hohlräume im Interface. Dann aber existiert nach dem Einschreiben keinerlei rücktreibende Kraft, durch die die eingeschriebene Grenzflächen-Topographie wieder eingeebnet oder in anderer Weise verändert würde. Mit anderen Worten, die als Grenzflächen-Topographie eingeschriebene Information ist extrem lagerungsstabil.

Als optisches Meßsystem zum Auslesen der in das Speichermedium eingeschriebenen topographischen Information ist im Grundsatz jedes optische Abbildungssystem geeignet, dessen Bildhelligkeit stark von der Höhenkoordinate und/oder der lokalen Orientierung des abgebildeten Grenzflächenelementes abhängt. Z.B. können Messmethoden zum Einsatz gelangen, wie sie in optischen Profilometern z.B. der Fa. Rodenstock oder in konfokalen Laserscanning-Mikroskopen z.B. der Fa. Leica Mikrosysteme zu finden sind, wobei bei letzteren natürlich alle Bauelemente, die zum Scannen des Laserstrahls nötig sind, entfallen können.

Der Kontrastmechanismus kann sowohl auf dem Prinzip der Interferenz beruhen, zwischen Strahlungsanteilen die aus unterschiedlich tief liegenden Teilen des erfassten Probenflecks herrühren, als auch auf primär geometrisch-optischen Effekten, z.B. dem Neigungskontrast: Die stark gegenüber der Horizontalen geneigten Oberflächenanteile des erfassten Probenflecks lenken die reflektierte Strahlung in Raumwinkelbereiche, die von der Messoptik nicht mehr erfasst werden, und das Reflexionsbild der oberflächemodifizierten Probenstelle wird dunkel.

Die Medien, die dem beschriebenen Speicherverfahren unterzogen werden können, sind aus mindestens einem Substratmaterial (aus Kunststoffen, z.B. Polycarbonat, PMMA, cyclische Polyolefine, Polycarbonat-Copolymeren) etc. und mindestens einer funktionellen Deckschicht der beschriebenen funktionellen Speicherschicht aufgebaut. Zudem können sich zwischen den Substratschichten und den Funktionsschichten, sowie auf der Funktionsschicht noch zusätzliche nichtmetallische Zwischen-/Deckschichten befinden.

Es ist bereits in der Literatur beschrieben, dass es bei der Materialklasse der photoadressierbaren Polymere, zu denen auch die weiter oben beschriebenen Polymere gezählt werden können, beim Schreiben von holographischen Gittern Oberflächengitter erzeugt werden können (C.Barret. P. Rochon and A. Natansohn. *J. Chem. Phys.* **109** (4), 1505 (1998), D.Y. Kim, S.K. Tripathy, L.Li and J. Kumar, *Appl. Phys. Lett.* **66** (10), 1166 (1995), N. Holme, L. Nikolova, P.S. Ramanujam and S. Hvilsted, *Appl. Phys. Lett.* **70**, 1518 (1997)): Bei der Überlagerung zweier linear polarisierter Laserstrahlen resultiert ein Interferenzmuster. Befindet sich eine Probe an Stelle dieses Interferenzmusters, so können Polymere gefunden werden, die diesem Lichtmuster mit einer Modifikation der Oberfläche folgen.

Es muß als ausgesprochen überraschend bezeichnet werden, dass es gelingt, allein durch lokale Bestrahlung mit einem einzelnen stark fokussiertem Licht, der scannend über die Oberfläche geführt wird, die Oberflächentopographie lokal so stark zu verändern, dass sie danach mit einem optischen Meßsystem sicher ausgelesen werden kann, ohne dass die Funktionsschicht dabei zerstört wurde. Derartig hohe Kontraste waren bisher nur z.B. durch Laserablation bzw. durch Verdampfen von beispielsweise Farbstoffschichten in CD-R Anwendungen möglich.

Ausschlaggebend für die Funktionsfähigkeit des erfindungsgemäßen Verfahrens sind lichtinduzierte Reorientierungen der an das Polymerrückgrat befestigten Seitenketten. Bei Absorption der einfallenden Lichtquanten kommt es zu Konfigurationsänderungen der beteiligten und benachbarten Moleküle (Trans-Cis-Trans-Isomerisierungszyklen der Azofarbstoffe, kooperative Mitbewegung der angrenzenden mesogenen Gruppen). Die einfallende Lichtenergie wird also zu einem großen Teil dazu verwendet, dass die Moleküle sich in einer neuen Konfigurationslage einfinden. Die zudem während der Absorption freiwerdende Wärme scheint den Umlagerungseffekt zu unterstützen. Dadurch entstehen je nach Führung der Bestrahlung "wurst" oder "kugelartige" Aufwölbungen, die bei optimierter optischer Abtastung einen deutlichen neigungsbedingten lokalen Signalabfall erzeugen.

Das erfindungsgemäße Verfahren ermöglicht das Einschreiben digitaler Informationen z.B. auf CD-R-ähnliche Kunststoffscheiben mit ähnlichen Schreibgeschwindigkeiten und Speicherdichten wie bei der CD-R, aber mit dem Vorteil der gesicherten Langzeitstabilität, da die Lesbarkeit der eingeschriebenen Information nur durch eine äußere Beschädigung der Speicherplatte beeinträchtigt werden kann. Eine Veränderung der eingeschriebenen Strukturierung in der Oberflächentopographie ist nur durch Erwärmen dieser Schicht bis in die Nähe ihrer Glastemperatur möglich. Durch die Polymerarchitektur liegt die Glastemperatur deutlich über 100°C, vorzugsweise über 150°C, so dass durch sachgemäße Lagerung der Speicherplatte ein thermisches Löschen vermieden werden kann.

Ein weiterer Vorteil des erfindungsgemäßen Verfahrens ist der gegenüber den bisher kommerziell genutzten Verfahren deutlich verbesserte Signalhub beim optischen Auslesen der Information. Wie bereits weiter oben beschrieben, ist der Signalhub so groß, dass beispielsweise der Verwendung eines konfokalem Ausleseverfahrens auf eine zusätzliche Reflexionsschicht verzichtet werden kann.

Die Erfindung beschreibt dementsprechend ein Speicherverfahren, bei dem ein Speichermedium, bestehend aus mindestens einer Substratschicht und mindestens einer Aufzeichnungsschicht durch einen fokussierten Laserstrahl, der beispielsweise im Dauerstrich-, oder Pulsbetrieb scannend über die Probenoberfläche geführt werden kann und der je nach Schichtaufbau bei Mehrfachschichten auf die jeweilige Funktionsschicht fokussiert werden kann, zur Speicherung von digitaler binärer, oder nichtbinärer Information unterzogen werden kann. Alternativ kann auf das Scannen des Lasers verzichtet werden, falls auf eine andere Weise für eine Relativbewegung zwischen Medium und Laserspot, beispielsweise durch ein Rotieren des Mediums, gesorgt wird.

Die Schichtdicke der Funktionsschicht liegt je nach der spezifischen Absorption (Extinktion pro Schichtdicke) der Schicht in einem Bereich zwischen 0,05 und 100 μm, bevorzugt zwischen 0,1 und 10 μm und ganz besonders bevorzugt zwischen 0,1 und 2 μm. Die Schichtdicke kann entweder aus der in einem vorausgegangenen Messvorgang bestimmten spezifischen Absorption und der Extinktion der Funktionsschicht oder mechanisch (durch Beschädigung der Schicht und Abtasten mit einem Profilometer,z.B. Firma Tencor) bestimmt werden.

Die Schichtdicke der mindestens einen Schutzschicht liegt in einem Bereich zwischen 0,1 und 1000 μm, bevorzugt zwischen 0,1 und 100 und äußerst bevorzugt zwischen 0,5 und 10 μm.

Bei der Wellenlänge des Lasers, der zum Einschreiben der Oberflächentopographie verwendet wird, befindet sich die optische Dichte der Funktionsschicht in einem Bereich zwischen 0,3 und 20, bevorzugt zwischen 0,5 und 10, besonders bevorzugt zwischen 0,7 und 8 und ganz besonders bevorzugt zwischen 1 und 5.

Die Intensität des Lasers, der zum Schreiben verwendet wird, liegt im Bereich der Leistungen kommerzieller Laserdioden: Es werden Intensitäten zwischen 150 μ W und 100 mW, bevorzugt zwischen 500 μW und 50 mW, besonders bevorzugt zwischen 750 μ W und 30 mW und ganz besonders bevorzugt zwischen 1 mW und 20 mW, verwendet. Wird der gleiche Laser auch zum Lesen eingesetzt, so muß dessen Intensität geringer sein, als die Intensität beim Schreiben, bevorzugt um einen Faktor 10, besonders bevorzugt um einen Faktor 100 und ganz besonders bevorzugt um einen Faktor 1000.

Wird zum Lesen der Information ein Laser gewählt, dessen Wellenlänge nicht im Absorptionsbereich der Farbstoffe der Polymere liegt, so kann die Leistungsdichte des Lesestrahls sogar höher sein als die des Schreiblasers. Da die maximal zulässige Lesegeschwindigkeit bei den aktuell kommerziellen Systemen bereits durch das Quantenrauschen des Messsignals begrenzt ist, bedeutet dies, dass man bei dem erfindungsgemäßen System die Lese-

schwindigkeit durch den Einsatz eines leistungsstarken Leselasers deutlich erhöhen kann.

Je nach Wellenlänge des verwendeten Lasers erfolgt die Fokussierung des Laserstrahls durch kommerzielle bzw. speziell optimierte Linsensysteme und Objektive. Die Ausdehnung des Laserstrahls (volle Halbwertsbreite) liegt in einem Bereich zwischen 300 nm und 8 $\mu$m, bevorzugt zwischen 300 nm und 950 nm, besonders bevorzugt zwischen 350 nm und 800 nm und ganz besonders bevorzugt zwischen 380 nm und 650 nm.

Ferner ist dieser Effekt auch im optischen Nahfeld zu realisieren. In diesem Fall beträgt die Ausdehnung kleiner als 100 nm, bevorzugt kleiner 50 nm, ganz besonders bevorzugt kleiner 10 nm.

Im neuen Verfahren wird als Änderung der Oberflächentopographie der lichtaktiven Schicht des Speichermediums eine Vertiefung bevorzugt von mindestens 50 nm und ganz besonders bevorzugt von mindestens 100 nm erzeugt.

Die im Verfahren erzeugte Vertiefung im Speichermedium weist eine an der ursprünglichen Oberfläche gemessene Breite in einer Richtung von weniger als 10 Mikrometer, bevorzugt von weniger als 5 Mikrometer und ganz besonders bevorzugt von weniger als 1 Mikrometer auf.

Im bevorzugten erfindungsgemäßen Verfahren wird ein Signalhub im Speichermedium von mindestens Carrier/noise = 20 dB, besonders bevorzugt von mindestens 40 dB und ganz besonders bevorzugt von mindestens 60 dB eingeschrieben.

Carrier Noise ratio ist wie folgt definiert: C/N = 20 log ($I_{Signal}/I_{Rauschen}$, wobei $I_{Signal}$ = gemessenes Detektionssignal und $I_{Rauschen}$ = Rauschlevel bedeutet.

Die Führung des fokussierten Laserstrahls geschieht beispielsweise durch Ablenkung des Laserstrahls durch einen Spiegel mit kontrollierbarer und steuerbarer Winkelstellung (Scanoptik) oder durch die Drehung des Substrates unter dem fokussierten Laserspot. Die Relativgeschwindigkeit zwischen Medium und Laserspot liegt in einem Bereich zwischen 0,01 m/s und 600 m/s, bevorzugt zwischen 0,2 m/s und 100 m/s, besonders bevorzugt zwischen 0,5 m/s und 75 m/s und ganz besonders bevorzugt zwischen 1 m/s und 60 m/s.

Zur Detektion der lichtinduzierten Oberflächenmodifikation kann beispielsweise der identische Aufbau herangezogen werden, der auch zum Schreiben verwendet wurde. Hierzu kann beispielsweise die Leistungsdichte des Schreiblasers reduziert werden. Alternativ kann beispielsweise auch eine andere Laserquelle verwendet werden, bevorzugt Laser, die langwelliger emittieren als die Schreiblaser. Bevorzugt sind hier Lesewellenlängen zu nennen, die mindestens 20 nm, besonders bevorzugt 50 nm und ganz besonders bevorzugt größer als 100 nm sind als die Schreibwellenlängen.

An flächenhaften Gebilden können in einem geeigneten Recorder-Aufbau dynamische Belichtungsexperimente durchgeführt werden. Dabei werden Lichtimpulse eines auf die Aufzeichnungsschicht fokussierten Lasers (des sog. Schreiblasers) verwendet, um lokal auf einer Kreis-, oder Spiralspur Informationen einzuschreiben. Die Wellenlänge des Schreiblasers liegt im Absorptionsbereich der Farbstoffinoleküle des Auf zeichnungsmaterials, bevorzugt bei Wellenlängen zwischen $\lambda$ = 380 nm und $\lambda$ = 820 nm, besonders bevorzugt bei Wellenlängen zwischen $\lambda$ = 385 nm und $\lambda$ = 780 nm und ganz besonders bevorzugt bei Wellenlängen zwischen $\lambda$ = 385 nm und $\lambda$ = 660 nm.

Das mit dem Aufzeichnungsmaterial beschichtete Substrat dreht sich mit 60 bis 60000 U $min^{-1}$, bevorzugt mit 100 bis 10000 U $min^{-1}$, besonders bevorzugt zwischen 200 und 1000 U $min^{-1}$. Bei einer Pulsdauer des Schreiblasers von 4 ns bis 10 $\mu$s, bevorzugt von 10 ns bis 1 $\mu$s werden die Pulse in räumlichen Abständen von 0,3 bis 50 $\mu$m, bevorzugt von 0,3 bis 10 $\mu$m auf die Aufzeichnungsschicht gesetzt.

Die Ausgangsleistung des modulierbaren Schreiblasers liegt im Bereich von 0,15 bis 100 mW, bevorzugt zwischen 0.5 und 50 mW, besonders bevorzugt zwischen 0.75 und 30 mW und ganz besonders bevorzugt zwischen 1 mW und 20 mW. Der Schreibstrahl wird auf die Aufzeichnungsschicht fokussiert, die aus der Lösung auf ein verspiegeltes Substrat aufgebracht wurde. Der Fokus-Durchmesser beträgt 0,30 bis 8 $\mu$m, bevorzugt 0,30 bis 0.95 $\mu$m, besonders bevorzugt 350 nm bis 800 nm und ganz besonders bevorzugt 380 nm bis 650 nm. Im Nahfeld ist der Fokus kleiner 100 nm, bevorzugt kleiner 50 nm, ganz besonders bevorzugt kleiner als 10 nm. Im Lichtfokus werden Leistungsdichten bis zu 100 $MW/cm^2$ erreicht. Die Energiedichte eines Pulses liegt im Bereich von 1 $mJ/cm^2$ bis 100 $J/cm^2$. Die Polarisation des Schreiblasers wird durch übliche Polarisationselemente (Quarzoptik, LC-Elemente) vorgegeben und ist i.a. linear oder zirkular polarisiert, bevorzugt linear polarisiert.

Ein geeigneter Modulator setzt eine computergenerierte Spannungspulsfolge in ein Intensitätsmuster um, das die im Aufzeichnungsfilm vorhandene Anisotropie lokal in Stufen ändert.

Es wurde experimentell beobachtet, dass die Lichtpulse des Schreiblasers energieabhängig unterschiedliche Wirkungen auf die Polymerschicht haben:

1. Für kleine Pulsenergien werden durch die Lichtpulse Änderungen in der Höhe der Doppelbrechung des Aufzeichnungsmaterials induziert, wie bereits in Le A 31 135 beschrieben. Diese Änderungen in der molekularen Orientierungsverteilung sind photonisch und/oder thermisch induziert.

2. Mit steigender Pulsenergie wurde festgestellt, dass das Licht des Schreiblasers eine zweite Wirkung auf die Aufzeichnungsschicht hat: Überraschenderweise kommt es zu einer Modifikation der Oberfläche des Aufzeichnungsmaterials. Der Laserpuls generiert eine kraterartige Form mit einer zentralen Vertiefung und Randaufhäufungen. Diese Oberflächenstruktur hat maximale laterale Ausdehnungen, die den Fokusdurchmesser um 10 bis 30 % übertreffen. Die Profiltiefe nimmt mit der Pulsenergie zu und kann bis nahe an die Schichtdicke heranreichen, typischerweise bis zu 60 % bis 80 % der Schichtdicke.

Die Schwelle für die Energiedichte eines Lichtpulses, bei der die in Punkt 2 beschriebenen Oberflächeneffekte die typische Rauhigkeit einer Oberfläche der Aufzeichnungsschicht von 2 bis 6 nm übersteigen, liegt zwischen 10 $mJ/cm^2$ und 100 $J/cm^2$, bevorzugt zwischen 20 $mJ/cm^2$ und 10 $J/cm^2$, und besonders bevorzugt zwischen 50 $mJ/cm^2$ und 1 $J/cm^2$.

Als Aufzeichnungsmedium wird ein Schichtaufbau verwendet, der aus mindestens einer Substratschicht und mindestens einer Aufzeichnungsschicht besteht.

Die Präparation der Speichermedien erfolgt beispielsweise durch Spincoating einer Lösung des Polymers auf ein Substratmaterial. Hierzu werden übliche Lösungsmittel, wie THF, DMF herangezogen.

Die Erfindung beschreibt auch einen Einsatz derartig behandelter flächenhafter Gebilde im Bereich der optischen Bauelemente, beispielsweise als diffraktive Elemente.

Im erfindungsgemäßen Verfahren ist weiterhin die Verwendung von Polymeren bevorzugt, die mindestens eine Seitenkette der Formel (I) enthalten,
worin
$-(X^{3'}-Ar^3)_z-X^4$ für einen Rest der Formel

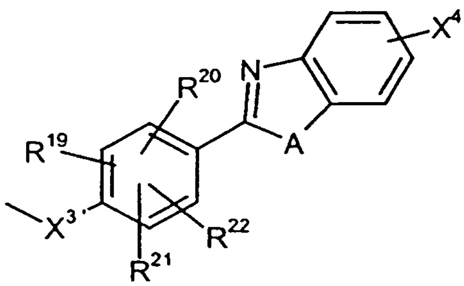

steht,

$X^{3'}$ für -N=N- oder -CO-NH- steht

und die anderen Reste die oben aufgeführten allgemeinen, bevorzugten und besonders bevorzugten Bedeutungen besitzen.

Bevorzugt stehen

| | |
|---|---|
| $X^{3'}$ | für -N=N- oder -CO-NH-, |
| $X^4$ | für Wasserstoff oder Methyl, |
| A | für S, |
| $R^{19}$ bis $R^{22}$ | unabhängig voneinander für Wasserstoff, Methyl oder Methoxy |

und die anderen Reste besitzen die oben aufgeführten allgemeinen, bevorzugten und besonders bevorzugten Bedeutungen.

Im erfindungsgemäßen Verfahren ist weiterhin die Verwendung von Polymeren bevorzugt,
die mindestens eine Seitenkette der Formel (I) enthalten,
worin
$-(X^{3'}-Ar^3)_z-X^4$ für einen Rest der Formel

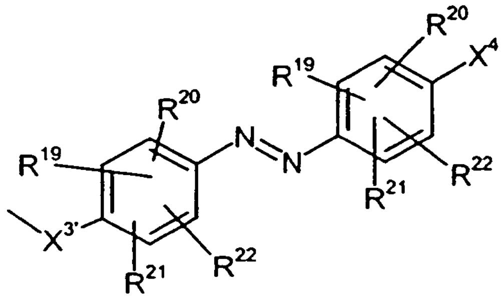

steht,

$X^{3'}$ für -O-, -($SO_2$)-, -(C=O)-, (N-$R^5$)-, -(CO-$NR^5$)- oder C($R^6R^7$)- steht

und die anderen Reste die oben aufgeführten allgemeinen, bevorzugten und besonders bevorzugten Bedeutungen besitzen.

Bevorzugt stehen

$X^{3'}$ für -O-, -($SO_2$)- oder -(N-$R^5$)-,

$x^4$ für Wasserstoff, $C_1$- bis $C_4$-Alkoxy, Di-$C_1$- bis $C_4$-alkyl-amino, $C_1$- bis $C_4$-Alkanoylamino, Benzoylamino, Cyano oder Nitro,

$R^{19}$ bis $R^{22}$ unabhängig voneinander für Wasserstoff, Methyl, Methoxy oder Cyano

und die anderen Reste besitzen die oben aufgeführten allgemeinen, bevorzugten und besonders bevorzugten Bedeutungen.

Im erfindungsgemäßen Verfahren ist weiterhin die Verwendung von Polymeren bevorzugt, die mindestens eine Seitenkette der Formel (I) enthalten,
worin
-($X^{2'}$-$Ar^2$)$_y$- für einen bivalenten Rest der Formel

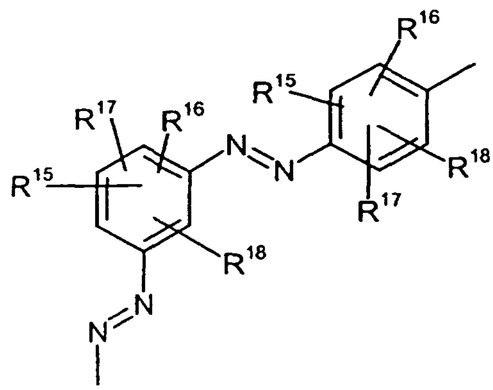

steht
und die anderen Reste die oben aufgeführten allgemeinen, bevorzugten und besonders bevorzugten Bedeutungen besitzen.

Bevorzugt stehen

$R^{15}$ bis $R^{18}$ unabhängig voneinander für Wasserstoff, Methyl, Methoxy oder Cyano, wobei die Bedeutung in den beiden Ringen unterschiedlich sein kann.

Im erfindungsgemäßen Verfahren ist weiterhin die Verwendung von Polymeren bevorzugt, die mindestens

eine Seitenkette der Formel (I) enthalten,
worin
$-(X^{1'}-Ar^1)-X^{2'}-$ für einen bivalenten Rest der Formel

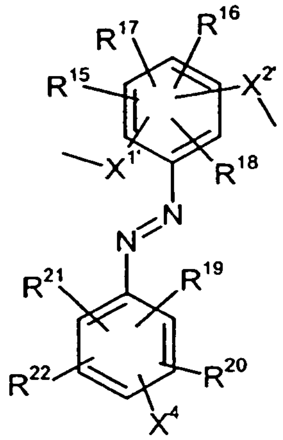

steht,
wobei $X^{1'}$ und $X^{2'}$ in m- oder p-Stellung zueinander stehen und $X^{1'}$ und die Azogruppe in o- oder p-Stellung zueinander stehen,
und die anderen Reste die oben aufgeführten allgemeinen, bevorzugten und besonders bevorzugten Bedeutungen besitzen.

Bevorzugt stehen

$X^1$, für einen Rest der Formel

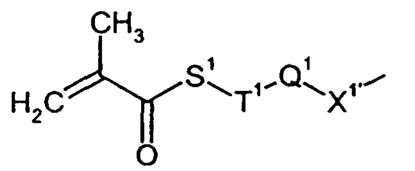

,

insbesondere für eine Rest der Formeln

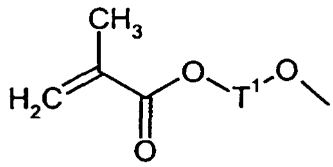

,

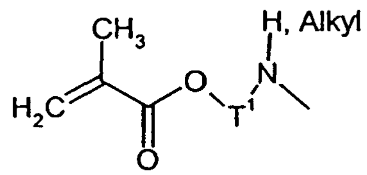

,

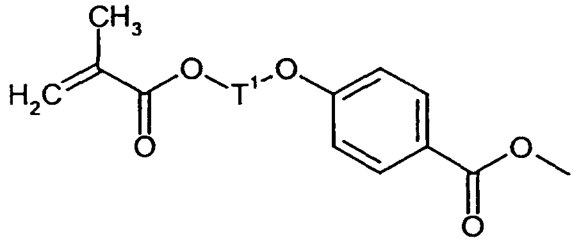

oder

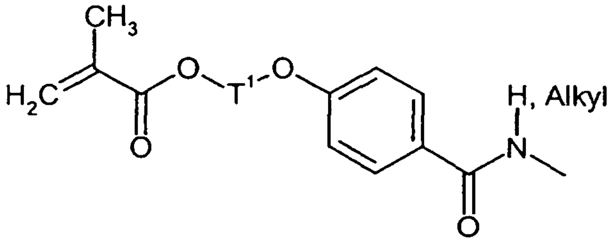

,

$X^{2'}$ für -N=N- oder -CO-NH-,

$X^4$ für Wasserstoff, $C_1$- bis $C_4$-Alkoxy, Di-$C_1$- bis $C_4$-alkyl-amino, $C_1$- bis $C_4$-Alkanoylamino, Benzoylamino, Cyano oder Nitro, wobei $X^4$ besonders bevorzugt in p-Stellung zur Azo-Gruppe steht,

$R^{15}$ bis $R^{12}$ unabhängig voneinander für Wasserstoff, Methyl, Methoxy oder Cyano, wobei einer der Reste $R^{19}$ bis $R^{22}$ für einen Rest der Formel

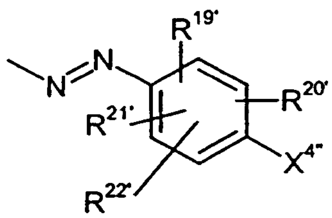

stehen kann, der besonders bevorzugt in m- oder p-Stellung zur Azogruppe steht,

worin

$X^{4"}$ für Wasserstoff, $C_1$- bis $C_4$-Alkoxy, Di-$C_1$- bis $C_4$-alkyl-amino, $C_1$- bis $C_4$-Alkanoylamino, Benzoylamino, Cyano oder Nitro steht und

$R^{19'}$ bis $R^{22'}$ unabhängig voneinander für Wasserstoff, Methyl, Methoxy oder Cyano stehen, und

$S^1$, $T^1$ und $Q^1$ die oben angegebene allgemeine, bevorzugte und besonders bevorzugte Bedeutung besitzen.

Im erfindungsgemäßen Verfahren werden die folgenden Monomere der Formel (Ia),
worin
-$(X^{3'}$-$Ar^3)_z$-$X^4$ für einen Rest der Formel

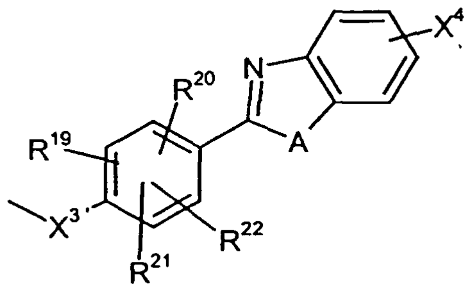

steht,

$x^{3'}$ für -N=N- oder —CO-NH- steht

und die anderen Reste die oben aufgeführten allgemeinen, bevorzugten und besonders bevorzugten Bedeutungen besitzen,
zur Herstellung von Polymeren der Formel (I) verwendet.

Bevorzugt stehen

$X^3$ für -N=N- oder -CO-NH-,
$X^4$ für Wasserstoff oder Methyl,
A für S,
$R^{19}$ bis $R^{22}$ unabhängig voneinander für Wasserstoff, Methyl oder Methoxy

und die anderen Reste besitzen die oben aufgeführten allgemeinen, bevorzugten und besonders bevorzugten Bedeutungen.

Im erfindungsgemäßen Verfahren werden die folgenden Monomere der Formel (Ia), worin $-(X^{3'}-Ar^3)_z-X^4$ für einen Rest der Formel

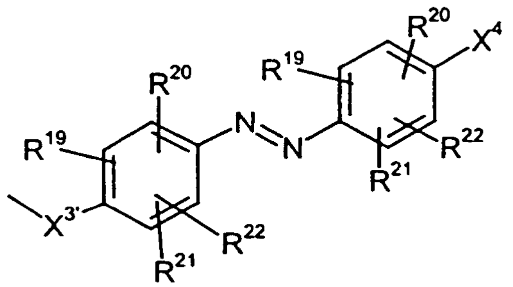

steht,

$X^{3'}$ für-O-, $-(SO_2)-$, -(C=O)-, $-(N-R^5)-$, $-(CO-NR^5)-$ oder $C(R^6R^7)-$ steht

und die anderen Reste die oben aufgeführten allgemeinen, bevorzugten und besonders bevorzugten Bedeutungen besitzen,
zur Herstellung von Polymeren der Formel (I) verwendet

Bevorzugt stehen

$X^{3'}$ für -O-, $-(SO_2)-$ oder $-(N-R^5)-$,

$X^4$ für Wasserstoff, $C_1$- bis $C_4$-Alkoxy, Di-$C_1$- bis $C_4$-alkyl-amino, $C_1$- bis $C_4$-Alkanoylamino, Benzoylamino, Cyano oder Nitro,

$R^{19}$ bis $R^{22}$ unabhängig voneinander für Wasserstoff, Methyl, Methoxy oder Cyano

und die anderen Reste besitzen die oben aufgefiihrten allgemeinen, bevorzugten und besonders bevorzugten Bedeutungen.

Im erfindungsgemäßen Verfahren werden die folgenden Monomere der Formel (Ia), worin $-(X^{2'}-Ar^2)_y-$ für einen bivalenten Rest der Formel

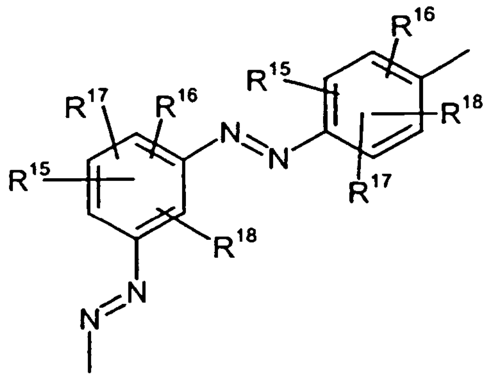

steht
und die anderen Reste die oben aufgeführten allgemeinen, bevorzugten und besonders bevorzugten Bedeutungen besitzen,
zur Herstellung von Polymeren der Formel (I) verwendet

Bevorzugt stehen

$R^{15}$ bis $R^{18}$ unabhängig voneinander für Wasserstoff, Methyl, Methoxy oder Cyano, wobei die Bedeutung in den beiden Ringen unterschiedlich sein kann.

Im erfindungsgemäßen Verfahren werden die folgenden Monomere der Formel (Ia), worin $-(X^{1'}-Ar^1)-X^{2'}-$ für einen bivalenten Rest der Formel

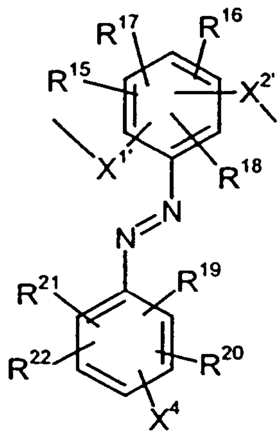

steht,
wobei $X^{1'}$ und $X^{2'}$ in m- oder p-Stellung zueinander stehen und $X^{1'}$ und die Azogruppe in o- oder p-Stellung zueinander stehen,
und die anderen Reste die oben aufgeführten allgemeinen, bevorzugten und besonders bevorzugten Bedeutungen besitzen,
zur Herstellung von Polymeren der Formel (I) verwendet

Bevorzugt stehen

$X^{1'}$ für einen Rest der Formel

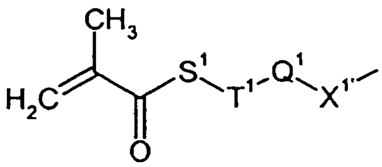

,

insbesondere für eine Rest der Formeln

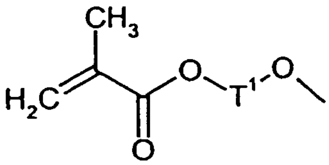

,

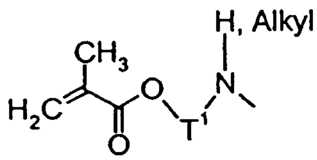

,

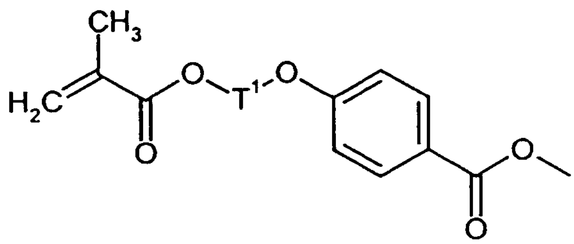

oder

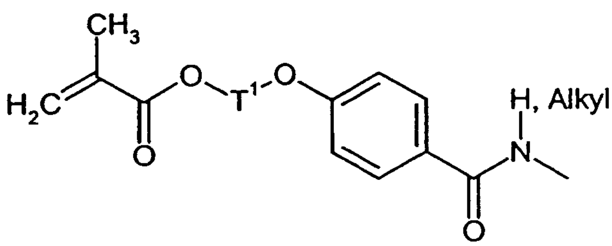

,

$X^{2'}$ für -N=N- oder -CO-NH-,

$X^4$ für Wasserstoff, $C_1$- bis $C_4$-Alkoxy, Di-$C_1$- bis $C_4$-alkyl-amino, $C_1$- bis $C_4$-Alkanoylamino, Benzoylamino, Cyano oder Nitro, wobei $X^4$ besonders bevorzugt in p-Stellung zur Azo-Gruppe steht,

$R^{15}$ bis $R^{22}$ unabhängig voneinander für Wasserstoff, Methyl, Methoxy oder Cyano, wobei einer der Reste $R^{19}$ bis

$R^{22}$ für einen Rest der Formel

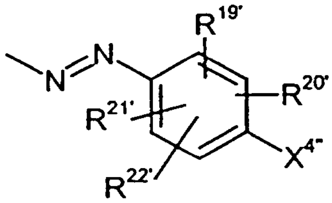

stehen kann, der besonders bevorzugt in m- oder p-Stellung zur Azogruppe steht,

worin

$X^{4''}$ für Wasserstoff, $C_1$- bis $C_4$-Alkoxy, Di-$C_1$- bis $C_4$-alkyl-amino, $C_1$- bis $C_4$-Alkanoylamino, Benzoylamino, Cyano oder Nitro steht und

$R^{19'}$ bis $R^{22'}$ unabhängig voneinander für Wasserstoff, Methyl, Methoxy oder Cyano stehen, und

$S^1$, $T^1$ und $Q^1$ die oben angegebene allgemeine, bevorzugte und besonders bevorzugte Bedeutung besitzen.

Das erfindungsgemäße Verfahren wird durch die nachfolgenden Beispiele näher erläutert.

## Beispiele

### Beispiel 1

**Dynamische Schreibexperimente in einem angepaßtem Recorderaufbau**

Mit einem weiter unten beschriebenen Recorder wurden dynamische Belichtungsexperimente an einem verspiegelten, mit einer (250±30) nm dicken Schicht aus Polymeren der Formel

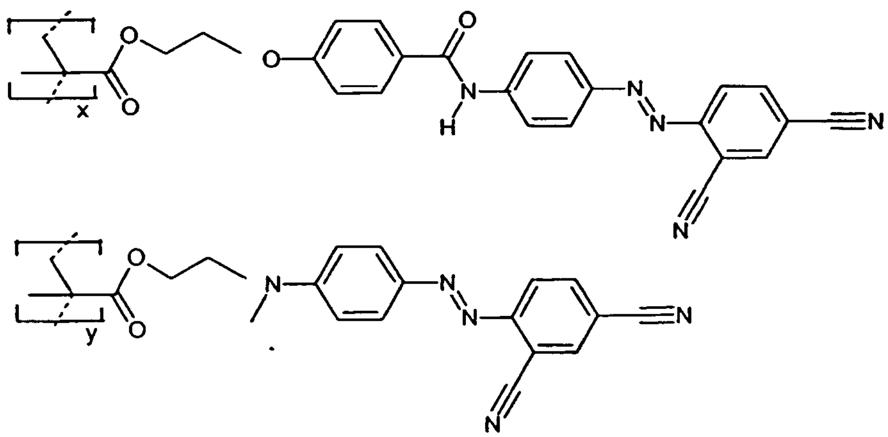

benetzten Substrat vollautomatisiert durchgeführt. In die Aufzeichnungsschicht wurde mit einer (Vorrichtung genau beschreiben) flächig eine Doppelbrechung von 0,1 eingeschrieben, wobei die Polarisationsrichtung der Vorbelichtung 45° zum Radius einnahm. Das Substrat drehte sich mit 600 U $min^{-1}$. Bei einer Pulsdauer von 10 $\mu$s und einem computergesteuert einstellbaren Spurradius von 1,6 cm bis 4,9 cm hatten dann die Speicherplätze Abstände von 10 bis 35 $\mu$m.

Als Schreiblaser wurde ein diodengepumpter Nd:YAG-Laser (Fa. Coherent) eingesetzt, dessen zweite Harmonische (Wellenlänge 532 nm) einen akustooptischen Modulator (Fa. Isomet) durchlief und über eine Faser in den Recorder eingekoppelt wurde. Die Austrittsleistung nach der Faser betrug maximal 18 mW. Alternativ könnte auch eine LASER-Diode verwendet werden, die direkt moduliert wird und auf diese Weise verschieden intensive LASER-Pulse generiert. Der Schreibstrahl durchlief einen dichroitischen Strahlteiler und wurde auf die Aufzeichnungsschicht fokussiert.

Der Fokusdurchmesser betrug (7±1) µm. Die Pulsenergie wurde in 1000 äquidistanten Stufen von 0,1 bis 100 J/cm$^2$ computergesteuert variiert. Der Schreiblaser war 45° zur Radialrichtung und 90° zur Vorbelichtungsrichtung der PAP-Schicht polarisiert. Der akustooptische Modulator setzte eine computergenerierte Spannungspulsfolge in ein Intensitätsmuster um, das die im Polymerfilm vorhandene Anisotropie lokal graduell löschte.

Im Recorder wurde eine Halbleiter-Laserdiode (Leselaser) der Wellenlänge 670 nm (Leistung 20 mW) über den dichroitischen Strahlteiler seitlich in den Schreibstrahlengang eingekoppelt und auf die informationstragende Spur der Aufzeichnungsschicht fokussiert. Der Fokusdurchmesser betrug 11 µm. Das Licht des Leselasers wurde an der Aluminiumschicht des Substrates reflektiert und durchlief die Aufzeichnungsschicht doppelt. Ein polarisationsabhängiger Strahlteiler koppelte die depolarisierten Anteile des zurücklaufenden Lichts seitlich aus, so dass es von einer Photozelle detektiert werden konnte. Die Graustufen wurden über eine Elektronik mit Hochpaß-Glied sichtbar gemacht. Die Höhe der Intensitätsstufe wurde über die Energie des jeweiligen Schreibpulses eingestellt.

Es wurde beobachtet, dass es mit steigender Pulsenergie zu einer Modifikation der Oberfläche der Aufzeichnungsschicht kam. Die kraterartige Form, die der Laserpuls hervorrief, hatte eine Ausdehnung von 9 µm in Radialrichtung. Die Profiltiefe nahm mit der Pulsenergie zu. Bis zu Pulsenergien von 10 J/cm$^2$ (Intensität 1 MW/cm$^2$) hatten die Modifikationen ein Ausmaß von maximal 3 nm. Dies entspricht der typischen Rauhigkeit einer aus Lösung aufgeschleuderten Polymerschicht. Die Modifikation der Aufzeichnungsschicht war bei der maximal verfügbaren Energie von 100 J/cm$^2$ (Intensität 10 MW/cm$^2$) so stark, dass ihre Form mit einem Atomkraftmikroskop (AFM) gut aufgelöst werden konnte. Die zentrale Vertiefung belief sich auf (70±10) nm. Am Rand waren (30±5) nm hohe Aufhäufungen zu sehen.

## Beispiel 2

### Funktionsfähigkeit der Einschreib- und Ausleseprozesse

Die Funktionsweise des beschriebenen Speicherverfahrens kann beispielsweise mit einem konfokalen Laserscanning Mikroskop (CLSM) gezeigt werden. In diesem Beispiel wurde ein kommerzielles Gerät der Firma Leica (Gerät TCS/NT) verwendet. Bei diesem CLSM handelt es sich um ein Mikroskop, bei dem der Laser ferner mit Hilfe eines AOM moduliert bzw. gepulst werden kann. Die kontrasterzeugenden Mechanismen wurden mit Hilfe von REM- und AFM-Untersuchungen aufgedeckt und mit dem konfokalen Kontrast des CLSM's verglichen. Das CLSM wurde mit einem 16$^{er}$ Objektiv betrieben. Zum Einschreiben der Information wurde eine Wellenlänge von 488 nm benutzt. Die Leistung auf der Probenoberfläche betrug 150 µW, der Durchmesser des Laserflecks 940 nm. Hieraus errechnete sich die Leistungsdichte am Probenort zu:

$$P = 2{,}16 \times 10^7 \text{ mW/cm}^2$$

Die Dauer für das Scannen einer Linie betrug 2,2 ms, wovon 0,77 ms zum eigentlichen Scannen der Linie benötigt wurden (Rest: Umkehrpunkte, Rücklauf, etc.). Die laterale Ausdehnung der Linie konnte durch die Wahl des Gesichtsfeldes festgelegt werden, wobei das kleinste Gesichtsfeld 20 µm betrug. Bei einer Vergrößerung des Gesichtsfeldes bleibt sowohl die Zeit, die für das Abscannen einer Linie benötigt wird (0,77 ms), als auch die Leistungsdichte auf der Probe erhalten, es wird lediglich der Scanbereich, also die Länge der Linie, erweitert. Es kommt also zu einer Erhöhung der Scangeschwindigkeit, was effektiv eine Verringerung der Verweilzeit des Lasers an einer speziellen Polymerstelle bedeutet.

Zum Einschreiben wurde der Argonlaser (488 nm) mittels eines AOM innerhalb der gescannten Linie mehrfach ein- und ausgeschaltet. Das Abscannen der Linie konnte bei aufeinanderfolgenden Experimenten mit hoher Präzision wiederholt werden, ohne die Positionen der einzelnen Pixel deutlich zu verschmieren.

Die Detektion der geschriebenen Linien erfolgte mit einem HeNe-Laser. Dieser Laser hat zum einen den großen Vorzug, dass er aufgrund seiner Wellenlänge außerhalb der Absorption der Polymere lediglich diffraktive, keine absorbierenden Beiträge zum detektierten Signal liefert. Zum Anderen vermag diese Wellenlänge keine nennenswerten molekularen Reorientierungen zu induzieren, womit sichergestellt wird, dass die gemessenen Kontrastverhältnisse einzig durch die Bestrahlung mit dem Argonlaser hervorgerufen wurden.

Als Probe wurde eine ca. 1 µm dicke Probe des Polymers

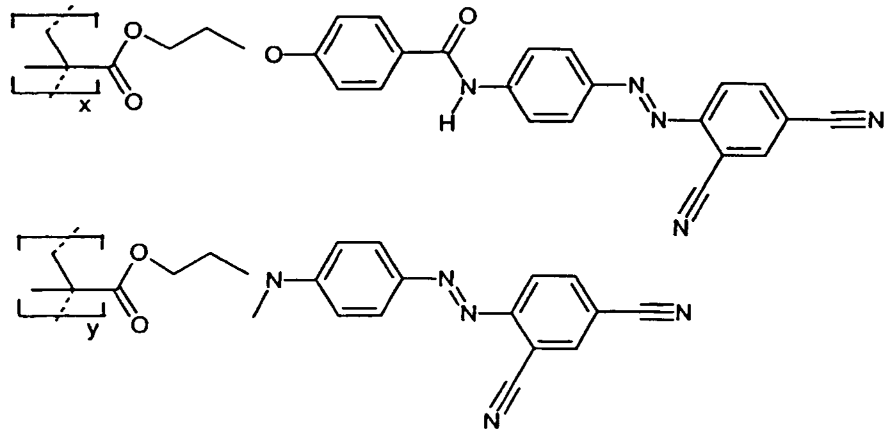

verwendet.

Für das erfindungsgemäße Verfahren ist die Ausbildung dieser Oberflächenmodifikation der eigentliche kontrasterzeugende Mechanismus.

**Beispiel 3**

**Lagerstabilität**

Die Probe, in der in Beispiel 1 eine Oberflächenmodifikation geschrieben wurde, wurde für 1 Monat bei 160°C gelagert. Nach dieser Lagerung wurde die Probe erneut im konfokalen Mikroskop untersucht. Die zuvor eingeschriebene Oberflächenmodifikation war unverändert sowohl im CLSM als auch im AFM zu beobachten.

**Beispiel 4**

**Vergleich mit konfokalem Kontrast bei CD-R**

Eine kommerzielle CD-R (Firma KODAK, digital science CD-R, 650 MB, 74 min) wurde mit einem handelsüblichen CD-Brenner (Firma TEAC, CD-R55SK, CDwriter) beschrieben. Die beschriebene CD wurde in einem CLSM der Firma LEICA (TCS/NT) mit einer Wellenlänge von 632 nm in einem Gesichtsfeld von 20 $\mu$m x 20 $\mu$m untersucht. Hierbei waren deutlich die eingeschriebenen Pits zu erkennen. Der Unterschied der im konfokalen Reflexionsmodus gemessenen Intensitätswerte zwischen unbeschriebenen und beschriebenen Bereichen wurde mit dem Unterschied der Intensitäten längs der in Beispiel 1 eingeschriebenen Oberflächentopographien verglichen: Unter identischen Einstellungen war der konfokale Kontrast der in Beispiel 1 beschriebenen Oberflächentopographien um einen Faktor 2 bis 3 größer als der Kontrast entlang der Pits der gebrannten CD.

**Beispiel 5**

**Belichtung durch Deckschicht**

Auf eine wie im Beispiel 1 beschrieben hergestellte Probe wurde ein ca. 10 $\mu$m dicker UV-härtender Decklack (Firma BAYER, Roskydal 2265, durch Spincoating mit 3000 U/min aufgebracht) auf das Polymer gebracht und für 15 Sekunden unter einer handelsüblichen Lampe zur Aushärtung von UV-Lacken ausgehärtet. Danach wurde in die Probe wie im Beispiel 1 beschrieben eine Doppelbrechnung einbelichtet und danach ebenfalls wie im Beispiel 1 beschrieben eine Pulsfolge eingeschrieben. Konfokale Untersuchungen zeigten, dass trotz des Decklackes die in Beispiel 1 beschriebenen Oberflächentopographien zu beobachten waren und zwar ohne, dass an der Grenzfläche zwischen Speichermedium und Deckschicht Hohlräume, Blasen oder ähnliche Störungen auftraten.

**Patentansprüche**

1. Verfahren zum optischen Einschreiben optisch auslesbarer digitaler Informationen in ein flächig ausgedehntes

Speichermedium **dadurch gekennzeichnet, dass** das Licht zum Schreiben eine Intensität zwischen 150 μW und 100 mW besitzt, auf Spots einer Ausdehnung (volle Halbwertsbreite) in einem Bereich zwischen 10 nm und 8 μm fokussiert wird, die Energiedichte eines Lichtpulses zwischen 10 $mJ/cm^2$ und 100 $J/cm^2$ liegt, wobei durch den optischen Einschreibprozess die Oberflächentopographie des Speichermediums für den optischen Ausleseprozess geeignet und ausreichend derart modifiziert wird, dass eine Vertiefung von mindestens 10 nm und eine an der ursprünglichen Oberfläche gemessene Breite in einer Richtung von weniger als 10 μm erzielt wird, und als lichtaktiver Polymerfilm Seitenkettenpolymere, gegebenenfalls Block- und/oder Propfpolymere, verwendet werden, an welche als Seitenketten Farbstoffe über einen STQ-Spacer (Formel (I)) und formanisotrope Gruppen ebenfalls über einen STQ-Spacer (Formel II) gebunden sind, wobei Formel (I) die Struktur

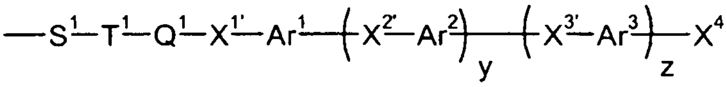 (I)

aufweist mit

-$Ar^1$- = 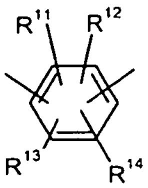 (III) oder 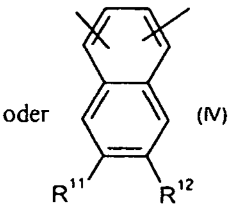 (IV) oder 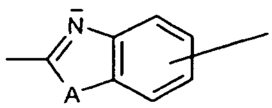 (V)

mit

-$Ar^2$- = 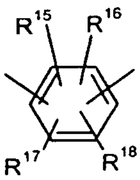 (VI) oder 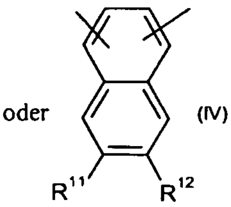 (IV) oder 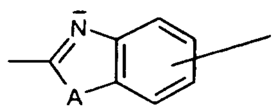 (V)

mit

-$Ar^3$- = 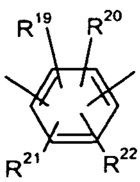 (VII) oder 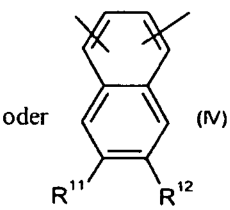 (IV) oder 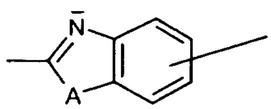 (V)

wobei

y für 1 oder 2 steht,
z für 0, 1 oder 2 steht und
$X^{2'}$ und $Ar^2$ bzw. $X^{3'}$ und $Ar^3$ unterschiedliche Bedeutungen haben können, wenn y bzw. z 2 bedeuten, A für O, S oder N-$C_1$- bis $C_4$-Alkyl steht,
$Q^1$ unabhängig voneinander für -O-, -S-, -(N-$R^5$)-, -C($R^6R^7$)p, -(C=O)-, -(O-CO)-, -($NR^5$-CO)-, -($SO_2$)-, -(O-$SO_2$)-, -($NR^5$-$SO_2$-)-, -(C=$NR^8$)-, -($CNR^8$-$NR^5$)-, -O-$C_6H_5$-COO- oder einen bivalenten Rest der Formel

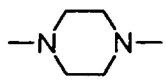

stehen,

$T^1$ unabhängig voneinander für $-(CH_2)_p-$ stehen, wobei die Kette durch -O-, $-NR^9-$, oder $-OSiR^{10}{}_2O-$ unterbrochen sein kann und durch Methyl substituiert sein kann,
$S^1$ unabhängig voneinander für eine direkte Bindung, -O-, -S- oder $-NR^9-$stehen,
p für eine ganze Zahl von 2 bis 12, vorzugsweise 2 bis 8, insbesondere 2 bis 4 steht,
$R^9$ für Wasserstoff, Methyl, Ethyl oder Propyl steht,
$R^{10}$ für Methyl oder Ethyl steht,
$R^{11}$ bis $R^{22}$ unabhängig voneinander für Wasserstoff oder einen nichtionischen Substituenten stehen,
$X^4$ bedeutet Wasserstoff, Halogen, Cyan, Nitro, $CF_3$, $CCl_3$, $-COO-C_1-$ bis $C_4$-Alkyl oder $X^{4'}-R^4$,
$X^{1'}$, $X^{2'}$, $X^{3'}$ und $X^{4'}$ für eine direkte Bindung, -O-, -S-, $-(N-R^5)-$, $-C(R^6R^7)-$, -(C=O)-, -(CO-O)-, $-(CO-NR^5)-$, $-(SO_2)-$, $-(SO_2-O)-$, $-(SO_2-NR^5)-$, oder $-(CNR^8-NR^5)-$ stehen und
$X^{2'}$ und $X^{3'}$ zusätzlich für $-(C=NR^8)-$, -(N=N)- stehen können und mindestens eine der Gruppen $X^{2'}$ oder $X^{3'}$ für -N=N- steht,
$R^4$, $R^5$, $R^6$, $R^7$ und $R^8$ unabhängig voneinander für Wasserstoff, $C_1$- bis $C_4$-Alkyl, oder $C_6$- bis $C_{10}$-Aryl stehen und $R^4$ und $R^5$ zusätzlich unabhängig voneinander für $C_1$- bis $C_{20}$-Alkyl-(C=O)-, $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-$(SO_2)$-, $C_3$- bis $C_{10}$-Cycloalkyl-$(SO_2)$-, $C_2$- bis $C_{20}$-Alkenyl-$(SO_2)$- oder $C_6$- bis $C_{10}$-Aryl-$(SO_2)$-stehen, wobei
unter nichtionischen Substituenten sind zu verstehen Halogen, Cyano, Nitro, $C_1$- bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl, $C_6$- bis $C_{10}$-Aryl, $C_1$- bis $C_{20}$-Akyl-(C=O)-, $C_6$- bis $C_{10}$-Aryl-(C=O)-, $C_1$- bis $C_{20}$-Alkyl-$(SO_2)$-, $C_1$- bis $C_{20}$-Alkyl-(C=O)-O-, $C_1$- bis $C_{20}$-Alkyl-(C=O)-NH-, $C_6$- bis $C_{10}$-Aryl-(C=O)-NH-, $C_1$- bis $C_{20}$-Alkyl-O-(C=O)-, $C_1$- bis $C_{20}$-Alkyl-NH-(C=O)-, $C_6$- bis $C_{10}$-Aryl- NH-(C=O)- oder ein Rest der Formel

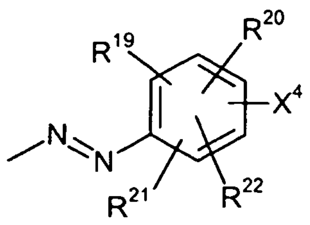

(VIII)

verstanden wird und

die Alkyl-, Cycloalkyl-, Alkenyl- und Arylreste ihrerseits durch bis zu 3 Reste aus der Reihe Halogen, Cyano, Nitro, $C_1$- bis $C_{20}$-Alkyl, $C_1$- bis $C_{20}$-Alkoxy, $C_3$- bis $C_{10}$-Cycloalkyl, $C_2$- bis $C_{20}$-Alkenyl oder $C_6$- bis $C_{10}$-Aryl substituiert sein und die Alkyl- und Alkenylreste können geradkettig oder verzweigt sein können und
unter Halogen ist Fluor, Chlor, Brom und Iod zu verstehen ist, insbesondere Fluor und Chlor
und Formel (II) durch

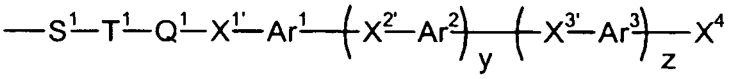

(II)

beschrieben wird, wobei die obigen Substituentendefinition (Formel I) auch für Formel (II) gültig sind, mit der Ausnahme, dass keine der Gruppen $X^{2'}$ oder $X^{3'}$ -N=N- annehmen darf und $R^{11}$ bis $R^{22}$ nicht für einen Rest der Formel (VIII) stehen darf.

2. Verfahren nach Anspruch 1, **dadurch gekennzeichnet, dass** als Speichermedium eine mehrschichtige Platte zum Einsatz kommt, die zumindest aus einer mechanisch ausreichend stabilen Unterlage und aus mindestens einem

die lichtaktive Schicht bildenden Polymerfilm und aus einer Abdeckschicht besteht.

**3.** Verfahren nach einem oder mehreren der vorangegangenen Ansprüche, bei dem ein Speichermedium eingesetzt und die lichtaktive Schicht überwiegend aus Oligomeren und/oder Polymeren besteht, die Farbstoffe enthalten, die sich bei Einwirkung von Licht reorientieren, bevorzugt amorphen Polymeren, besonders bevorzugt Seitengruppenpolymeren.

**4.** Verfahren gemäß Anspruch 1 **dadurch gekennzeichnet, dass** die Farbstoffseitengruppen I eingesetzt werden, wobei Substituenten und Formeln die in Anspruch 1 definierte Bedeutung aufweisen und zusätzlich

$Ar^1$ für einen Rest der Formel (III) steht,
$Ar^2$ für einen Rest der Formel (VI) steht,
$Ar^3$ für einen Rest der Formeln (VII) oder (V) steht,
y für 1 oder 2 steht,
z für 0, 1 oder 2 steht und
$X^{2'}$ und $Ar^2$ bzw. $X^{3'}$ und $Ar^3$ unterschiedliche Bedeutungen haben können, wenn y bzw. z 2 bedeuten,
A für O oder S steht,
$Q^1$ für -O-, -(N-$R^5$)-, -(C=O)-, -(O-CO)-, -($NR^5$-CO)-, -($SO_2$)-, -(O-$SO_2$)-, -($NR^5$-$SO_2$-)-, -O-$C_6H_5$-COO- oder einen bivalenten Rest der Formel

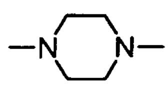

steht,

$T^1$ für -$(CH_2)_p$- steht, wobei die Kette durch -O-, -$NR^9$-, oder -$OSiR^{10}{}_2O$- unterbrochen sein kann und durch Methyl substituiert sein kann,
$S^1$ für eine direkte Bindung, -O-, -S- oder -$NR^9$- steht,
p für eine ganze Zahl von 2 bis 8, insbesondere 2 bis 4 steht,
$R^9$ für Wasserstoff, Methyl oder Ethyl steht,
$R^{10}$ für Methyl oder Ethyl steht,
$R^{11}$ bis $R^{22}$ unabhängig voneinander für Wasserstoff, Halogen, Cyano, Nitro, $C_1$- bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl-(C=O)-, $C_6$- bis $C_{10}$-Aryl-(C=O)-, $C_1$- bis $C_{20}$-Alkyl-($SO_2$)-, $C_1$- bis $C_{20}$-Alkyl-(C=O)-O-, $C_1$- bis $C_{20}$-Alkyl-(C=O)-NH-, $C_6$- bis $C_{10}$-Aryl-(C=O)-NH-, $C_1$- bis $C_{20}$-Alkyl-O-(C=O)-, $C_1$- bis $C_{20}$-Alkyl-NH-(C=O)-, $C_6$-bis $C_{10}$-Aryl- NH-(C=O)- oder einen Rest der Formel

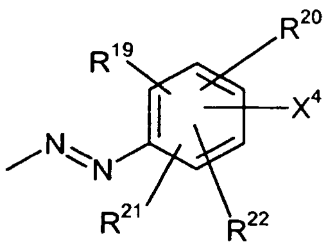

(VIII)

stehen,

$X^4$ bedeutet Wasserstoff, Halogen, Cyan, Nitro, $CF_3$, $CCl_3$, -COO-$C_1$- bis $C_4$-Alkyl oder $X^{4'}$-$R^4$ ,
$X^{1'}$, $X^{2'}$, $X^{3'}$ und $X^{4'}$ für eine direkte Bindung, -O-, -(N-$R^5$)-, -C($R^6R^7$)-, -(C=O)-, -(CO-O)-, -(CO-$NR^5$)-, -($SO_2$)- oder -($SO_2$-O)- stehen und
$X^{2'}$ und $X^{3'}$ zusätzlich für -(N=N)- stehen können und mindestens eine der Gruppen $X^{2'}$ oder $X^{3'}$ für -N=N- steht,
$R^4$, $R^5$, $R^6$, $R^7$ und $R^8$ unabhängig voneinander für Wasserstoff, $C_1$- bis $C_4$-Alkyl, oder $C_6$- bis $C_{10}$-Aryl stehen und
$R^4$ und $R^5$ zusätzlich unabhängig voneinander für $C_1$- bis $C_{20}$-Alkyl-(C=0)-, $C_3$- bis $C_{10}$-Cycloalkyl-(C=O)-, $C_2$-

bis $C_{20}$-Alkenyl-(C=0)-, $C_6$- bis $C_{10}$-Aryl-(C=O)-, $C_1$- bis $C_{20}$-Alkyl-($SO_2$)-, $C_3$- bis $C_{10}$-Cycloalkyl-($SO_2$)-, $C_2$- bis $C_{20}$-Alkenyl-($SO_2$)- oder $C_6$- bis $C_{10}$-Aryl-($SO_2$)-stehen

und forrnanistrope Seitengruppen II eingesetzt werden, wobei Substituenten und Formeln die in Anspruch 6 definierte Bedeutung aufweisen und zusätzlich

$Ar^1$ für einen Rest der Formel (III) steht,
$Ar^2$ für einen Rest der Formel (VI) steht,
$Ar^3$ für einen Rest der Formeln (VII) oder (V) steht,
y für 1 oder 2 steht,
z für 0, 1 oder 2 steht und
$X^{2'}$ und $Ar^2$ bzw. $X^{3'}$ und $Ar^3$ unterschiedliche Bedeutungen haben können, wenn y bzw. z 2 bedeuten,
A für O oder S steht,
$Q^1$ für -O-, -(N-$R^5$)-, -(C=O)-, -(O-CO)-, -($NR^5$-CO)-, -($SO_2$)-, -(O-$SO_2$)-, -( $NR^5$-$SO_2$-)-, -O-$C_6H_5$-COO- oder einen bivalenten Rest der Formel

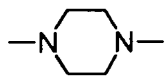

steht,

$T^1$ für -$(CH_2)_p$- steht, wobei die Kette durch -O-, -$NR^9$-, oder -$OSiR^{10}{}_2O$- unterbrochen sein kann und durch Methyl substituiert sein kann,
$S^1$ für eine direkte Bindung, -O-, -S- oder -$NR^9$- steht,
p für eine ganze Zahl von 2 bis 8, insbesondere 2 bis 4 steht,
$R^9$ für Wasserstoff, Methyl oder Ethyl steht,
$R^{10}$ für Methyl oder Ethyl steht,
$R^{11}$ bis $R^{22}$ unabhängig voneinander für Wasserstoff, Halogen, Cyano, Nitro, $C_1$- bis $C_{20}$-Alkyl, $C_1$- bis $C_{20}$-Alkoxy, Phenoxy, $C_3$- bis $C_{10}$-Cycloalkyl, $C_2$- bis $C_{20}$-Alkenyl, $C_6$- bis $C_{10}$-Aryl, $C_1$- bis $C_{20}$-Alkyl-(C=O)-, $C_6$- bis $C_{10}$-Aryl-(C=O)-, $C_1$- bis $C_{20}$-Alkyl-($SO_2$)-, $C_1$- bis $C_{20}$-Alkyl-(C=O)-O-, $C_1$- bis $C_{20}$-Alkyl-(C=O)-NH-, $C_6$- bis $C_{10}$-Aryl-(C=O)-NH-, $C_1$- bis $C_{20}$-Alkyl-O-(C=O)-, $C_1$- bis $C_{20}$-Alkyl-NH-(C=O)- oder $C_6$- bis $C_{10}$-Aryl-NH-(C=O)- stehen,
$X^4$ bedeutet Wasserstoff, Halogen, Cyan, Nitro, $CF_3$, $CCl_3$, -COO-$C_1$- bis $C_4$-Alkyl oder $X^{4'}$-$R^4$,
$X^{1'}$ $X^{2'}$, $X^{3'}$ und $X^{4'}$ für eine direkte Bindung, -O-, -(N-$R^5$)-, -C($R^6R^7$)-, -(C=O)-, -(CO-O)-, -(CO-NR')-, -($SO_2$)- oder -($SO_2$-O)- stehen,
$R^4$, $R^5$, $R^6$, $R^7$ und $R^8$ unabhängig voneinander für Wasserstoff, $C_1$- bis $C_4$-Alkyl, oder $C_6$- bis $C_{10}$-Aryl stehen und $R^4$ und $R^5$ zusätzlich unabhängig voneinander für $C_1$- bis $C_{20}$-Alkyl-(C=O)-, $C_3$- bis $C_{10}$-Cycloalkyl-(C=O)-, $C_2$- bis $C_{20}$-Alkenyl-(C=O)-, $C_6$- bis $C_{10}$-Aryl-(C=O)-, $C_1$- bis $C_{20}$-Alkyl-($SO_2$)-, $C_3$- bis $C_{10}$-Cycloalkyl-($SO_2$)-, $C_2$- bis $C_{20}$-Alkenyl-($SO_2$)- oder $C_6$- bis $C_{10}$-Aryl-($SO_2$)-stehen.

5. Verfahren nach einem und/oder mehreren der vorstehenden Ansprüche, wobei das zu beschreibende Speichermedium eine lichtaktive Schicht der Dicke von 0,05 und 100 µm aufweist.

6. Verfahren nach einem und/oder mehreren der vorstehenden Ansprüche, wobei das eingesetzte Speichermedium eine optische Dichte bei der Wellenlänge des Schreiblasers der lichtaktiven Schicht zwischen 0,3 und 20 aufweist.

7. Verfahren nach einem und/oder mehreren der vorstehenden Ansprüche, **dadurch gekennzeichnet, dass** die Veränderung der Oberflächentopographie des Speichermediums durch Laserlicht, bevorzugt mit Wellenlängen zwischen 380 nm und 820 nm erzeugt wird.

8. Verfahren nach einem und/oder mehreren der vorstehenden Ansprüche, **dadurch gekennzeichnet, dass** Speichermedien beschrieben werden können, deren Trägerschicht aus einem Polymer besteht, bevorzugt aus einem thermoplastischen Polymer, besonders bevorzugt aus Polycarbonat.

9. Verfahren nach einem und/oder mehreren der vorstehenden Ansprüche, **dadurch gekennzeichnet, dass** ein Signalhub im Speichermedium von mindestens Carrier/Noise = 20 dB eingeschrieben ist.

**10.** Verfahren nach einem und/oder mehreren der vorstehenden Ansprüche, wobei Speichermedien beschrieben werden können, die zwischen der farbstoffhaltigen Schicht und der weiteren Schicht eine zusätzliche, Licht reflektierende, Schicht enthalten, bevorzugt aus der Gruppe der Metalle Aluminium, Silber, Gold, besonders bevorzugt ausgewählt aus der Gruppe Aluminium und Silber, ganz besonders bevorzugt Aluminium.

**11.** Verfahren nach einem und/oder mehreren der vorstehenden Ansprüche, wobei das zu beschreibende Speichermedium keine Reflexionsschicht aufweist.

**12.** Verfahren gemäß einem oder mehrerer der vorangegangenen Ansprüche **dadurch gekennzeichnet, dass** der optische Einschreibprozess mit polarisiertem Licht verschiedener Intensität, erzeugt durch einen LASER mit Akustooptischen Modulator oder durch Modulation einer LASER-Diode, ausgeführt wird und der Polarisationszustand des reflektierten Lichts in einer Polarisationsoptik detektiert wird.

**13.** Speichermedien, erhältlich gemäß einem oder mehrerer der vorangegangen Ansprüche.

## Claims

**1.** Process for the optical writing of optically readable digital information in a two-dimensional extended storage medium, **characterised in that** the light for the writing has an intensity of between 150 $\mu$W and 100 mW and is focused on spots having a dimension (full half-value width) in a range between 10 nm and 8 $\mu$m, the energy density of a light pulse is between 10 mJ/cm$^2$ and 100 J/cm$^2$, wherein due to the optical writing process the surface topography of the storage medium is suitable for the optical reading process and is sufficiently modified so that a depression of at least 10 nm and a width, measured on the original surface, of less than 10 $\mu$n is achieved in one direction, wherein as light-active polymer film side-chain polymers, optionally block polymers and/or graft polymers are used, to which dyes are bound as side chains via a STQ-spacer (formula I) and dimensionally anisotropic groups are likewise bound via a STQ-spacer (formula II), wherein formula I has the structure

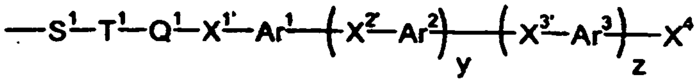

(I)

where

-Ar$^1$- = 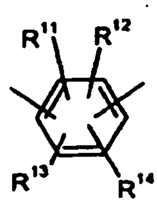 (III) or 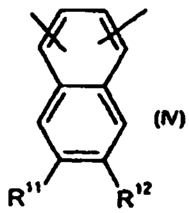 (IV) or 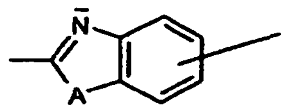 (V)

where

-Ar$^2$- = 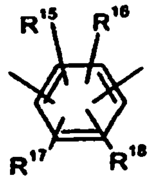 (VI) or 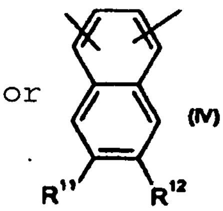 (IV) or 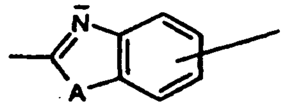 (V)

where

$-Ar^3-$ = 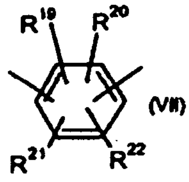 (VII) or 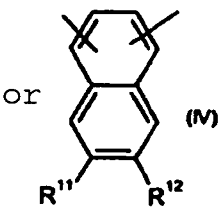 (IV) or 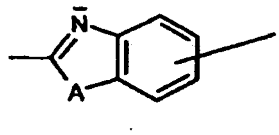 (V)

in which

y denotes 1 or 2,
z denotes 0, 1 or 2 and
$X^2$ and $Ar^2$ and/or $X^{3'}$ and $Ar^3$ may have different meanings, if y and/or z denote 2,
A denotes O, S, or N-$C_1$- to $C_4$-alkyl,
$Q^1$ denotes -O-, -S-, -(N-$R^5$)-, -C($R^6R^7$)$_p$, (C=O) -, - (O-CO) -, - -(N$R^5$- CO) -, - ($SO_2$) -, - (O-$SO_2$) -, - (N$R^5$-$SO_2$-) -, - -(C=N$R^8$)-, -(CN$R^8$-N$R^5$)-, -O-$C_6H_5$-COO- or a bivalent radical of the formula

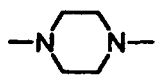

$T^1$ denotes -$(CH_2)_p$-, wherein the chain may be interrupted by -O-, -N$R^9$-, or -OSi$R^{10}{}_2$O- and may be substituted by methyl,
$S^1$ denotes a direct bond, -O-, -S- or -N$R^9$-,
p denotes an integer from 2 to 12, preferably 2 to 8, in particular 2 to 4,
$R^9$ denotes hydrogen, methyl, ethyl, or propyl,
$R^{10}$ denotes methyl or ethyl,
$R^{11}$ to $R^{22}$ independently of one another denote hydrogen or a non-ionic substituent,
$X^4$ denotes hydrogen, halogen, cyano, nitro, $CF_3$, $CCl_3$, -COO-$C_1$- to $C_4$- alkyl or $X^{4'}$ -$R^4$,
$X^{1'}$, $X^{2'}$ $X^{3'}$ and $X^{4'}$ denote a direct bond, -O-, -S-, -(N-$R^5$)-, -C($R^6R^7$)-, - (C=O) -, - (CO-O) -, - (CO-N$R^5$)-, -($SO_2$)-, -($SO_2$-O)-, ($SO_2$-N$R^5$)-, or - (CN$R^8$-N$R^5$)-and
$X^{2'}$ and $X^{3'}$ may in addition denote - (C=N$R^8$) -, - (N=N)-and at least one of the groups $X^{2'}$ or $X^{3'}$ denotes -N=N-,
$R^4$, $R^5$, $R^6$, $R^7$ and $R^8$ independently of one another denote hydrogen, $C_1$- to $C_4$-alkyl, or $C_6$- to $C_{10}$-aryl and
$R^4$ and $R^5$ in addition independently of one another denote $C_1$- to $C_{20}$-alkyl- (C=O) -, $C_3$- to $C_{10}$-cycloalkyl-(C=O) -, $C_2$- to $C_{20}$-alkenyl- (C=O) -, $C_6$-to $C_{10}$-aryl-(C=O), $C_1$- to $C_{20}$-alkyl- ($SO_2$) -, $C_3$- to $C_{10}$-cycloalkyl-($SO_2$), $C_2$- to $C_{20}$-alkenyl-($SO_2$)- or $C_6$- to $C_{10}$-aryl-($SO_2$), wherein

by the term non-ionic substituents are understood halogen, cyano, nitro, $C_1$- to $C_{20}$-alkyl, $C_1$- to $C_{20}$-alkoxy, phenoxy, $C_3$- to $C_{10}$-cycloalkyl, $C_2$- to $C_{20}$-alkenyl, $C_6$- to $C_{10}$-aryl, $C_1$- to $C_{20}$-alkyl- (C=O) -, $C_6$- to $C_{10}$-aryl-(C=O)-, $C_1$- to $C_{20}$-alkyl-($SO_2$)-, $C_1$- $C_{20}$-alkyl-(C=O)-O-, $C_1$- to $C_{20}$-alkyl-(C=O)-NH-, $C_6$- to $C_{10}$-aryl-(C=O) -NH-, $C_1$- to $C_{20}$-alkyl-O-(C=O)-, $C_1$- to $C_{20}$-alkyl-NH- (C=O) -, $C_6$ to $C_{10}$-aryl-NH-(C=O)- or a radical of the formula

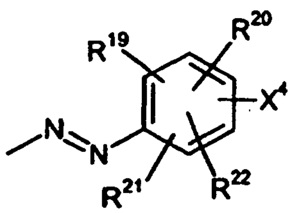 (VIII)

and the alkyl, cycloalkyl, alkenyl and aryl radicals in turn may be substituted by up to 3 radicals from the group comprising halogen, cyano, nitro, $C_1$- to $C_{20}$-alkyl, $C_1$- to $C_{20}$-alkoxy, $C_3$- to $C_{10}$-cycloalkyl, $C_2$- to $C_{20}$-alkenyl or $C_6$-

to $C_{10}$-aryl, and the alkyl and alkenyl radicals may be straight-chain or branched, and
by the term halogen is understood fluorine, chlorine, bromine and iodine, in particular fluorine and chlorine,
and formula II is described by

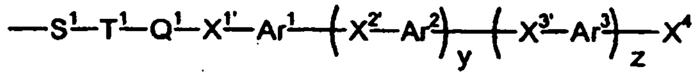

(II)

wherein the above substituent definitions (formula I) are also valid for formula II, with the proviso that neither the group $X^{2'}$ nor the group $X^{3'}$ may denote -N=N- and $R^{11}$ to $R^{22}$ may not denote a radical of the formula (VIII).

**2.** Process according to claim 1, **characterised in that** as storage medium a multi-layer disk is used that comprises at least one mechanically sufficiently stable substrate, at least one polymer film forming the light-active layer, and a covering layer.

**3.** Process according to one or more of the preceding claims, in which a storage medium is used and the light-active layer predominantly comprises oligomers and/or polymers containing dyes that reorientate under the action of light, preferably amorphous polymers, particularly preferably side group polymers.

**4.** Process according to claim 1, **characterised in that** the dye side groups I are used, wherein substituents and formulae have the meanings defined in claim 1, and in addition

$Ar^1$ denotes a radical of the formula (III),
$Ar^2$ denotes a radical of the formula (VI),
$Ar^3$ denotes a radical of the formulae (VII) or (V),
y denotes 1 or 2,
z denotes 0, 1 or 2 and
$X^{2'}$ and $Ar^2$ and $X^{3'}$ and/or $Ar^3$ may have different meanings if y and/or z denote 2,
A denotes O or S,
$Q^1$ denotes -O-, - (N-$R^5$)-, - (C=O) -, - (O-CO) -, - ($NR^5$-CO)-, ($SO_2$) -, - (O-$SO_2$) -, - ($NR^5$-$SO_2$)-, -O-$C_6H_5$-COO- or a bivalent radical of the formula

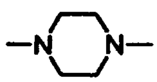

$T^1$ denotes -$(CH_2)_p$- wherein the chain may be interrupted by -O-, -$NR^9$-, or -$OSiR^{10}{}_2O$- and my be substituted by methyl,
$S^1$ denotes a direct bond, -O-, -S-, or -$NR^9$-
p denotes an integer from 2 to 8, in particular 2 to 4,
$R^9$ denotes hydrogen, methyl or ethyl,
$R^{10}$ denotes methyl or ethyl,
$R^{11}$ to $R^{22}$ independently of one another denote hydrogen, halogen, cyano, nitro, $C_1$- to $C_{20}$-alkyl, $C_1$- to $C_{20}$-alkoxy, phenoxy, $C_3$- to $C_{10}$-cycloalkyl, $C_2$- to $C_{20}$-alkenyl, $C_6$- to $C_{10}$-aryl, $C_1$- to $C_{20}$-alkyl-(C=O)-, $C_6$- to $C_{10}$-aryl-(C=O)-, $C_1$- to $C_{20}$-alkyl-($SO_2$) -, $C_1$- to $C_{20}$-alkyl-(C=O)-O-, $C_1$- to $C_{20}$-alkyl-(C=O)-NH-, $C_6$- to $C_{10}$-aryl-(C=O) -NH-, $C_1$- to $C_{20}$-alkyl-O- (C=O) -, $C_1$- to $C_{20}$-alkyl-NH-(C=O)-, $C_6$- to $C_{10}$-aryl-NH-(C=O)- or a radical of the formula

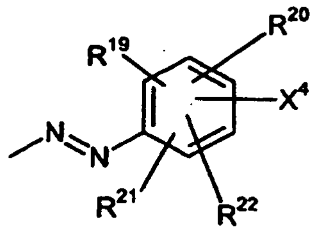

(VIII)

$X^4$ denotes hydrogen, halogen, cyano, nitro, $CF_3$, $CCl_3$, -COO-$C_1$ to $C_4$-alkyl or $X^{4'}$-$R^4$,
$X^{1'}$ , $X^{2'}$ $X^{3'}$ and $X^{4'}$ denote a direct bond, -O- , - (N-$R^5$) -, -C ($R^6R^7$) -, - (C=O) -, - (CO-O) -, - (CO-N$R^5$) -, -($SO_2$)-or ($SO_2$-O) - and
$X^{2'}$ and $X^{3'}$ may in addition denote -(N=N)- and at least one of the groups $X^{2'}$ or $X^{3'}$ denotes -N=N-,
$R^4$, $R^5$, $R^6$, $R^7$ and $R^8$ independently of one another denote hydrogen, $C_1$- to $C_4$-alkyl, or $C_6$- to $C_{10}$-aryl and
$R^4$ and $R^5$ in addition independently of one another denote $C_1$- to $C_{20}$-alkyl- (C=O) -, $C_3$- to $C_{10}$-cycloalkyl-(C=O) -, $C_2$- to $C_{20}$-alkenyl- (C=O) -, $C_6$-to $C_{10}$-aryl- (C=O) -, $C_1$- to $C_{20}$-alkyl- ($SO_2$) -, $C_3$- to $C_{10}$-cycloalkyl-($SO_2$) -, $C_2$- to $C_{20}$-alkenyl- ($SO_2$) -, or $C_6$- to $C_{10}$-aryl- ($SO_2$) -.

and dimensionally anisotropic side groups II are used wherein substituents and formulae have the meanings defined in claim 6, and in addition

$Ar^1$ denotes a radical of the formula (III),
$Ar^2$ denotes a radical of the formula (VI),
$Ar^3$ denotes a radical of the formulae (VII) or (V),
y denotes 1 or 2,
z denotes 0, 1 or 2 and
$X^{2'}$ and $Ar^2$ and/or $X^{3'}$ and $Ar^3$ may have different meanings if y and/or z denote 2,
A denotes O or S,
$Q^1$ denotes -O-, - (N-$R^5$) -, - (C=O) -, - (O-CO) -, - (N$R^5$-CO)-, - ($SO_2$) -, - (O-$SO_2$) -, - (N$R^5$-$SO_2$-)-, -O-$C_6H_5$-COO- or a bivalent radical of the formula

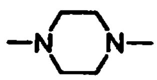

$T^1$ denotes -$(CH_2)_p$-, wherein the chain may be interrupted by -O-, -N$R^9$-, or -OSi$R^{10}{}_2$O- and may be substituted by methyl,
$S^1$ denotes a direct bond, -O-, -S-, or -N$R^9$-
p denotes an integer from 2 to 8, in particular 2 to 4,
$R^9$ denotes hydrogen, methyl or ethyl,
$R^{10}$ denotes methyl or ethyl,
$R^{11}$ to $R^{22}$ independently of one another denote hydrogen, halogen, cyano, nitro, $C_1$- to $C_{20}$-alkyl, $C_1$- to $C_{20}$-alkoxy, phenoxy, $C_3$- to $C_{10}$-cycloalkyl, $C_2$- to $C_{20}$-alkenyl, $C_6$- to $C_{10}$-aryl, $C_1$- to $C_{20}$-alkyl-(C=O)-, $C_6$- to $C_{10}$-aryl-(C=O)-, $C_1$- to $C_{20}$-alkyl-($SO_2$)-, $C_1$- to $C_{20}$-alkyl-(C=O)-O-, $C_1$- to $C_{20}$-alkyl-(C=O)-NH-, $C_6$- to $C_{10}$-aryl-(C=O)-NH-, $C_1$- to $C_{20}$-alkyl-O-(C=O), $C_1$- to $C_{20}$-alkyl-NH-(C=O)-, or $C_6$-to $C_{10}$-aryl-NH- (C=O) -,
$X^4$ denotes hydrogen, halogen, cyano, nitro, $CF_3$, $CCl_3$, -COO-$C_1$ to $C_4$-alkyl or $X^{4'}$-$R^4$,
$X^{1'}$, $X^{2'}$ $X^{3'}$ and $X^{4'}$ denote a direct bond, -O-, -(N-$R^5$)-, -C ($R^6R^7$) -, - (C=O) -, - (CO-O) -, - (CO-N$R^5$) ($SO_2$)-or ($SO_2$-O)- and
$R^4$, $R^5$ , $R^6$, $R^7$ and $R^8$ independently of one another denote hydrogen, $C_1$- to $C_4$-alkyl, or $C_6$- to $C_{10}$-aryl and

$R^4$ and $R^5$ in addition independently of one another denote $C_1$- to $C_{20}$-alkyl-(C=O)-, $C_3$- to $C_{10}$-cycloalkyl-(C=O) -, $C_2$- to $C_{20}$-alkenyl-(C=O) -, $C_6$- to $C_{10}$-aryl-(C=O) -, $C_1$- to $C_{20}$-alkyl- ($SO_2$) -, $C_3$- to $C_{10}$-cycloalkyl-($SO_2$) -, $C_2$- to $C_{20}$-alkenyl-($SO_2$) -, or $C_6$- to $C_{10}$-aryl-($SO_2$)-.

**5.** Process according to one and/or more of the preceding claims, wherein the storage medium on which information is to be written has a light-active layer of a thickness between 0.05 and 100 $\mu$m.

**6.** Process according to one and/or more of the preceding claims; wherein the storage medium that is used has an optical density at the wavelength of the writing laser of the light-active layer of between 0.3 and 20.

**7.** Process according to one and/or more of the preceding claims, **characterised in that** the change in the surface topography of the storage medium is produced by laser light, preferably having wavelengths between 380 nm and 820 nm.

**8.** Process according to one and/or more of the preceding claims, **characterised in that** information can be written on storage media whose carrier layer comprises a polymer, preferably a thermoplastic polymer, particularly preferably polycarbonate.

**9.** Process according to one and/or more of the preceding claims, **characterised in that** a signal deviation is written in the storage medium having a carrier/noise ratio of at least 20 dB.

**10.** Process according to one and/or more of the preceding claims, wherein information can be written on storage media that contain, between the dye-containing layer and the further layer, an additional, light-reflecting layer, preferably from the group of metals comprising aluminium, silver, gold, particularly preferably from the group comprising aluminium and silver, and most particularly preferably aluminium.

**11.** Process according to one and/or more of the preceding claims, wherein the storage medium on which information is to be written has no reflecting layer.

**12.** Process according to one or more of the preceding claims, **characterised in that** the optical writing process is performed with polarised light of variable intensity, produced by a LASER with an acousto-optical modulator or by modulation of a LASER diode, and the polarisation state of the reflected light is detected in a polarisation optics system.

**13.** Storage media that can be obtained according to one or more of the preceding claims.

## Revendications

**1.** Procédé pour l'écriture optique de données numériques pouvant être lues par des moyens optiques dans un milieu d'enregistrement à surface plane, **caractérisé en ce que** la lumière servant à l'écriture a une intensité allant de 150 μW à 100 mW, elle est focalisée sur des spots d'une dimension (demi-valeur de la largeur totale) se situant dans l'intervalle de 10 nm à 8 μm, la densité d'énergie d'une pulsion lumineuse se situe entre 10 mJ/cm$^2$ et 100 J/cm$^2$, l'opération d'écriture optique rendant la topographie superficielle du milieu d'enregistrement apte à l'opération de lecture optique et la modifiant dans une mesure suffisante pour atteindre une pénétration d'au moins 10 nm et une largeur, mesurée sur la surface initiale, de moins de 10 μm dans une direction, et **en ce que** l'on utilise pour la pellicule polymère active à la lumière des polymères à chaînes latérales, le cas échéant des polymères séquencés et/ou greffés, sur lesquels on a fixé en chaînes latérales des colorants par l'intermédiaire d'un espaceur STQ (de formule (I)) et des groupes formanisotropes, également par l'intermédiaire d'un espaceur STQ (de formule (II)), la formule (I) possédant la structure

$$-S^1-T^1-Q^1-X^{1'}-Ar^1-\left(X^{2'}-Ar^2\right)_y-\left(X^{3'}-Ar^3\right)_z-X^4 \qquad (I)$$

dans laquelle

-$Ar^1$- = 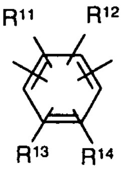 (III) ou 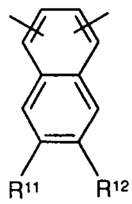 (IV) ou 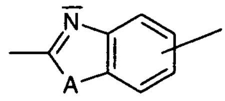 (V)

-$Ar^2$- = 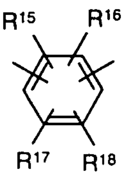 (VI) ou 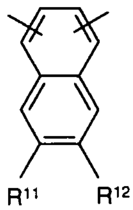 (IV) ou 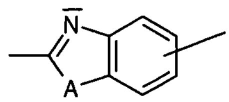 (V)

-$Ar^3$- = 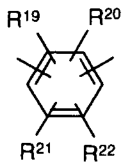 (VII) ou 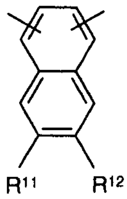 (IV) ou 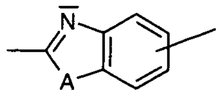 (V)

y est égal à 1 ou 2

z est égal à 0, 1 ou 2 et

$X^{2'}$ et $Ar^2$ d'une part, $X^{3'}$ et $Ar^3$ d'autre part, pouvant avoir des significations différentes lorsque y et z respectivement sont égaux à 2, A représente O, S ou un groupe N-alkyle en $C_1$-$C_4$,

$Q^1$ pouvant avoir des significations identiques ou différentes et indépendantes les unes des autres, représente -O-, -S-, -(N-$R^5$)-, -C($R^6R^7$)p, -(C=O)-, -(O-CO)-, -($NR^5$-CO)-, -($SO_2$)-, -(O-$SO_2$)-, -($NR^5$-$SO_2$-)-, -(C=$NR^8$)-, -($CNR^8$-$NR^5$)-, -O-$C_6H_5$-COO- ou un radical bivalent de formule

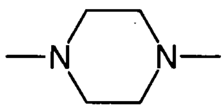

$T^1$ pouvant avoir des significations identiques ou différentes et indépendantes les unes des autres, représente -($CH_2$)p-, la chaîne pouvant être interrompue par -O-, -$NR^9$- ou -$OSiR^{10}{}_2O$-et pouvant être substituée par des groupes méthyle,

$S^1$ pouvant avoir des significations identiques ou différentes et indépendantes les unes les autres, représente une liaison directe, -O-, -S- ou -$NR^9$-,

p est un nombre entier allant de 2 à 12, de préférence de 2 à 8 et dans les meilleures conditions de 2 à 4,

$R^9$ représente l'hydrogène, un groupe méthyle, éthyle ou propyle,

$R^{10}$ représente un groupe méthyle ou éthyle,

$R^{11}$ à $R^{22}$ représentent chacun, indépendamment les uns des autres, l'hydrogène ou un substituant non ionique,

$X^4$ représente l'hydrogène, un halogène, un groupe cyano, nitro, $CF_3$, $CCl_3$, -COO-alkyle en $C_1$-$C_4$ ou $X^{4'}$ -$R^4$,

$X^{1'}$, $X^{2'}$, $X^{3'}$ et $X^{4'}$ représentent chacun une liaison directe, -O-, -S-, -(N-$R^5$)-, -C($R^6R^7$)-, -(C=O)-, -(CO-O)-, -(CO-$NR^5$)-, -($SO_2$)-, -($SO_2$-0)-, -($SO_2$-$NR^5$)-, ou -($CNR^8$-$NR^5$)- et

$X^{2'}$ et $X^{3'}$ peuvent en outre représenter -(C=$NR^8$)-, -(N=N)-, l'un au moins des groupes $X^{2'}$ ou $X^{3'}$ consistant en -N=N-,

$R^4$, $R^5$, $R^6$, $R^7$ et $R^8$ représentent chacun, indépendamment les uns des autres, l'hydrogène, un groupe alkyle

en $C_1$-$C_4$ ou aryle en $C_6$-$C_{10}$ et

$R^4$ et $R^5$ peuvent en outre représenter, indépendamment l'un de l'autre, un groupe (alkyle en $C_1$-$C_{20}$)-(C=O)-, (cycloalkyle en $C_3$-$C_{10}$)-(C=O)-, (alcényle en $C_2$-$C_{20}$)-(C=0)-, (aryle en $C_6$-$C_{10}$)-(C=O)-, (alkyle en $C_1$-$C_{20}$)-($SO_2$)-, (cycloalkyle en $C_3$-$C_{10}$)-($SO_2$)-, (alcényle en $C_2$-$C_{20}$)-($SO_2$)- ou (aryle en $C_6$-$C_{10}$)-($SO_2$)-, étant précisé que l'on entend par substituants non ioniques les halogènes, les groupes cyano, nitro, alkyle en $C_1$-$C_{20}$, alcoxy en $C_1$-$C_{20}$, phénoxy, cycloalkyle en $C_3$-$C_{10}$, alcényle en $C_2$-$C_{20}$, aryle en $C_6$-$C_{10}$, (alkyle en $C_1$-$C_{20}$)-(C=O)-, (aryle en $C_6$-$C_{10}$)-(C=O)-, (alkyle en $C_1$-$C_{20}$)-($SO_2$)-, (alkyle en $C_1$-$C_{20}$)-(C=O)-O-, (alkyle en $C_1$-$C_{20}$)-(C=O)-NH-, (aryle en $C_6$-$C_{10}$)-(C=O)-NH-, (alkyle en $C_1$-$C_{20}$)-O-(C=O)-, (alkyle en $C_1$-$C_{20}$)-NH-(C=O)-, (aryle en $C_6$-$C_{10}$)-NH-(C=O)- ou un groupe de formule

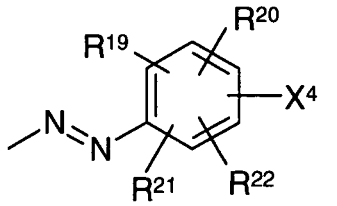

(VIII)

les groupes alkyle, cycloalkyle, alcényle et aryle pouvant eux-mêmes porter jusqu'à 3 substituants choisis parmi les halogènes, les groupes cyano, nitro, alkyle en $C_1$-$C_{20}$, alcoxy en $C_1$-$C_{20}$, cycloalkyle en $C_3$-$C_{10}$, alcényle en $C_2$-$C_{20}$ et aryle en $C_6$-$C_{10}$, les groupes alkyle et alcényle pouvant être à chaîne droite ou ramifiée, et

les halogènes en question consistant en fluor, chlore, brome ou iode, plus spécialement fluor ou chlore,

et la formule (II) possède la structure

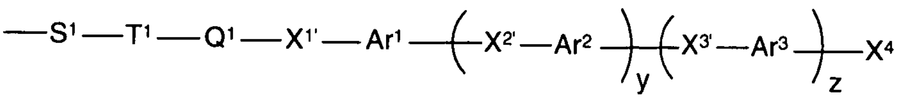

(II)

pour laquelle les définitions des substituants données ci-dessus en référence à la formule (I) restent valables, sauf qu'aucun des groupes $X^{2'}$ ou $X^{3'}$ ne peut consister en un groupe -N=N- et que $R^{11}$ à $R^{22}$ ne peuvent représenter un groupe de formule (VIII).

**2.** Procédé selon la revendication 1, **caractérisé en ce que** l'on utilise en tant que milieu d'enregistrement une plaque à couche multiple consistant au moins en un support à stabilité mécanique suffisante et au moins une pellicule de polymère formant la couche active à la lumière et une couche de couverture.

**3.** Procédé selon une ou plusieurs des revendications qui précèdent, dans lequel on utilise un milieu d'enregistrement et la couche active à la lumière consiste principalement en oligomères et/ou polymères qui contiennent des colorants qui subissent une réorientation sous l'action de la lumière, de préférence des polymères amorphes et plus spécialement des polymères à groupes latéraux.

**4.** Procédé selon la revendication 1, **caractérisé en ce que** l'on utilise les groupes latéraux colorants I, pour lesquels les substituants et les formules sont tels que définis dans la revendication 1, et en outre

$Ar^1$ représente un groupe de formule (III)
$Ar^2$ représente un groupe de formule (VI)
$Ar^3$ représente un groupe de formule (VII) ou (V)
y est égal à 1 ou 2
z est égal à 0, 1 ou 2 et
$X^{2'}$ et $Ar^2$ d'une part, $X^{3'}$ et $Ar^3$ d'autre part peuvent avoir des significations différentes lorsque y et z sont respectivement égaux à 2,
A représente O ou S,
$Q^1$ représente -O-, -(N-$R^5$)-, -(C=O)-, -(O-CO)-, -($NR^5$-CO)-, -($SO_2$)-, -(O-$SO_2$)-, -($NR^5$-$SO_2$-)-, -O-$C_6H_5$-COO- ou un groupe bivalent de formule

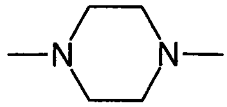

$T^1$ représente $-(CH_2)_p-$, la chaîne pouvant être interrompue par -O-, $-NR^9-$ ou $-OSiR^{10}{}_2O-$ et pouvant être substituée par des groupes méthyle,
$S^1$ représente une liaison directe, -O-, -S- ou $-NR^9-$,
p est un nombre entier allant de 2 à 8 et plus spécialement de 2 à 4,
$R^9$ représente l'hydrogène, un groupe méthyle ou éthyle,
$R^{10}$ représente un groupe méthyle ou éthyle,
$R^{11}$ à $R^{22}$ représentent chacun, indépendamment les uns des autres, l'hydrogène, un halogène, un groupe cyano, nitro, alkyle en $C_1$-$C_{20}$, alcoxy en $C_1$-$C_{20}$, phénoxy, cycloalkyle en $C_3$-$C_{10}$, alcényle en $C_2$-$C_{20}$, aryle en $C_6$-$C_{10}$, (alkyle en $C_1$-$C_{20}$)-(C=O)-, (aryle en $C_6$-$C_{10}$)-(C=O)-, (alkyle en $C_1$-$C_{20}$)-($SO_2$)-, (alkyle en $C_1$-$C_{20}$)-(C=O)-O-, (alkyle en $C_1$-$C_{20}$)-(C=O)-NH-, (aryle en $C_6$-$C_{10}$)-(C=O)-NH-, (alkyle en $C_1$-$C_{10}$)-O-(C=O)-, (alkyle en $C_1$-$C_{20}$)-NH-(C=O)-, (aryle en $C_6$-$C_{10}$)-NH-(C=O)- ou un groupe de formule

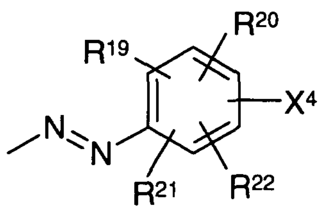

(VIII)

$X^4$ représente l'hydrogène, un halogène, un groupe cyano, nitro, $CF_3$, $CCl_3$, -COO-alkyle en $C_1$-$C_4$ ou $X^{4'}$-$R^4$,
$X^{1'}$, $X^{2'}$, $X^{3'}$ et $X^{4'}$ représentent une liaison directe, -O-, $-(N-R^5)-$, $-C(R^6R^7)-$, -(C=O)-, -(CO-O)-, $-(CO-NR^5)-$, $-(SO_2)-$, ou $-(SO_2-O)-$,
$X^{2'}$ et $X^{3'}$ pouvant en outre représenter -(N=N)-, l'un au moins des groupes $X^{2'}$ ou $X^{3'}$ consistant en un groupe -N=N-,
$R^4$, $R^5$, $R^6$, $R^7$ et $R^8$ représentent chacun, indépendamment les uns des autres, l'hydrogène, un groupe alkyle en $C_1$-$C_4$ ou aryle en $C_6$-$C_{10}$ et
$R^4$ et $R^5$ peuvent en outre représenter chacun, indépendamment l'un de l'autre, un groupe (alkyle en $C_1$-$C_{20}$)-(C=O)-, (cycloalkyle en $C_3$-$C_{10}$)-(C=O)-, (alcényle en $C_2$-$C_{20}$)-(C=O)-, (aryle en $C_6$-$C_{10}$)-(C=O)-, (alkyle en $C_1$-$C_{20}$)-($SO_2$)-, (cycloalkyle en $C_3$-$C_{10}$)-($SO_2$)-, (alcényle en $C_2$-$C_{20}$)-($SO_2$)- ou (aryle en $C_6$-$C_{10}$)-($SO_2$)-,

et on utilise des groupes latéraux formanisotropes II, les substituants et les formules étant tels que définis dans la revendication 6, et en outre

$Ar^1$ représente un groupe de formule (III)
$Ar^2$ représente un groupe de formule (VI)
$Ar^3$ représente un groupe de formule (VII) ou (V)
y est égal à 1 ou 2
z est égal à 0, 1 ou 2 et
$X^{2'}$ et $Ar^2$ d'une part, $X^{3'}$ et $Ar^3$ d'autre part peuvent avoir des significations différentes lorsque y et z sont respectivement égaux à 2,
A représente O ou S,
$Q^1$ représente -O-, $-(N-R^5)-$, -(C=O)-, -(O-CO)-, $-(NR^5-CO)-$, $-(SO_2)-$, $-(O-SO_2)-$, $-(NR^5-SO_2-)-$, $-O-C_6H_5-COO-$ ou un groupe bivalent de formule

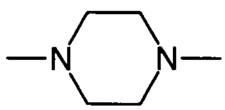

$T^1$ représente un groupe $-(CH_2)_p-$, la chaîne pouvant être interrompue par -O-, $-NR^9-$ ou $-OSiR^{10}{}_2O-$ et pouvant être substituée par des groupes méthyle,
$S^1$ représente une liaison directe, -O-, -S- ou $-NR^9-$,
p est un nombre entier allant de 2 à 8 et plus spécialement de 2 à 4,
$R^9$ représente l'hydrogène, un groupe méthyle ou éthyle,
$R^{10}$ représente un groupe méthyle ou éthyle,
$R^{11}$ à $R^{22}$ représentent chacun, indépendamment les uns des autres, l'hydrogène, un halogène, un groupe cyano, nitro, alkyle en $C_1$-$C_{20}$, alcoxy en $C_1$-$C_{20}$, phénoxy, cycloalkyle en $C_3$-$C_{10}$, alcényle en $C_2$-$C_{20}$, aryle en $C_6$-$C_{10}$, (alkyle en $C_1$-$C_{20}$)-(C=O)-, (aryle en $C_6$-$C_{10}$)-(C=O)-, (alkyle en $C_1$-$C_{20}$)-($SO_2$)-, (alkyle en $C_1$-$C_{20}$)-(C=O)-O-, (alkyle en $C_1$-$C_{20}$)-(C=O)-NH-, (alkyle en $C_1$-$C_{10}$)-O-(C=O)-, (alkyle en $C_1$-$C_{20}$)-NH-(C=O)- ou (aryle en $C_6$-$C_{15}$)-NH-(C=O)-,
$X^4$ représente l'hydrogène, un halogène, un groupe cyano, nitro, $CF_3$, $CCl_3$, -COO-alkyle en $C_1$-$C_4$ ou $X^{4'}$-$R^4$,
$X^{1'}$, $X^{2'}$, $X^{3'}$ et $X^{4'}$ représentent chacun une liaison directe, -O-, $-(N-R^5)-$, $-C(R^6R^7)-$, -(C=O)-, -(CO-O)-, $-(CO-NR^5)-$, $-(SO_2)-$, ou $-(SO_2\text{-}0)-$,
$R^4$, $R^5$, $R^6$, $R^7$ et $R^8$ représentent chacun, indépendamment les uns des autres, l'hydrogène, un groupe alkyle en $C_1$-$C_4$ ou aryle en $C_6$-$C_{10}$ et
$R^4$ et $R^5$ peuvent en outre représenter, indépendamment l'un de l'autre, un groupe (alkyle en $C_1$-$C_{20}$)-(C=O)-, (cycloalkyle en $C_3$-$C_{10}$)-(C=O)-, (alcényle en $C_2$-$C_{20}$)-(C=O)-, (aryle en $C_6$-$C_{20}$)-(C=O)-, (alkyle en $C_1$-$C_{20}$)-($SO_2$)-, (cycloalkyle en $C_3$-$C_{10}$)-($SO_2$)-, (alcényle en $C_2$-$C_{20}$)-($SO_2$)- ou (aryle en $C_6$-$C_{10}$)-($SO_2$)-.

**5.** Procédé selon une et/ou plusieurs des revendications qui précèdent, le milieu d'enregistrement inscriptible portant une couche active à la lumière dont l'épaisseur va de 0,05 à 100 μm.

**6.** Procédé selon une et/ou plusieurs des revendications qui précèdent, le milieu d'enregistrement inscriptible portant une couche active à la lumière dont la densité optique va de 0,3 à 20 à la longueur d'onde du laser d'écriture.

**7.** Procédé selon une et/ou plusieurs des revendications qui précèdent, **caractérisé en ce que** la modification de la topographie superficielle du milieu d'enregistrement est produite par la lumière laser, de préférence à une longueur d'onde allant de 380 nm à 820 nm.

**8.** Procédé selon une ou plusieurs des revendications qui précèdent, **caractérisé en ce que** sont inscriptibles des milieux d'enregistrement dont la couche de support consiste en un polymère, de préférence un polymère thermoplastique et plus spécialement un polycarbonate.

**9.** Procédé selon une et/ou plusieurs des revendications qui précèdent, **caractérisé en ce que** l'on écrit, dans le milieu d'enregistrement, une hauteur de signal d'au moins porteuse/bruit = 20 dB.

**10.** Procédé selon une et/ou plusieurs des revendications qui précèdent, dans lequel sont inscriptibles des milieux d'enregistrement qui, entre la couche contenant un colorant et l'autre couche, contiennent une autre couche réfléchissant la lumière, et consistant de préférence en les métaux aluminium, argent, or, plus spécialement aluminium et argent et dans les meilleures conditions aluminium.

**11.** Procédé selon une et/ou plusieurs des revendications qui précèdent, dans lequel le milieu d'enregistrement inscriptible ne contient pas de couche réfléchissante.

**12.** Procédé selon une ou plusieurs des revendications qui précèdent, **caractérisé en ce que** l'opération d'écriture optique est réalisée à l'aide d'une lumière polarisée d'intensité variable, produite par un laser avec modulateur acusto-optique ou par modulation d'une diode laser et **en ce que** l'état de polarisation de la lumière réfléchie est détecté dans une optique de polarisation.

**13.** Milieux d'enregistrement obtenus selon une ou plusieurs des revendications qui précèdent.